(19) Europäisches Patentamt
European Patent Office
Office européen des brevets

(11) EP 3 599 901 B1

(12) # EUROPÄISCHE PATENTSCHRIFT

(45) Veröffentlichungstag und Bekanntmachung des Hinweises auf die Patenterteilung:
**14.01.2026 Patentblatt 2026/03**

(21) Anmeldenummer: **18722896.0**

(22) Anmeldetag: **27.03.2018**

(51) Internationale Patentklassifikation (IPC):
***A23N 5/00*** *(2006.01)* ***A23N 7/01*** *(2006.01)*
***A23J 1/00*** *(2006.01)* ***A23J 1/12*** *(2006.01)*

(52) Gemeinsame Patentklassifikation (CPC):
**A23N 7/01; A21D 2/188; A21D 2/36; A23J 1/006; A23J 1/12; A23J 1/14; A23N 5/00; C08H 8/00**

(86) Internationale Anmeldenummer:
**PCT/EP2018/057838**

(87) Internationale Veröffentlichungsnummer:
**WO 2018/178116 (04.10.2018 Gazette 2018/40)**

(54) **VERFAHREN ZUR DESINTEGRATION/SEPARATION SOWIE AUFSCHLUSS VON PFLANZLICHEN HÜLLMATERIALIEN UND KONSTITUENTEN ZUR GEWINNUNG UND HERSTELLUNG VON PFLANZENINHALTSSTOFFEN UND PFLANZLICHEN FASERPRODUKTEN**

PROCESS FOR DISINTEGRATION/SEPARATION AS WELL AS DECOMPOSITION OF PLANT BASED HULL MATERIALS AND CONSTITUENTS FOR OBTAINING AND GENERATING OF PLANT INGREDIENTS AND PLANT FIBRE PRODUCTS

PROCEDE DE DESINTEGRATION / SEPARATION ET DE DECOMPOSITION DES MATERIAUX D'ECORCES ET COMPOSANTS VEGETALES POUR OBTENIR ET PRODUIR DES INGREDIENTS VEGETALES OU DES FIBRES VEGETALES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.03.2017 DE 102017003177**

(43) Veröffentlichungstag der Anmeldung:
**05.02.2020 Patentblatt 2020/06**

(73) Patentinhaber: **Dietz, Max**
**65193 Wiesbaden (DE)**

(72) Erfinder: **Dietz, Max**
**65193 Wiesbaden (DE)**

(74) Vertreter: **Arth, Hans-Lothar**
**ABK Patent Attorneys**
**Jasminweg 9**
**14052 Berlin (DE)**

(56) Entgegenhaltungen:
**WO-A1-02/067698**
**WO-A1-2006/111604**
**DE-A1- 102013 114 698**
**US-A- 4 919 952**
**US-A1- 2005 118 693**

EP 3 599 901 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

### Hintergrund

Nahezu alle pflanzlichen Produkte, die zur Reproduktion dienen, wie Samen, Kerne oder Körner, aber auch andere Pflanzenprodukte, wie Früchte, sind von mindestens einer Hüllschicht umschlossen, um einer Aktivierung/Einleitung eines Wachstumsvorgangs entgegenzuwirken, sie zu konservieren und/oder sie zu versorgen und/oder ermöglichen eine Strukturgebung. Dies wird erreicht, indem derartige Hüllschichten eine vollständig geschlossene Abschirmung gegenüber physikalischen oder chemischen Alterationen gewährleistet. Derartige Hüllschichten haben in der Entwicklungsphase der Pflanzenprodukte die Aufgabe der Versorgung mit Wasser sowie Nährstoffen und sind die Bildungsstätte von den Konstituenten, die in Samen oder Körnern enthalten sind, wie Proteine, Kohlenhydrate sowie Fette, die sie umschließen. Daher enthalten derartige Hüllschichten eine Vielzahl von Enzymen sowie Verbindungen, die zur Produktion der Konstituenten des durch sie umschlossenen Inhalts verantwortlich sind. Daher sind in diesen Hüllschichten beispielsweise auch hohe Konzentrationen an Ausgangs- und Vorläuferverbindungen dieser Konstituenten zu finden, wie Carbonsäuren (z. B. Ascorbinsäure oder Zimtsäure) oder Enzyme oder Antioxidantien oder Farbstoffen vorhanden. Ferner werden von den Hüllschichten auch Verbindungen synthetisiert oder eingelagert, die einer/einem Zersetzung/Angriff durch Micro-/oder Makroorganismen entgegenwirken sollen. Hierzu gehören beispielsweise Geruchs- oder Geschmacksstoffe sowie Toxine. Wenn die Reifung der Pflanzenprodukte abgeschlossen ist, kommt es zu einer Kompaktierung der Hüllschichten und Einstellung der nutritiven Versorgung. Die Kompaktierung ist bei den verschiedenen Samen und Kernen unterschiedlich ausgeprägt. Dabei kommt es zumeist zu einer Vernetzung von Lignin und/oder Cellulose zu einer kompakten und durchgängigen Schicht. Hierdurch werden auch die hierin befindlichen wasserleitenden Kapillaren verschlossen. Die Pflanzenprodukte erhalten hierdurch einen mechanischen Schutz gegen eine Desintegration sowie einen Schutz vor einer Quellung der umschlossenen Konstituenten, aber auch gegen einen Wasserverlust. Im getrockneten Zustand sind derartige Hüllschichten spaltraumfrei mit der umschlossenen Masse verbunden. Daher lassen sich die Hüllschichten von pflanzlichen Produkten, die zur Reproduktion vorgesehen sind, nur sehr schwer oder überhaupt nicht durch physikalische Maßnahmen von den umschlossenen Konstituenten separieren. Dies betrifft insbesondere die Hüllschicht, die den umschlossenen Konstituenten unmittelbar anliegt. Eine physikalische Abtrennbarkeit ist insbesondere dann nicht möglich, wenn die Hüllschicht sehr dünn ist und ähnliche physikalische Eigenschaften, wie z. B. die Elastizität oder Dichte, wie die umschlossenen Konstituenten aufweist. Dies trifft z. B. auf die Hüllschicht von Walnüssen oder Sojabohnen zu, bei denen eine rein mechanische selektive Entfernung der Hüllschicht nach einer Trocknung nicht möglich ist. Samen, Kerne sowie Körner von Pflanzen sind wichtige Nahrungsgrundstoffe und werden teilweise unzerkleinert und vollständig oder zerkleinert und/oder in Fraktionen als Nahrungsmittel bereitgestellt. Bei vielen der Samen und Körner ist es erforderlich, eine oder alle Hüllschichten vollständig zu entfernen, da der Verbleib in einem Nahrungsmittel zu unerwünschten Effekten führt. Darunter kann es zu störenden sensorische Effekte kommen, wie einem bitteren Geschmack oder zu einer Verfärbung des erhaltenen Produktes sowie das Mundgefühl beim Verzehr ungünstig verändert werden, durch die während der Weiterverarbeitung entstehenden Partikeldimensionen und die unterschiedliche Härte des Hüllmaterials im Vergleich zu den Konstituenten der Pflanzenprodukte. Viele derartiger Hüllschichten können durch eine Wasseraufnahme gequollen werden, wodurch sich eine wassergefüllte Spaltraumbildung zwischen der Hüllschicht und der umschlossenen Masse an Konstituenten bildet. Dabei ist bekannt, dass eine derartige Quellung in einem Wasserbad bei Raumtemperatur nur sehr langsam oder auch gar nicht erfolgt und in einem heißen Wasser oder Wasserdampfstrom sich dieser Prozess erheblich beschleunigen oder einleiten lässt. Durch die Erhitzung werden vorteilhafterweise auch organische Verbindungen zerstört und/oder inaktiviert, die toxische und/oder anti-nutritive Eigenschaften haben, wie beispielsweise Ureasen oder Thrypsininhibitoren. Organische Verbindungen, die zu unerwünschten sensorischen Effekten führen, wie einem bitteren Geschmack oder einem adstringierenden Effekt, können in der Regel durch eine Erhitzung nicht beseitigt werden und verbleiben in den hüllmaterial-freien Samen Körnern oder Kernen. Nachteilig dabei ist, dass es durch eine feuchte Erhitzung zu mehreren unerwünschten Effekten kommt. Zum einen werden Proteine, die in den behandelten pflanzlichen Samen und Körnern vorliegen, zumindest teilweise denaturiert und gesundheitsfördernde organische Verbindungen, wie beispielsweise Vitamine, inaktiviert. Zum anderen kommt es zu einer stärkeren Quellung von enthaltener Stärke. Ferner können enthaltene Fettsäuren chemisch modifiziert werden, sodass es beispielsweise zur Bildung von Transfettsäuren oder Epoxiden kommt, die gesundheitsschädliche Effekte haben. Daher sind Verfahren, mit denen eine Abtrennung von Hüllmaterialien bei Raumtemperatur oder nur einer geringen Erwärmung ermöglicht werden kann, Verfahren, bei denen eine Erhitzung der pflanzlichen Materialien erfolgt, vorzuziehen.

Im Stand der Technik sind keine Verfahren bekannt, mit denen sich bei Raumtemperatur oder sogar erniedrigten Temperatur eine vollständige und einfach durchzuführende Abtrennung von Hüllmaterialien pflanzlicher Samen und Kerne bewerkstelligen lässt. Insbesondere liegen keine Berichte darüber vor, wie bei einer Lagerung von Pflanzenprodukten, die der Reproduktion dienen, in einem wässrigen Medium, bei Raumtemperatur oder leicht erhöhten Temperatur, eine Reifung des Keimlings bzw. eine Sprossung verhindert werden kann. Daher besteht ein Bedarf an

Verfahren, die eine vollständige und einfache Entfernung von Hüllmaterial von pflanzlichen Hüllen, Schalen oder Spelzen ermöglicht, ohne dass es hierbei zu einer Einleitung der Reifung der Samen, Körner oder Kerne oder zu Veränderungen der enthaltenen Konstituenten oder zur Entstehung gesundheitsschädlicher/toxischer Verbindungen kommt. Verfahren zum Aufschluss von pflanzlichen Materialien in lösliche Bestandteile und unlösliche Faserbestandteile sind aus den Dokumenten WO-02/067698A2, US-4919952A und WO-2006/111604A1 bekannt.

In vielen Samen, Kernen und Körnern beinhalten die Konstituenten auch Wurzelbilder, die sogenannten Keimlinge oder auch Sprossen. Vielfach ist deren Anwesenheit in dem für die menschliche Ernährung bereitzustellenden Produkt nicht erwünscht und/oder es besteht ein Interesse, diese Keimlinge oder Wurzelbilder als separate Wertstofffraktion zu gewinnen, z. B. für die Herstellung eines Keimöls. Daher ist die Abtrennung von Keimlingen und/oder Wurzelbildern in vielen Bereichen wünschenswert. Um dies vornehmen zu können, müssen die Hüllschichten entfernt werden, da die Keimlinge und Wurzelbilder strukturell mit den übrigen Konstituenten der Samen oder Kerne verbunden sind und sich innerhalb der innersten Hüllschicht befinden. In Verfahren nach dem Stand der Technik erfolgt die Abtrennung von Keimlingen durch mechanische Verfahren, bei denen die Keimlinge durch Prallung abgeschlagen werden. Dabei kommt es unweigerlich zu Verletzungen/Absprengungen der Konstituenten der Samen, Körner oder Kerne sowie zum Eintrag bzw. Mitaustrag von Bruchstücken des Hüllmaterials. Aus dem Stand der Technik sind keine Verfahren bekannt, mit denen sich unter schonenden Bedingungen und unter Erhalt der Integrität der abgetrennten Keimlinge/-Wurzelbildner sowie der übrigen Konstituenten der Samen, Körner oder Kerne diese Strukturen voneinander separieren lassen. Insbesondere liegt kein Verfahren vor, mit dem sich unter schonenden Bedingungen Keimlinge/Wurzelbilder von den übrigen Konstituenten von Samen, Kernen und Körnern trennen lassen, bei einer gleichzeitig erfolgenden schonenden und vollständigen Abtrennung der Hüllmaterialien, sodass die verschiedenen Fraktionen sich leicht voneinander und in unveränderter Form erhalten lassen. Daher ist ein Verfahren wünschenswert, mit dem sich diese Bedingungen erfüllen lassen und pflanzliche Samen und Kerne in desintegriertem Zustand und bei dem das abgetrennte Hüllmaterial in einem für eine weitere Verwendung gebrauchsfähigen Zustand erhalten wird.

Von ökonomischem Interesse sind aber auch die nicht für die menschliche Ernährung geeigneten Hüllen, Schalen oder Spelzen, die bei pflanzlichen Samen und Kernen abgetrennt werden. Diese fallen z. T. in großen Quantitäten an, wie beispielsweise bei der Verarbeitung von Reis oder Sonnenblumenkernen. Dieses Hüllmaterial hat in der Regel keinen nutritiven Wert, da es überwiegend aus Cellulose und/oder Ligninen in Form von hochmolekularen Verbindungen vorliegt und daher nicht durch den menschlichen Verdauungsprozess aufgeschlossen werden kann. Ferner sind, wie zuvor beschrieben, häufig organische und/oder anorganische Verbindungen enthalten oder fest anhaftend, die einen unangenehmen Geschmack oder Geruch oder Farbe bedingen oder auch toxisch bzw. antinutritiv sind. Andererseits können organische Verbindungen enthalten oder anhaftend sein, die gesundheitsfördernde Effekte aufweisen und deren Anwesenheit in einem Nahrungsmittel erwünscht ist. Daher besteht auch ein Interesse Hüllen, Schalen oder Spelzen in einer geeigneten Form der menschlichen Ernährung zugänglich zu machen. Pflanzliche Hüllmaterialien, werden in der Form, wie sie nach dem Stand der Technik erhaltbar sind, als Tierfutter, Bodendünger oder Ausgangsprodukt für Fermentationsprozesse verwandt. Verfahren, mit denen es möglich ist, Hüllmaterial so aufzubereiten, dass es für eine Nutzung für die menschliche Ernährung geeignet ist und dabei zu keinen unerwünschten sensorischen oder zu nutritiven Effekten kommt sowie gesundheitsfördernde Verbindungen enthalten und verfügbar bleiben, sind im Stand der Technik nicht bekannt. Es besteht somit ein Bedarf, pflanzliches Hüllmaterial zu desintegrieren bzw. so aufzuschließen, dass dieses von unerwünschten Bestandteilen/Verbindungen befreit werden kann sowie in eine physikalische Form zu bringen, dass sie für die menschliche Ernährung geeignet sind.

Überraschenderweise wurde ein Verfahren gefunden, mit dem sowohl eine schonende Entfernung von Hüllmaterialien pflanzlicher Samen und Körner, unter Erhalt der Integrität der Konstituenten, möglich ist, als auch eine schonende Abtrennung von Keimlingen/Wurzelbildern erfolgen kann. Darüber hinaus kann mit dem Verfahren ein desintegriertes und von den übrigen Konstituenten des Ausgangsmaterials separiertes Hüllenmaterial bereitgestellt werden, bei dem aufgrund der Herstellungsbedingungen Toxine und/oder anti-nutritive Verbindungen und/oder Verbindungen, die sensorisch unerwünschte Effekte bedingen, inaktiviert und/oder entfernt und/oder neutralisiert werden. Ferner kann überraschenderweise ein Verfahren bereitgestellt werden, mit dem das abgetrennte Hüllmaterial desintegriert und aufgeschlossen werden kann, wodurch sich neue vorteilhafte Anwendungsmöglichkeiten für abgetrennte bzw. aufgeschlossene Hüllmaterialien ergeben.

Cellulose-basierte Fasern machen den Hauptbestandteil der nicht verdaulichen Kohlenhydrate pflanzlicher Materialien, die zum Verzehr genutzt werden, aus, welche im Wesentlichen die Substanzmenge der Ballaststoffe repräsentieren. Nicht verdaulich bedeutet dabei, dass diese Verbindungen nicht durch Enzyme des menschlichen Gastrointestinaltraktes, wie beispielsweise Amylasen, gespalten und damit in C-6-Zuckerverbindungen, die resorbierbar sind, gespalten werden können. Somit verbleiben die cellulose-basierten Fasern im Wesentlichen als unveränderte Bestandteile im Darminhalt und sind somit Bestandteile des Stuhls. Insbesondere durch ihr Vermögen zur Wasserbindung sind sie ein sehr wichtiges Regulativ für die Konsistenz des Koloninhalts. Dies bestimmt auch die Passagezeit des hierin entstehenden Kots. Ein Stellenwert einer ballaststoff-reichen Kostform zur Vermeidung von Darmerkrankungen und Darmpassageproblemen wurde in einer großen Anzahl von klinischen Untersuchungen eindeutig belegt. So konnte

gezeigt werden, dass die Rate an kolorektalen Karzinomen durch eine ballaststoff-reiche Kostform verringert werden kann. Ferner konnte eine Reduktion von erhöhten cholesterinwerten und damit verbunden von kardio-vaskulären Erkrankungen belegt werden. Belegt ist auch die stuhlregulierende Funktion von faser-reichen Ballaststoffen bei der chronischen Obstipation, die insbesondere beim älteren Menschen häufig vorliegt. Darüber hinaus sind auch probiotische Effekte, die durch den partiellen Abbau von cellulose-basierten Fasern durch das Mikrobiom des menschlichen Kolons entstehen, dokumentiert. Derartige Effekte werden für eine geringere Inzidenz von Karzinomen außerhalb des Kolons verantwortlich gemacht, z. B. durch kurzkettige Fettsäuren oder Phytosterole, die aus einem mikrobiellen Abbau der cellulose-basierten Fasern entstehen oder freigesetzt werden und die Dickdarmwand passieren können. Es wird von den Weltgesundheitsverbänden und der FDA dringend empfohlen, Ballaststoffe in eine Trockensubstanzmenge von 30 g pro Tag zu sich zu nehmen. Dieses Ziel wird in der überwiegenden Mehrheit der praktizierten Ernährungsformen in den Industrienationen sowie auch in den Schwellenländern nicht erreicht. Es besteht eine inverse Korrelation zwischen dem Konsum an Ballaststoffen und der Inzidenz und dem Schweregrad einer Adipositas und eines Diabetes mellitus sowie infolge dessen der Mortalität. Eine praktische Umsetzbarkeit der Empfehlungen zum Ballaststoffanteil der Ernährung lässt sich allerdings aus unterschiedlichen Gründen, wie z. B. fehlendes Angebot bei Berufstätigen oder ein impliziertes Sozialverhalten, trotz aller hierfür bekannten Informationen und Aufklärungen nicht dursetzen. Es besteht somit ein großer Bedarf, Ballaststoffe bereit zu stellen, die Lebensmittelzubereitungen hinzugegeben werden können oder mit diesen ergänzt werden und den sensorischen und funktionellen Ansprüchen eines Nahrungsproduktes genügen, wodurch sich der Massenanteil der Ballaststoffe an dem Nährmittel erhöht.

Überraschenderweise wurde gefunden, dass durch die erfindungsgemäßen Verfahren zur Desintegration von pflanzlichen Hüllen und Schalen, es auch zu einem Aufschluss der übrigen Konstituenten eines pflanzlichen Ausgangsmaterials, insbesondere von Körnern, Kernen und Nüssen, aber auch anderen Pflanzenprodukten kommt. So wurde gefunden, dass durch eine erfindungsgemäße Desintegration von Hüllen oder Schalen, die einen vollständigen Aufschluss bzw. eine Separation von anderen Konstituenten des pflanzlichen Ausgangsmaterials von den Hüllen oder Schalen bedingt, die löslichen Konstituenten des pflanzlichen Ausgangsmaterials hydratisiert werden und sich in einem wässrigen Verteilungsvolumen sehr leicht und vollständig lösen und von den Hüllen und Schalen separieren lassen. Weitere positive Eigenschaften wurden dann für die Gewinnbarkeit der gelösten löslichen organischen Verbindungen gefunden. So wurde ein Aggregationsverfahren gefunden, mit dem es sehr einfach möglich ist, die gelösten löslichen organischen Verbindungen, dies sind insbesondere Proteine sowie Kohlenhydrate, zu aggregieren und kondensieren, wodurch sich diese mittels bekannter Verfahrenstechniken separieren lassen und als reine Fraktionen erhaltbar sind.

## Beschreibung

Die Erfindung betrifft ein Verfahren, bei dem eine Desintegration von pflanzlichem Hüllmaterialien bewirkt wird, die eine Beschleunigung der Erweichung pflanzlicher Hüllmaterialien gegenüber Verfahren aus dem Stand der Technik und unter schonenden Bedingungen bewerkstelligt. Schonend bedeutet in diesem Zusammenhang, dass das separierbare Hüllmaterial und die übrigen Konstituenten des Ausgangsmaterials, insbesondere von Kernen, Körner und Nüssen, ihre Integrität beibehalten, sie also vorzugsweise physikalisch intakt bleiben, also z.B. keine Fragmentierung erfolgt. Produktschonend bedeutet ferner, dass eine mechanische Alteration in einem deutlich geringeren Ausmaß erfolgt, als dies nach Verfahren aus dem Stand der Technik erfolgt. Produktschonend, bedeutet dabei auch, dass eine Temperaturerhöhung auf vorzugsweise < 120 °C, mehr bevorzugt < 100°C, weiter bevorzugt < 90°C, weiter bevorzugt < 75°C, weiter bevorzugt < 60°C, weiter bevorzugt < 50°C und noch weiter bevorzugt < 40°C begrenzt kann. Produktschonend, bedeutet dabei aber auch, dass bei einem Aufschlussverfahren, bei dem höhere Temperaturen angewandt werden, sich beispielsweise organische Verbindungen, insbesondere cellulose-basierte Fasern und lignin-reiche Schalen gewinnen lassen, ohne, dass hierfür eine mechanische Zerkleinerung des Ausgangsmaterials oder dieser, erforderlich ist. Somit können in den unterschiedlichen Ausführungsarten des Verfahrens unterschiedliche produktschonende Effekte erzielen, die einen unmittelbaren Einfluss auf die erhaltbaren Produkte und/oder die Prozessökonomie haben. Das Verfahren ist dabei besonders geeignet, eine vollständige Abtrennung der Hüllmaterialien von anderen Konstituenten eines pflanzlichen Ausgangsmaterials vornehmen zu können, ohne dabei die strukturelle Integrität des von dem Hüllmaterial eingeschlossenen pflanzlichen Produktes in der Gesamtheit zu verletzen oder es zu desintegrieren. In einer bevorzugten Ausführungsform wird dies gewährleistet durch Einlegen der Samen, Körner oder Kerne, bei denen eine Abtrennung des Hüllmaterials erwünscht ist, in eine Lösung, in der lösliche Verbindungen zur Desintegration gelöst vorliegen. In einer Ausführungsart handelt es sich bei den Verbindungen zur Desintegration um kationische Aminosäuren und oder Peptide. Überraschenderweise wurde gefunden, dass es hierdurch zu einer rasch einsetzenden Hydratation von pflanzlichen Hüllmaterialien bereits bei Raumtemperatur oder erniedrigten Temperaturen kommt, die deutlich schneller und vollständiger verläuft, als mit einer wässrigen Lösung, enthaltend Verbindungen, die im Stand der Technik bekannt sind, wie beispielsweise NaOH. Es wurde weiterhin gefunden, dass pflanzliche Hüllen, die mit einem der erfindungsgemäßen Verfahren desintegriert und hydratisiert wurden, sehr viel einfacher zur Ablösung gebracht werden können, als dies durch eine Behandlung mit anderen wässrig gelösten Verbindungen möglich ist. Überraschenderweise zeigte sich,

dass während der erfindungsgemäßen Desintegration und Hydratation der pflanzlichen Hüllen bei Samen und Körnern, es je nach Pflanzenart, immer an der gleichen Stelle, bzw. im gleichen Bereich der Hüllschicht, zu einer Ausdünnung/Auflösung kommt, in dem dann eine Perforation des Hüllmaterials spontan oder durch eine leichte mechanische Alteration auftritt. Von hier setzt sich bei einer leichten mechanischen Scherung der Hülle eine Zerreißung fort, unter Wahrung der Integrität des gesamten restlichen Hüllmaterials. Es wurde gefunden, dass je nach Dauer und Konzentration der Aminosäuren/Peptide eine vollständige Perforation spontan erfolgt oder durch einen sehr geringen mechanischen Energieeintrag, z. B. in Form einer Scherung, ermöglicht werden kann, wodurch das Hüllmaterial in einem Stück und vollständig von den Samen, Körnern oder Kernen abgelöst wird. Es konnte gezeigt werden, dass zuverlässig eine vollständige Entfernung des Hüllmaterials durch eine der Ausführungsformen des erfindungsgemäßen Verfahrens gewährleistet werden kann.

Bevorzugt ist ein Verfahren zur produktschonenden Desintegration/Perforation oder Ablösung von Hüllmaterial pflanzlicher Samen, Körner oder Kerne.

Überraschenderweise kann eine praktisch selektive Desintegration des pflanzlichen Hüllmaterials, unter weitgehend vollständigem Erhalt der Integrität der restlichen Konstituenten der Samen, Körner oder Kerne, erreicht werden, wenn diese in eine Lösung, enthaltend gelöste Aminosäuren und/oder Peptide unter erhöhten Temperaturbedingen eingelegt werden. Dabei kommt es zu einer spontanen Ablösung des Hüllmaterials. Erwartungsgemäß beschleunigt sich der Desintegrationsprozess des Hüllmaterials bei einer Erhitzung auf Werte > 80° oder 90°C. Überraschenderweise kann allerdings die hierfür benötige Zeitdauer so kurz gehalten werden, dass es zu keiner relevanten Quellung, Desintegration oder Schädigung der übrigen von dem Hüllmaterial eingeschlossenen Konstituenten der Samen, Körner oder Kerne kommt. In vorteilhafter Weise kann somit eine selektive Desintegration des pflanzlichen Hüllmaterials, unter für die anderen Konstituenten der Samen, Körner oder Kerne schonenden Bedingungen, erfolgen. In einer Ausführungsform wird hierzu eine erfindungsgemäße Lösung mit hierin vollständig eingelegten Samen, Körnern oder Kernen erhitzt, vorzugsweise auf Temperaturen von > 70°C. Vorzugsweise werden die Samen oder Kerne während des Vorgangs gerührt. Es konnte gezeigt werden, dass es unter diesen Bedingungen zu einer vollständigen Ablösung der Hüllmaterialien kommt. Auch hierbei bleibt das Hüllmaterial außer an der Stelle der Perforation in seiner Integrität erhalten. Überraschenderweise zeigt sich, dass die Samen oder Kerne in den Lösungen, enthaltend gelöste Aminosäuren und/oder Peptide unter erhöhter Temperatur nicht mehr quollen, als dies in einer kalten wässrigen Lösung der Fall war.

Bevorzugt ist ein Verfahren zur vollständigen Abtrennung/Separation von Hüllmaterial von pflanzlichen Samen oder Kernen.

Bevorzugt ist ein Verfahren zur Desintegration und Aufschluss von pflanzlichem Ausgangsmaterial, bei dem der Verfahrensschritt b) zusammen mit einer thermischen und/oder mechanischen Desintegration erfolgt oder eine thermische und/oder mechanische Desintegration in einem Verfahrensschritt b1) im Anschluss an den Verfahrensschritt b) erfolgt.

Überraschenderweise wurde gefunden, dass es mit zunehmender Konzentration der Aminosäuren und/oder Peptide zu einer Verlangsamung oder vollständigen Unterbindung einer Keimreifung/Sprossung, bei den in eine solche Lösung eingelegten Samen, Körner oder Kerne, kam. So kam es bei Sojabohnen, die über 8 Tage in eine Lösung, die Lysin in einer Konzentration von 0,4 molar enthielt, eingelegt waren zwar einer Volumenzunahme von 160 vol% sowie zu einer weitgehenden Ablösung der Hüllschichten, es bestand aber kein Wachstum der Keimlinge. Im Gegensatz hierzu waren bei Sojabohnen, die über den gleichen Zeitraum in Wasser eingelegt worden waren, Sprossen mit einer Länge von 2 bis 4 cm entstanden. Das Hüllmaterial ließ sich gleichwohl nur schwer und unvollständig entfernen. Ferner wiesen die Bohnen eine Volumenzunahme von 280 vol% auf. Auch bei anderen Samen und Körnern konnte dieser Effekt dokumentiert werden, beispielsweise bei Kidney-Bohnen. Darüber hinaus ergab sich ein sehr vorteilhafter Effekt, der sich zur Nutzbarmachung der Keimlinge/Sprossen verwenden lässt. Es wurde gefunden, dass nach der Ablösung der Hüllmaterials, die durch eine Einlage des Ausgangsmaterials in eine erfindungsgemäße Aufschlusslösung und welche spontan oder durch eine leichte mechanische Alteration der Hülle erreicht wurde, sowie bei Vorliegen einer leichten Quellung des Samens oder Korns, ein bereits gebildeter Keimling /Spross vom Keimbett in abgelöster Form vorlag und sich sehr einfach von dem Samen oder Korn abtrennen ließ. Dies konnte alleine durch eine Passage des so vorbehandelten Samens oder Korns durch eine Röhre oder Hülse erreicht werden, wobei sowohl das Hüllmaterial als auch der Keimling/Sprössling vom Samen oder Korn getrennt wurden. Somit kann eine mechanische Abtrennung von Keimlingen oder Sprossen erheblich vereinfacht werden. Ferner können Keimlinge oder Sprossen zusammen mit dem desintegrierten Hüllmaterial in einem Arbeitsgang von Samen oder Körnern abgelöst und separiert werden.

Bevorzugt ist ein Verfahren zur Desintegration und Aufschluss von pflanzlichem Ausgangsmaterial, bei dem bei dem neben einer Desintegration und/oder Separation und/oder Auflösung von pflanzlichen Hüllmaterialien eine Abtrennung eines Keimlings/einer Sprosse erfolgt.

Bevorzugt ist ein Verfahren zur erleichterten Abtrennung von Keimlingen/Sprossen.

Bevorzugt ist ein Verfahren zur Desintegration und Aufschluss von pflanzlichem Ausgangsmaterial, bei dem es zu einer Verlangsamung/Unterbindung einer Reifung pflanzlicher Samen und/oder Körner kommt.

Überraschenderweise wurde gefunden, dass die Samen und Körner, die nach einem der erfindungsgemäßen

Verfahren von dem sie einschließenden Hüllmaterial befreit worden waren, sich in besonders vorteilhafter Weise weiterverarbeiten lassen. Dies betrifft insbesondere die weitere Verarbeitung zum Aufschluss der einzelnen Konstituenten der Samen und Körner zu. So konnte gezeigt werden, dass bei einer Zerkleinerung von Samen und Körnern, bei denen die Hüllmaterialien erfindungsgemäß entfernt worden waren und eine Quellung in einem Bereich zwischen 100 und 200 vol% vorlag, sich aus diesen mit einer Schlagmessermühle in kurzer Zeit eine feinkörnige Masse herstellen ließ und sich anschließend diese in einem wässrigen Aufschlussverfahren in ihre Konstituenten vollständig separieren ließ. Dabei ist besonders vorteilhaft, dass im Vergleich zu einem unbehandelten Samen oder Korn ein erheblich geringerer Energieeintrag erforderlich ist und es zu keinerlei Staubentwicklung bei der Zerkleinerung kommt. Insofern ist eines der erfindungsgemäßen Verfahren auch gerichtet auf eine Desintegration und Hydratation von pflanzlichem Ausgangsmaterial, bei dem eine Desintegration/Separation von Hüllen und/oder Schalen erfolgt.

Bevorzugt ist ein Verfahren, bei dem neben einer Desintegration/Separation von Hüllen und/oder Schalen eines pflanzlichen Ausgangsmaterials auch eine Desintegration/Hydratation der übrigen Konstituenten des pflanzlichen Ausgangsmaterials erfolgt. Bevorzugt sind Samen, Körner und Kerne. In weiteren Untersuchungen konnte gezeigt werden, dass bei Samen oder Körnern, die derartig vorbehandelt worden waren, die einzelnen Konstituenten dieser mittels eines wässrigen Aufschlussverfahrens sehr einfach separiert werden konnten. In einer bevorzugten Verfahrensausführung werden Samen oder Körner mit einem der erfindungsgemäßen Verfahren von Hüllmaterialien vollständig befreit und unmittelbar oder im Verlauf, in einem noch gequollenen Zustand, einem Mahl- oder Zerkleinerungsverfahren zugeführt, wodurch eine feinkörnige, nicht staubende Masse erhalten wird, die mit einer Aufschlusslösung versetzt wird. In einer Ausführungsform erfolgt unmittelbar anschließend oder nach einer Aufschlussphase eine vorzugsweise filtrative Abtrennung der Feststoffe. Hierdurch werden vorzugsweise komplexe oder komplexierte Kohlenhydrate in Form von Partikel sowie cellulose-basierte Fasern mit dem Filterrückstand erhalten, vorzugsweise sind diese vollständig oder weitgehend vollständig von löslichen Konstituenten des Ausgangsmaterials, insbesondere von Proteinen und löslichen Kohlenhydraten, befreit. Ferner wird mit dem Filtrat eine weitestgehend oder vollständig faser-freie wässrige Lösung mit gelösten löslichen Proteinen und Kohlenhydraten erhalten. Überraschenderweise können die gelösten löslichen Verbindungen in sehr vorteilhafter Weise aggregiert und kondensiert werden, wodurch sie sich von der wässrigen Verteilungsphase sehr einfach separieren lassen. Vorzugsweise wird die Proteinfraktion selektiv durch eine Kondensierung/Aggregation/Komplexierung und/oder eine filtrative oder zentrifugale Separationstechnik entfernt und als reines Produkt erhalten. Eine derartige selektive Kondensation/Aggregation/ Komplexierung der gelösten Proteine kann z. B. durch die Hinzugabe einer organischen Säure, wie z. B. Zitronensäure oder Essigsäure, erreicht werden. Somit lassen sich durch eines der erfindungsgemäßen Verfahren sowohl pflanzliche Samen und Kerne von Hüll-/Schalenmaterial befreien, als auch die erhaltenen pflanzlichen Samen, Kerne und Körner sehr einfach in ihre einzelnen Konstituenten auftrennen. Es konnte gezeigt werden, dass nach einer Quellung von Samen, Körnern oder Kernen mit einer wässrigen Lösung, die keine der erfindungsgemäßen Verbindungen zur Desintegration bzw. Aufschluss enthielt, ein Aufschluss der Konstituenten der Samen, Körner oder Kerne, mit einer anschließenden Verteilung in einem wässrigen Verteilungsvolumen, nicht möglich war. Überraschenderweise war eine Separation der durch das erfindungsgemäße Verfahren hydratisierten Konstituenten in einem wässrigen Verteilungsvolumen erreichbar, wenn zur/zum Desintegration/Aufschluss eine der erfindungsgemäßen Lösungen enthaltend gelöste Verbindungen zur Desintegration, eingesetzt wurde. Bevorzugte Verbindungen zur Desintegration/Aufschluss sind dabei Aminosäuren und/oder Peptide. Für eine Prozessführung, bei der zunächst eine Desintegration des Hüllmaterials, verbunden mit einer Quellung der Samen, Körner oder Kerne mit den erfindungsgemäßen Lösungen erfolgt, gefolgt von einer mechanischen Desintegration, konnte gezeigt werden, dass im Gegensatz zu Verfahren, bei denen eine Abtrennung der Hüllen/Schalen mit einem anderen Verfahren erfolgt war, für einen vollständigen Aufschluss der Konstituenten des Pflanzenmaterials eine weitere Exposition gegenüber einer erfindungsgemäßen wässrigen Lösung, enthaltend Verbindungen zur Desintegration, nicht erforderlich ist. Somit ermöglicht das Verfahren in einer Verfahrensausführung sowohl die Desintegration sowie Aufschluss und Separation pflanzlicher Hüllen und Schalen, als auch eine anschließende(n) Desintegration/Aufschluss der übrigen Konstituenten des Ausgangsmaterials sowie deren Separation und Gewinnung. Somit kann überraschenderweise mit einer erfindungsgemäßen wässrigen Aufschlusslösung sowohl eine Desintegration pflanzlichen Hüllmaterials sowie dessen Separation von Samen, Körnern oder Kernen erreicht werden, als auch ein anschließender Aufschluss der Konstituenten der Samen, Körner oder Kerne durch ein wässriges Aufschlussverfahren durchgeführt werden.

Bevorzugt ist ein Verfahren, bei dem ein wässriger Aufschluss und Separation der Konstituenten von Samen, Körnern oder Kernen ermöglicht wird, durch Desintegration und/oder Separation des Hüllmaterials und/oder Quellung des/der Samen, Körner oder Kerne durch eine wässrige Lösung, enthaltend gelöste Aminosäuren und/oder Peptide.

Bevorzugt ist ein Verfahren zur Separation von pflanzlichem Hüllmaterial unter Beibehaltung der strukturellen Integrität der abgetrennten Hüllmaterialien und/oder der Konstituenten des/der pflanzlicher Samen, Körner oder Kerne.

Bevorzugt ist ein Verfahren zur Herstellung pflanzlicher Hüllmaterialpräparationen zur Verwendung als Faserstoffzubereitung.

Bevorzugt sind pflanzliche Hüllmaterialpräparation, erhältlich durch ein Verfahren zur Desintegration und Aufschluss von pflanzlichem Ausgangsmaterial.

Bevorzugt ist die Verwendung der pflanzlichen Hüllmaterialpräparation zur Faserstoffzubereitung. Bevorzugt ist ein Verfahren zum Aufschluss von pflanzlichen Samen, Körnern oder Kernen.

Überraschenderweise bewirkt eine erfindungsgemäße Desintegration eines pflanzlichen Ausgangsmaterials auch die Gewinnbarkeit von Konstituenten, die hierin enthalten sind. In einer bevorzugten Ausführungsart wird die Desintegration zur Gewinnung von löslichen Proteinen und Kohlenhydraten sowie cellulose-basierten Fasern und/oder lignin-reichen Schalen durchgeführt. Insbesondere für eine erfindungsgemäße Desintegration mit Sulfiten und Harnstoff, konnte neben einer Desintegration auch ein Aufschluss bei Samen, Körnern und Kernen bewirkt werden, der unter Verwendung der hierin offenbarten Verfahren zu einer vollständigen Lösung von Proteinen führt, die dann in gelöstem Zustand vorliegen und sich mit den hierin offenbarten Verfahren aggregieren, kondensieren, separieren und gewinnen lassen. So konnte beispielsweise für Soja-Kerne gezeigt werden, dass, wenn diese in einer wässrigen Lösung zur Desintegration, in der Natrium-Sulfit und/oder Harnstoff mit einer Konzentration von 1Gew% gelöst vorlagen, vollständig eingelegt waren und eine Erhitzung des Mediums auf 125°C bei einem Atmosphärendruck von 1,4 bar erfolgte, anschließend eine vollständigen Verteilbarkeit der Konstituenten in einem wässrigen Verteilungsvolumen möglich war, wenn die Suspension durch eine Kolloidmühle mit einer hohen Scherwirkung geleitet wurde. Durch eine Filtration der erhaltenen wässrigen Verteilungsphase ließ sich eine Fraktion solider Feststoffe gewinnen, die in der mikroskopischen Analyse frei von löslichen Rückständen war. Andererseits konnten die in der filtrierten Prozessflüssigkeit vorliegenden gelösten Proteine mit Verbindungen zur Aggregation/ Komplexierung aggregiert/komplexiert werden, wodurch diese kondensierten und sedimentierten und sich nach Sedimentation mittels Filtration oder zentrifugaler Separationstechniken von einer freien Wasserphase separieren ließen und dann als pastöse cremige Masse vorlagen. In der chemischen Analyse wurde eine Proteinkonzentration von 75Gew% nachgewiesen. Ein gleichartiges Ergebnis konnte auch für eine Desintegration anderer pflanzlicher Ausgangsmaterialien, wie Sonnenblumenkernen, Maisgries oder Jatropha- sowie Raps-Presskuchen nachweisen. Regelmäßig wurden Proteinisolate oder Konzentrate erhältlich.

Somit erfolgt in einer bevorzugten Verfahrensausführung eine Desintegration mit oder ohne eines der erfindungsgemäßen Ausschlussverfahren, zur Gewinnung von löslichen Konstituenten des pflanzlichen Ausgangsmaterials. **Bei** erfindungsgemäßen Verfahren wird jeweils eine wässrige Desintegrationslösung, umfassend eine wässrige Lösung mit einem pH im Bereich von 6,5 bis 13 verwendet.

Somit ist bevorzugt ein Verfahren zur Desintegration und Aufschluss von pflanzlichem Ausgangsmaterial mit den Verfahrensschritten

a) Bereitstellung eines pflanzlichen Ausgangsmaterials,
b) Versetzen des Ausgangsmaterials mit einer Desintegrationslösung und belassen in der Desintegrationslösung bis zum Erreichen einer Desintegration,
c) Verteilung der Konstituenten des desintegrierten Ausgangsmaterials in einem Verteilungsvolumen,
d) Separation solider Konstituenten von gelösten Konstituenten des Ausgangsmaterials,
e) Gewinnung von Wertstofffraktionen separierter Konstituenten durch,
e1) Fraktionierung von cellulose-basierten Fasern von lignin-reichen Schalen mittels eines Wirbelstromverfahrens und Erhalt gereinigter Fraktionen cellulose-basierter Fasern sowie lignin-reicher Schalen,
e2) Aggregation/Komplexierung gelöster Proteine durch Komplexierungsmittel und Separation der sedimentierten aggregierte/komplexierten kondensierten Proteine, unter Erhalt einer aggregierten/komplexierten Proteinmasse.

Dabei kann optional der Verfahrensschritt b) zusammen mit einer thermischen und/oder mechanischen Desintegration erfolgen oder wahlwiese eine thermische und/oder mechanische Desintegration im optionalen Verfahrensschritt b1) im Anschluss an den Verfahrensschritt b) erfolgen.

Die soliden Konstituenten, die mit einem Desintegrationsverfahren erhalten wurden, bei dem die erfindungsgemäßen Aminosäuren und/oder Peptide nicht in der Desintegrationslösung enthalten waren, wiesen einen deutlichen arttypischen Geruch auf. Daher ist bevorzugt ein Verfahren zur Desintegration und Aufschluss von pflanzlichem Ausgangsmaterial mit den Verfahrensschritten

a) Bereitstellung eines pflanzlichen Ausgangsmaterials,
b) Versetzen des Ausgangsmaterials mit einer Desintegrationslösung enthaltend Aminosäuren und/oder Peptide und belassen in der Desintegrations-/Aufschlusslösung bis zum Erreichen einer Desintegration,
c) Verteilung der Konstituenten des desintegrierten Ausgangsmaterials in einem Verteilungsvolumen,
d) Separation solider Konstituenten von gelösten Konstituenten des Ausgangsmaterials,
e) Gewinnung von Wertstofffraktionen separierter Konstituenten durch,
e1) Fraktionieren von cellulose-basierten Fasern von lignin-reichen Schalen mittels eines Wirbelstromverfahrens und Erhalt gereinigter Fraktionen cellulose-basierter Fasern sowie lignin-reicher Schalen,
e2) Aggregation/Komplexierung gelöster Proteine durch Komplexierungsmittel und Separation der sedimentierten aggregierte/komplexierten kondensierten Proteine, unter Erhalt einer aggregierten/komplexierten Proteinmasse.

Eine bevorzugte Verfahrensausführung ist dabei charakterisiert durch die folgenden Prozessschritte: Verfahren zur Desintegration und Aufschluss von pflanzlichem Ausgangsmaterial mit den Verfahrensschritten

a) Bereitstellung eines pflanzlichen Ausgangsmaterials,
b) Versetzen des Ausgangsmaterials mit einer Desintegrationslösung und belassen in der Desintegrationslösung bis zum Erreichen einer Desintegration,
c) Verteilung der Konstituenten des desintegrierten Ausgangsmaterials in einem Verteilungsvolumen, unter Erhalt von soliden Konstituenten und gelösten Konstituenten des pflanzlichen Ausgangsmaterials,
d) Separation solider Konstituenten von gelösten Konstituenten des pflanzlichen Ausgangsmaterials,
e) Gewinnung der separierten Konstituenten des pflanzlichen Ausgangsmaterials als Wertstofffraktionen durch,
e1) Fraktionierung von cellulose-basierten Fasern von lignin-reichen Schalen der soliden Konstituenten des pflanzlichen Ausgangsmaterials mittels eines Wirbelstromverfahrens und Erhalt gereinigter Fraktionen cellulose-basierter Fasern sowie lignin-reicher Schalen,
e2) Aggregation/Komplexierung gelöster Proteine der gelösten Konstituenten des pflanzlichen Ausgangsmaterials durch Komplexierungsmittel und Separation der sedimentierten aggregierten/komplexierten kondensierten Proteine, unter Erhalt einer aggregierten/komplexierten Proteinmasse.

Dabei kann optional der Verfahrensschritt b) zusammen mit einer thermischen und/oder mechanischen Desintegration erfolgen oder wahlwiese eine thermische und/oder mechanische Desintegration im optionalen Verfahrensschritt b1) im Anschluss an den Verfahrensschritt b) erfolgen.

In vergleichenden Untersuchungen konnte gezeigt werden, dass unter der Verwendung der erfindungsgemäßen Aminosäuren und/oder Peptide, die erhaltbaren cellulose-basierten Fasern und/oder lignin-reichen Schalen unmittelbar frei waren von Geruchs- und/oder Geschmacksstoffen.

Weiterhin besonders vorteilhaft ist, dass sich das desintegrierte Hüllmaterial vorzugsweise vollständig und in einem Stück von den pflanzlichen Samen, Körnern oder Kernen abtrennen und separieren lässt. In einer bevorzugten Ausführungsform erfolgt die Abtrennung von desintegriertem Hüllmaterial /Schalen vorzugsweise mit einer Vorrichtung, die eine ein- oder mehrseitige tangentiale Scherkraft an den erfindungsgemäß vorbereiteten pflanzlichen Samen und Körnern bewirkt. Die Scherkraft kann dabei in Form eines Drucks auf die Außenseite der pflanzlichen Samen, Körner oder Kerne oder in Form einer Scherbewegung erfolgen. Geeignete Vorrichtungen, die aus dem Stand der Technik bekannt sind, sind beispielsweise Backenpressen. In einer besonders bevorzugten Ausführungsform wird die Abstreifung einer Hüllschicht dadurch erzielt, indem die pflanzlichen Samen, Körner oder Kerne zunächst über eine Größensortiervorrichtung aus dem Stand der Technik in Vorratsbehältnissen definierter Durchmesserbereiche dieser Samen oder Kerne zugeteilt werden. Aus diesen Vorratsbehältnissen werden durch eine weitere Vorrichtung einzelne Samen, Körner oder Kerne in einen Trichter oder Schaft eingebracht, sodass sich die Samen oder Kerne in einer bevorzugten Längsausrichtung anordnen. In einer bevorzugten Ausführungsform wird/werden über einen Stempel oder eine Druckluftvorrichtung ein oder mehrere Samen oder Kerne durch eine elastische Hülse/Röhre oder ein oder mehrere perforierte Septum/Septen gedrückt bzw. gepresst. Vorzugsweise wird hierbei das Hüllmaterial vollständig abgestreift. Vorzugsweise werden die pflanzlichen Samen, Körner oder Kerne aufgrund der Beschleunigung, die sie erfahren haben, aus der Abstreifvorrichtung herausgetrieben/katapultiert und in einem weiteren Vorratsgefäß aufgefangen. Das ebenfalls ausgeworfene Hüllmaterial wird dabei vorzugsweise durch Beschreibung einer zu den von dem Hüllmaterial befreiten Samen, Körnern oder Kernen anderen Bewegungsbahn, was beispielsweise durch Schwerkraft oder eine Windtrennung eingerichtet wird, getrennt und in ein anderes Behältnis befördert. In einer weiteren bevorzugten Ausführungsart erfolgt die Abtrennung des Hüllmaterials durch eine Vorrichtung, bei der die erfindungsgemäß vorbehandelten pflanzlichen Samen, Körner oder Kerne entweder sortiert nach ihrem Durchmesser oder unsortiert auf ein aus mindestens 2 annähernd oder vollständig parallel angeordneten Röhren, die sich gleichförmig und/oder ungleichförmig und/oder gegenläufig drehen, beschickt werden. Die Samen, Körner oder Kerne werden in dem Spaltraum, den die Rohre gegeneinander ausbilden, rotiert und transportiert. Vorzugsweise erfolgt dabei ein Ungleichlauf von mindestens einem der Rohre oder von mehreren Röhren. Hierdurch entsteht eine tangentiale Scherkraft an dem Hüllmaterial der anliegenden Samen, Körner oder Kerne, die zum Zerreißen des Hüllmaterials führt, welches während der in dem Gestänge beschreibenden Rotationsbewegung der Samen, Körner oder Kerne von diesen, z. B. durch die Beschleunigungsbewegung und/oder einen Luftstrom, ab- bzw. ausgetragen wird. Hierdurch können die vom Hüllmaterial befreiten Samen, Körner oder Kerne sowie das Hüllmaterial in unterschiedlichen Behältnissen aufgefangen werden.

Bevorzugt ist eine Vorrichtung zur Abtrennung und Separation von desintegrierten Hüllmaterialien und Schalen von Samen, Körnern oder Kernen, indem auf das desintegrierte Hüllmaterial/Schalen tangentiale Scherkräften einwirken.

Bevorzugt ist eine Vorrichtung zur Perforation/Abtrennung/Separation von Hüllmaterial von pflanzlichen Samen, Körnern oder Kernen.

Überraschenderweise zeigte sich, dass durch eines der erfindungsgemäßen Verfahren Verbindungsschichten, die zwischen pflanzlichem Hüllmaterial **und** den Samen, Körnern oder Kernen bestehen, bzw. entstehen, auf sehr

vorteilhafte Weise sehr einfach entfernt werden können. So zeigte sich beispielsweise bei der Abtrennung von Häuten von Mandeln und Sojabohnen, dass, wenn diese mit Wasser oder durch eines der erfindungsgemäßen Verfahren erfolgt und die gequollene Haut mechanisch entfernt worden war, eine seifig-viskose bis schleimartige Schicht auf den Samen, Körnern oder Kernen vorlag, die im Verlauf der Trocknung klebrig wurde und zu Anhaftungen der enthüllten Samen, Körner oder Kerne führte. Es wurde gefunden, dass sich die durch eine erfindungsgemäße Aufschlusslösung gequollene Zwischenschicht, die sich auf den Oberflächen von enthüllten pflanzlichen Samen, Körnern oder Kernen befindet, aber auch an den Oberflächen der abgetrennten Hüllmaterialien vorliegen kann, durch einen Spülprozess mit kaltem Wasser sehr einfach entfernt werden kann. Dies war bei freigelegten Zwischenschichten, die nicht mit den erfindungsgemäßen Verfahren erhalten wurden, nicht möglich oder nur durch einen Spülprozess, der mit heißem Wasser durchgeführt wurde. Eine Abspülung der Zwischenschicht kann beispielsweise mit Wasser erfolgen. Bevorzugt ist somit eine Desintegration/Ausschluss von Zwischenschichten/Verbindungsschichten von Hüllen und Schalen des pflanzlichen Ausgangsmaterials auch die Verwendung einer der erfindungsgemäßen wässrigen Lösungen, enthaltend Verbindungen zur Desintegration. Besonders bevorzugt sind gelöste Aminosäuren und/oder Peptide. Es können aber auch wässrige oder alkoholische Lösungen, die andere Verbindungen enthalten, verwandt werden, bevorzugt ist der Zusatz von ionischen und/oder nichtionischen Tensiden. Bevorzugt ist, den Spülvorgang mit einer Vorrichtung zur Reinigung von Gegenständen aus dem Stand der Technik vorzunehmen, wie die Verwendung eines gebündelten Wasser- oder Dampfstrahls oder durch die Einrichtung einer Bewegung des zu reinigenden Pflanzenmaterials, die zu Scherkräften des Reinigungsgutes untereinander und/oder einem mechanischen Bewegungswerkes, wie bei einer Waschmaschine, führen. Überraschenderweise zeigte sich, dass derartig behandelte pflanzliche Samen oder Kerne ein verändertes Trocknungsverhalten aufwiesen. So kam es zu einer rascheren Trocknung, z. B. von Kidney-Bohnen oder Kürbiskernen, wenn die Zwischenschicht mit einem der erfindungsgemäßen Verfahren an-/abgelöst und durch einen Spülprozess vollständig entfernt worden war. Es zeigte sich beispielsweise bei getrockneten Kürbiskernen, dass sich nach einer erfindungsgemäßen Entfernung der Zwischenschicht keine Hautbildung während der Trocknung darstellte. Ferner war die Vereinzelbarkeit erheblich leichter, als wenn eine Desintegration/Ablösung der Zwischenschicht stattgefunden hat.

Bevorzugt ist ein Verfahren zur Desintegration/Anlösung/Ablösung einer Zwischenschicht zwischen pflanzlichem Hüllmaterial und Pflanzensamen, -Körnern und -Kernen.

Bevorzugt ist ein Verfahren zur Desintegration und Aufschluss von pflanzlichem Ausgangsmaterial, bei dem eine Desintegration/Anlösung/Ablösung einer Zwischenschicht zwischen pflanzlichem Hüllmaterial und Pflanzensamen, -Körnern und -Kernen erfolgt.

Überraschenderweise zeigte sich, dass sich mit den erfindungsgemäßen Verfahren auch Anhaftungen und Verbindungsstrukturen von pflanzlichen Samen und Kernen desintegrieren/an- und ablösen lassen. So konnte beispielsweise gezeigt werden, dass sich die Kerne eines Kürbis oder einer Melone, von den sie versorgenden und mechanisch stabilisierenden strang- oder septen-artigen Gewebestrukturen, sehr leicht und rückstandsfrei entfernen ließen, wenn die Samen oder Kerne zusammen mit den anhaftenden Strukturen in einer der erfindungsgemäßen Lösungen eingelegt und desintegriert worden waren. Eine derartig leichte Entfernung von anhaftenden Gewebestrukturen konnten durch eine Behandlung mit Wasser oder wässrigen Lösungen, die beispielsweise Tenside enthielten unter ansonsten vergleichbaren Bedingungen, nicht erreicht werden.

Überraschenderweise weisen Samen, Körner oder Kerne, die mit einem der erfindungsgemäßen Verfahren hergestellt worden sind und eine ausreichend lange Zeit in einer der erfindungsgemäßen Flüssigkeiten, enthaltend kationische Aminosäuren und/oder Peptide, befindlich waren, einen deutlich geminderten oder vollständig beseitigten Eigengeschmack auf. In ergänzenden Untersuchungen konnte ferner gezeigt werden, dass die Reduktion bzw. Elimination eines unangenehmen/adstringierenden Geschmackes abhängig ist von der Dauer der Exposition mit den erfindungsgemäßen Flüssigkeiten zur Desintegration, enthaltend kationische Aminosäuren oder Peptide, bzw. abhängig ist von der Dauer einer Perforation der Hüllschicht(en) der Pflanzen-Samen, -Körner oder - Kerne. Ferner konnte gezeigt werden, dass die Reduktion bzw. Elimination eines arttypischen Eigengeschmackes, der mit einem der erfindungsgemäßen Verfahren behandelten pflanzlichen Samen oder Kerne, in zeitlicher Abfolge nach der Entfernung unangenehmer/adstringierender sensorischer Effekte eintritt. Hierdurch können mit den erfindungsgemäßen Verfahren in überaus vorteilhafter Weise unerwünschte sensorische Effekte und ein Eigengeschmack der behandelten pflanzlichen Samen, Körnern oder Kernen getrennt oder kombiniert mit dem Hüllmaterial eliminiert/entfernt werden. Somit können geschmacksarme oder geschmacklose pflanzliche Samen, Körner oder Kerne, die in ihrer Integrität unbeschadet sind und von einer Hüllschicht vollständig befreit sind, unter produktschonenden Bedingungen hergestellt werden. Es konnte gezeigt werden, dass diese Reduktion von sensorisch wahrnehmbaren Konstituenten der pflanzlichen Samen, Körner oder Kerne, die durch eine Exposition mit den erfindungsgemäßen Desintegrations-Flüssigkeiten, enthaltend kationische Aminosäuren oder Peptide, einen erheblichen Effekt auf die aus den behandelten pflanzlichen Samen, Körnern oder Kernen gewinnbaren Produkte hat. So konnte beispielsweise gezeigt werden, dass die Konstituenten, die in weiteren Aufschlussverfahren in separaten Fraktionen gewonnen werden können, vollständig oder praktisch frei sind von Geruchs- und Geschmacksstoffen, die einen arttypischen oder unangenehmen oder adstringierenden sensorischen Effekt auslösen. Dies ist besonders vorteilhaft für die hierbei gewinnbaren Stärke- und Proteinfraktionen.

Bevorzugt ist ein Verfahren zur Desintegration/Abtrennung/Separation von pflanzlichen Hüllmaterialien und zum Erhalt eines geruchs- und/oder geschmacksarmen oder geruch- und/oder geschmackfreien separierten Hüllmaterials und/oder Pflanzenproduktes.

Bevorzugt ist ein Verfahren zur Desintegration und Aufschluss von pflanzlichem Ausgangsmaterial, bei dem die Desintegrationslösung Aminosäuren und/oder Peptide enthält.

Weitere vorteilhafte Effekte der Verfahrensausführungen ergeben sich für die erhaltbaren separierten Hüllstoffe. Überraschenderweise hat sich gezeigt, dass separierte Hüllstoffe erhalten werden können, die praktisch frei oder annähernd frei sind von einem unangenehmen Geschmack oder adstringierenden sensorischen Effekten. Darüber hinaus sind die verfahrensgemäß desintegrierten pflanzlichen Hüllenmaterialien maximal gequollen und leicht in eine beliebige Form formbar. So können sie beispielweise zu einer Platte geformt und/oder gepresst werden und sind bruchfrei zuschneidbar. Es hat sich gezeigt, dass sich beispielsweise aus derart gewonnenen Hüllen dünne Streifen oder andere geometrische Formen ausscheiden lassen, insbesondere da sich die Hüllen planeben verformen lassen, ohne zu zerbrechen. Durch diesen Effekt lassen sich die erhaltbaren und noch gequollenen Hüllen zusammenpressen, unter Ausbildung z. B. von Platten oder Folien. Weiterhin vorteilhaft ist, dass die abgetrennten Hüllen, die gemäß einem der erfindungsgemäßen desintegrativen Verfahren erhalten werden, frei oder praktisch frei sind von einem unangenehmen Geschmack oder Stoffe freigeben, die eine adstringierende sensorisch Wahrnehmung auslösen. Daher lassen sich die erhaltenen Hüllen auch für eine Lebensmittelzubereitung verwenden. Insbesondere sind Fasern, die sich auch aus derartig hergestellten Hüllen erhalten lassen, besonders gut geeignet für die Texturierung von Lebensmitteln und Speisezubereitungen. Darüber hinaus erhalten die erhaltbaren desintegrierten Hüllmaterialien eine verbesserte Quellbarkeit im Vergleich zu Hüllmaterial, das mit anderen Techniken gewonnen wurde. Somit sind die erfindungsgemäßen Verfahren in besonders vorteilhafter Weise geeignet, um geschmacksarme oder geschmacksneutrale Texturen von Faserstoffen mit einer guten Verarbeitbarkeit und einem guten Quellvermögen herzustellen. Durch die erfindungsgemäßen Verfahrensausführungen können somit Hüllmaterialpräparation hergestellt werden, die sich in verschiedenen Anwendungsbereichen, z. B. für die Texturierung von Speisen, einsetzen lassen. Dabei bedeutet der Begriff Hüllmaterialpräparation, einen Zusammenschluss/Verbund/Textur von desintegrierten Hüllmaterialien, die durch eine erfindungsgemäße Desintegration formbar gemacht wurden.

Bevorzugt ist ein Verfahren zur Herstellung Texturen von pflanzlichem Hüllmaterial, das geschmacksarm oder geschmacksneutral ist und/oder sich zu planaren und zuschneid- oder konfektionierbaren Platten oder Folien zusammenfügen lässt und/oder gut quellbar ist.

Bevorzugt ist ein Verfahren zur Desintegration und Aufschluss von pflanzlichem Ausgangsmaterial, zur Herstellung von Faserprodukten, aus pflanzlichen Hüllmaterialien.

Bevorzugt ist ein Verfahren zur Desintegration und Aufschluss von pflanzlichem Ausgangsmaterial, zur Herstellung einer pflanzlichen Hüllmaterialpräparation.

Bevorzugt ist ein Verfahren zur Desintegration und Aufschluss von pflanzlichem Ausgangsmaterial, bei dem bei dem eine produktschonende Desintegration/Perforation oder Ablösung von Hüllmaterial pflanzlicher Samen, Körner oder Kerne erfolgt.

Überraschenderweise hat sich gezeigt, dass mit einem der erfindungsgemäßen Desintegrationsverfahren auch kompaktiertes pflanzliches Hüllmaterial aufgeschlossen und die Bestandteile des Hüllmaterials gewinnbar gemacht werden können. Es wurde gefunden, dass pflanzliche Hüllen, die in einer der erfindungsgemäßen wässrigen Lösungen über einen längeren Zeitraum eingelegt waren, quollen und sich schichtweise cellulose-basierte Fasern austragen ließen. Es wurde weiterhin gefunden, dass die pflanzlichen Hüllen sich schnell und vollständig auflösen, wenn sie in einer der erfindungsgemäßen Lösungen in einem Autoklaven bei geeigneten Temperatur- und Druckbedingungen behandelt wurden. Die anschließend erhaltene Masse bestand dann überwiegend aus aufgeschlossenen cellulose-basierten Fasern, die sich mit Wasser von hierin enthaltenen Proteinen und löslichen Kohlenhydratverbindungen leicht aufreinigen ließ, unter Verwendung filtrativer Techniken. Dabei wiesen die cellulose-basierten Fasern der aufgelösten Hüllstoffe z. T. deutlich andere Eigenschaften auf, als die cellulose-basierten Fasern der Körner oder Kerne, die sie zuvor als Hüllmaterial umschlossen wurden und mit dem vorbeschriebenen wässrigen Aufschlussverfahren behandelt worden waren. Die aus einer Desintegration und Aufschluss des Hüllmaterials erhaltbaren cellulose-basierten Fasern unterschieden sich beispielsweise in der Größe und Form. So lag bei den cellulose-basierten Fasern, die aus dem Aufschluss des Hüllmaterials gewonnen worden waren, ein größeres Aspektverhältnis der Längs- /Querdimensionen vor, als bei einer Desintegration und Aufschluss der übrigen Konstituenten der Samen, Körner oder Kerne. Es wird angenommen, dass diese Unterschiede auch zu den unterschiedlichen sensorischen Wahrnehmungen, die für die cellulose-basierten Fasern der Samen, Körner oder Kerne und für die des korrespondierenden aufgeschlossenen Hüllmaterials gefunden wurden, verantwortlich sind. Ferner hatten cellulose-basierte Fasern, erhaltbar aus Hüllmaterialien, andere funktionelle Eigenschaften, als die cellulose-basierten Fasern, die erhalten wurden aus einer Desintegration/ Aufschluss von pflanzlichen Samen, Körnern oder Kernen. So konnten beispielsweise stark pigmentierte cellulose-basierte Fasern aus dem aufgeschlossenen Hüllmaterial von Kidneybohnen gewonnen werden. Ferner wiesen beispielsweise die desintegrierten und aufgeschlossenen Schalen von getrockneten Mandeln und Avokadokernen ein besonders zartes Schmelzgefühl bei der Verkostung

auf. Darüber hinaus zeigt sich bei der Herstellung von Teigen und Speisezubereitungen, dass derartige cellulose-basierte Fasern bessere Emulgierungs- und Stabilisierungseigenschaften als Cellulosefasern aufweisen.

Bevorzugt ist ein Verfahren zur Gewinnung von cellulose-basierten Fasern aus Hüllmaterial pflanzlicher Samen, Körner oder Kerne.

Ferner konnte gezeigt werden, dass Carbonate und Sulfite geeignet sind, eine Desintegration von cellulose-basierten Fasern zu bewerkstelligen. Sofern basische Verbindungen zur Desintegration bei pflanzlichen Ausgangsmaterialien eingesetzt wurden, die neben cellulose-basierten Fasern und/oder lignin-reichen Schalen auch Proteine, sowie lösliche Kohlenhydrate enthielten, kam es zu einer intensiven Braunfärbung der Lösungen und des aufgeschlossenen Pflanzenmaterials, was unerwünscht ist. Überraschenderweise wurde gefunden, dass wenn bereits ein Aufschluss des Ausgangsmaterials erfolgt ist und insbesondere, wenn bereits eine Separation von gelösten oder löslichen Proteinen und Kohlenhydraten stattgefunden hat, eine Verfärbung, die zu einer Qualitätsminderung cellulose-basierter Fasern führt, nicht stattfindet, wenn Carbonate oder Sulfite in dem wässrigen Aufschlussmedium enthalten sind. So konnte beispielsweise bei einer Desintegration von Soja-Schrot, die mit einer 1Gew%igen Harnstofflösung, die Arginin in einer 0,05molaren Konzentration enthielt, eine vollständige Desintegration des Hüllmaterials nach einer Erhitzung auf 90°C für 60 Minuten erreicht werden. Dabei wurde auch ein Aufschluss erreicht, der eine nahezu vollständige Separation von löslichen Proteinen und Kohlenhydraten ermöglichte, die mit der Prozessflüssigkeit abfiltriert wurden. Die enthaltene optisch helle Fasermasse war geschmack- und geruchsfrei und enthielt Fasern, die zu 38 Gew% (TM) kleiner 100µm, zu 82 Gew% (TM) < 250 und zu 18 Gew% (TM) > 250µm waren. Die Fasermasse wurde mit einer 0,5Gew%igen Natrium-Carbonat- Lösung bei 80°C über 20 Minuten weiter desintegriert, wobei es jeweils nicht zu einer Verfärbung der Prozessflüssigkeit oder der cellulose-basierten Fasern kam. Die erhaltenen cellulose-basierten Fasern waren anschließend sensorisch weicher, als vor der weiteren Desintegration und waren zu 65 Gew% (TM) < 100µm, zu 98 Gew% (TM) < 250µm. Die Fasermassen hatten bei der Verkostung ein exzellentes Mundgefühl, das als cremig und sahnig beschrieben wurde. Daher ist erfindungsgemäß auch ein zweizeitiges Desintegrations-/Aufschlussverfahren durchzuführen, bei dem zuerst eine Desintegration /Aufschluss von Schalen-/Hüllmaterial mit einer Separation gelöster löslicher Konstituenten des Ausgangsmaterials erfolgt und anschließend eine Desintegration von cellulose-basierten Fasern und/oder lignin-reichen Schalen stattfindet. Überraschenderweise wurde gefunden, dass Lösungen, enthaltend Sulfite ebenfalls geeignet sind, um eine Desintegration von cellulose-basierten Fasern zu bewirken. So konnte gezeigt werden, dass Treber, der nach dem fermentativen Aufschluss nur noch geringe Mengen an löslichen Proteinen und Kohlenhydraten enthielt und in einer 1 Gew%-igen wässrigen Natriumsulfit-Lösung bei 85°C über 90 Minuten desintegriert wurde, sich mittels einer Kolloidmühle zu einer Suspension cellulose-basierter Fasern verteilen ließ. Die erhaltenen cellulose-basierten Fasern waren sensorisch sehr weich und zu 78 Gew% (TM) < 100µm, zu > 95 Gew% (TM) < 250µm.

Bevorzugt ist ein Verfahren zur Gewinnung von cellulose-basierten Fasern aus Hüllmaterial pflanzlicher Samen, Körner oder Kerne.

Ferner wurde gefunden, dass sich durch die erfindungsgemäßen Desintegrations-/Aufschlussverbindungen auch aroma- und/oder farbstoff-freie cellulose-basierte Fasern herstellen lassen. So konnte für Zuckerrübenschnitzel nach der Melasse-Extraktion, die nur einen geringen Restgehalt an löslichen Kohlenhydraten aufwiesen, eine Desintegration, die mit einer 1 %igen Natriumbisulfit-Lösung oder einer 2%igen Natrium-Hydrogencarbonat-Lösung bei 90°C über 90 Minuten durchgeführt wurden, vorgenommen werden und bei der die desintegrierte Schnitzelmasse mittels eines Schermischer behandelt wurde, unter Erhalt einer Suspension cellulose-basierter Fasern. Die erhaltenen Fasermassen hatten allerdings noch einen stark erdigen Geruch und Geschmack und waren somit zum Verzehr nicht geeignet. Durch einen weiteren Aufschluss mit Lösungen der erfindungsgemäßen Aminosäuren und/oder Peptide, in die die entwässerten Fasermassen für 60 Minuten bei 50°C eingelegt wurden, waren nach Entwässerung und erneuter Spülung der Fasermassen, die cellulose-basierten Fasern geruch- und geschmacksfrei und wurden bei der sensorischen Prüfung als sehr weich und cremig bewertet. Ferner zeigte sich bei der Siebanalyse, dass die cellulose-basierten Fasern zu 80 bzw. 85 Gew% (TM) < 100µm und zu > 94 bzw. 96 Gew% (TM) < 250µm waren.

In weitergehenden Untersuchungen zur Verwendung von cellulose-basierten Fasern, hat sich gezeigt, dass sehr gute sensorische (z. B. Cremigkeit) und funktionelle Qualitäten, wie z. B. das Quellvolumen, insbesondere dann erreicht werden, wenn eine Desintegration und ein Aufschluss von löslichen Konstituenten des Ausgangsmaterials stattgefunden hat, mit einem geringen Restgehalt an löslichen Kohlenhydraten und Proteinen sowie anderen löslichen organischen Verbindungen in den erhaltenen cellulose-basierten Fasern. Daher ist ein Verfahren zur Desintegration und Aufschluss von Pflanzenmaterial bevorzugt, das einen Restgehalt an leicht wasserlöslichen organischen Verbindungen in cellulose-basierten Fasern von vorzugsweise < 5 Gew%, mehr bevorzugt < 2,5 Gew% und weiter bevorzugt von < 1,0 Gew% gewährleistet.

Bevorzugt ist ein Verfahren zur Desintegration cellulose-basierter Fasern und Aufschluss und Separation von hierin enthaltenen löslichen Konstituenten.

Bevorzugt ist ein Verfahren zur Desintegration cellulose-basierter Fasern und Aufschluss und Separation von hierin enthaltenen löslichen Konstituenten, bei dem geruch- und/oder geschmacksfreie cellulose-basierte Fasern erhalten werden, mit einem Restgehalt von < 5 Gew% an leicht wasserlöslichen organischen Verbindungen.

Bevorzugt ist ein erfindungsgemäßes Verfahren, wobei die leicht wasserlöslichen organischen Verbindungen eine Wasserlöslichkeit von >100 g/L bei 20°C, bevorzugt von >140 g/L bei 20°C und die schlecht wasserlöslichen organischen Verbindungen eine Wasserlöslichkeit von <100 g/L bei 20°C, bevorzugt von <75 g/L bei 20°C besitzen.

Bevorzugt ist ein Verfahren zur Desintegration cellulose-basierter Fasern und Aufschluss und Separation von hierin enthaltenen löslichen Konstituenten, unter Erhalt von geruch- und/oder geschmacksfreie cellulose-basierte Fasern, mit einem Restgehalt von < 5 Gew% an leicht wasserlöslichen organischen Verbindungen, bei dem die wässrige Desintegrationslösung(en) Sulfite und/oder Carbonate enthält.

Es wurde ferner gefunden, dass die sensorischen und funktionellen Eigenschaften der cellulose-basierten Fasern dann vorliegen, wenn eine Dekompaktierung durch das Desintegrations-/Aufschlussverfahren erfolgt ist und die Dekompaktierung verbunden ist mit der Separation löslicher Konstituenten, die mit den cellulose-basierten Fasern komplexiert waren. Eine entsprechende Dekompaktierung wurde auch für die nach einem erfindungsgemäßen Verfahren erhältlichen lignin-reichen Schalen gefunden.

Bevorzugt ist ein Verfahren zur Desintegration und Aufschluss von pflanzlichem Ausgangsmaterial, bei dem eine Dekompaktierung von cellulose-basierten Fasern und/oder lignin-reichen Schalen hergestellt wird.

Ferner zeigte sich überraschenderweise, dass auch kompaktiertes und ligninhaltiges Hüllmaterial mit einem der erfindungsgemäßen Verfahren desintegriert und aufgeschlossen und die herauslösbaren cellulose-basierten Fasern gewinnbar gemacht werden können. Es wurde gefunden, dass die Hinzugabe von Additiven geeignet ist, ligninhaltige Strukturen, die einen Aufschluss von cellulose-basierten Fasern behindern, zu desintegrieren und/oder aufzuspalten oder sogar vollständig aufzulösen. Dabei erwiesen sich die Kombination aus den erfindungsgemäßen wässrigen Lösungen, enthaltend gelöste Aminosäuren und/oder Peptide, zusammen mit den erfindungsgemäßen Aufschlussadditiven als entscheidend für eine Gewinnbarkeit der cellulose-basierten Fasern in ligninhaltigen pflanzlichen Hüllmaterialien sowie der Auflösung von Ligninpolymeren unter schonenden Produktbedingungen. Dabei kann eine Desintegration von Ligninpolymerstrukturen bereits bei einer moderaten Temperaturerhöhung auf 60 - 80°C durchgeführt werden. Es hat sich gezeigt, dass es unter Verwendung eines erhöhten Drucks bei Temperaturen zwischen 90 und 140°C die Desintegration /der Aufschluss erheblich beschleunigt werden kann, insbesondere bei einer gleichzeitigen Druckbeaufschlagung, wie dies in einem Autoklaven möglich ist. Die cellulose-basierten Fasern bleiben dabei strukturell erhalten und weisen eine besonders geringe sensorisch wahrnehmbare Härte auf. Ferner wurde gefunden, dass diese Fasern ein besonders niedriges Faserlängengewicht von < 50mg/100m aufweisen. Diese cellulose-basierten Fasern weisen auch sehr gute sensorische Eigenschaften auf, wie ein zart schmelzendes Mundgefühl. Überraschenderweise ließen sich mit einer solchen desintegrativen Verfahrenstechnik cellulose-basierte Fasern beispielsweise auch aus dem Fasermaterial von Kokosnüssen sowie aus Orangenschalen gewinnen. Als geeignete Additive für eine Lösung und/oder Auflösung von Lignin- oder lininhaltige Polymerstrukturen, die zusammen oder in sequentieller Abfolge mit den erfindungsgemäßen wässrigen Lösungen hierfür geeignet sind und einzeln oder in Kombination miteinander zu Einsatz kommen können, sind vorzugsweise Sulfit-Verbindungen, wie Natrium-Sulfit oder Natrium-Bisulfit, ferner Sulfatverbindungen, wie $NaSO_4$, ferner Harnstoff und Harnstoffderivate, wie Thiourea, ferner Detergentien, wie Natrium Laurysulfat oder DDT, ferner Carbonate, wie Natrium-Carbonat.

Bevorzugt ist ein Verfahren zur Desintegration /Aufschluss von lignin-haltigen Strukturen und Gewinnung von lignin-basierten Schalenanteilen und cellulose-basierten Fasern.

Bevorzugt ist ein Verfahren zur Auflösung von pflanzlichem Hüllmaterial.

Bevorzug ist ligninhaltiges Hüllmaterial erhältlich nach einem Verfahren zur Desintegration und Aufschluss von pflanzlichem Ausgangsmaterial.

Überraschenderweise wurde gefunden, dass pflanzliche cellulose-basierte Fasern, aus verschiedenen Pflanzenerzeugnissen, die nicht für eine Nahrungszubereitung geeignet sind sowie aus pflanzlichen Abfallstoffen extrahiert und aufgereinigt werden können sowie mit den erfindungsgemäßen Verfahren gewonnen und als geruchs- und geschmacks-neutrale cellulose-basierte Faserstoffe bereitgestellt werden können, die hervorragende funktionelle Eigenschaften für die Herstellung von Nahrungszubereitungen aufweisen und gleichzeitig positive stuhlregulatorische Eigenschaften bewirken. Es ist daher auch die Aufgabe der Erfindung Verfahren und Methoden für die Gewinnung von sowie die Bereitstellung von funktionellen bzw. funktionalisierbaren cellulose-basierten Fasern bereit zu stellen.

So konnte gezeigt werden, dass durch die Verwendung von cellulose-basierten Fasern zur Herstellung mehl- und/oder stärkehaltiger Speisen, Mehl bzw. Stärke in der gleichen Größenordnung eingespart werden kann, wie die Zugabemenge der cellulose-basierten Fasern, ohne Beeinträchtigung des quantitativen oder qualitativen Backergebnisses. Bei cellulose-basierten Fasern, die mit einem Treibmittel, wie Hefe oder Natrium-Hydrogencarbonat, an ihren inneren Oberflächen beschichtet wurden, konnte eine Vergrößerung des Backvolumens und eine gleichmäßigere Verteilung der gebildeten Luftkammern gegenüber einer Originalrezeptur bewirkt werden. Gleichzeitig hatte das Backgut mit cellulose-basierten Fasern eine höhere Druckstabilität und bewirkte gegenüber der Referenzrezeptur eine besseres Mundgefühl und harmonischeren Geschmackseindruck.

Ferner konnte gezeigt werden, dass cellulose-basierte Fasern als Fett-Ersatzstoff bei Nahrungszubereitungen eingesetzt werden können. Dabei können beispielweise durch einen Ersatz von 50 Gew% eines Öls oder Fettes durch die

erfindungsgemäß hergestellten cellulose-basierten Fasern, ein(e) gleichartige(s) Zubereitungskonsistenz /-volumen und gleichwertige oder bessere sensorische Qualitätsmerkmale erreicht werden, als bei Zubereitungen, die mit einer ansonsten üblichen Menge an Fetten oder Ölen hergestellt worden sind.

Ferner wurde überraschenderweise gefunden, dass mit einem der erfindungsgemäßen Verfahren biogene abrasive und nicht-abrasive Scheuer- und Reinigungsmittel hergestellt werden können. Es wurde gefunden, dass ligninhaltige Hüllmaterialien und insbesondere lignin-basierte Schalen durch die erfindungsgemäßen Prozessschritte ganz oder teilweise an-/aufgelöst wurden. Hierdurch entstanden z. T. kleine bis kleinste Partikel, deren Oberflächen mit zunehmender Dauer und Intensität der wässrigen Desintegrations-/Ausschlussverfahren mit Lösungen, enthaltend gelöste Desintegrationsverbindungen, die Rauigkeit zunahm und gleichzeitig die äußeren Konturen sich abrundeten und schließlich nicht mehr scharfkantig waren. Besonders bevorzugte Desintegrationsverbindungen sind hierbei Aminosäuren und/oder Peptide. Durch eine An- und/oder Teilauflösung von lignin-basierten Schalen entstehen an den Oberfläche räumliche Strukturen, die offenbar ein sehr gutes Aufnahmeverhalten für organische und anorganische Partikel aufweisen und eine gute Lösungsvermittlung von Tensiden bewirken. Beim Reinigen von Gefäßen fiel auf, dass die lignin-basierten Schalenanteile, die mit einem der erfindungsgemäßen wässrigen Desintegrations-/Aufschlussverfahren erhalten worden waren, insbesondere in Verbindung mit einem Tensid, eine erheblich verbesserte Reinigungswirkung, insbesondere bei inkrustierten organischen oder anorganischen Anhaftungen, ermöglichen. Im Gegensatz zu Scheuermittel aus dem Stand der Technik kam es allerdings nicht zu Kratzspuren, wenn mit dem erfindungsgemäß desintegrierten und aufgeschlossenen lignin-basierten Schalenmaterial eine Glanzlackoberfläche von Inkrustationen gereinigt wurde. Somit eignen sich die erfindungsgemäßen Verfahren, um aus lignin-basierte Hüllmaterialien abrasive oder nicht-abrasive biogene Scheuermittel herzustellen.

Bevorzugt ist ein Verfahren zur Herstellung von abrasiven und nicht-abrasiven biogenen Scheuermitteln.

Bevorzugt ist die Verwendung von lignin-haltigen Hüllmaterial als abrasives und nicht-abrasives biogenes Scheuermittel.

Überraschenderweise kann mit einem einfach durchzuführenden wässrigen Verfahren sowohl eine Desintegration von pflanzlichen Hüllmaterialien erfolgen, welche eine anschließende technisch einfach durchzuführende vollständige Separation der Hüllmaterialien gewährleistet, aber auch eine Auflösung von Hüllmaterialien ermöglicht, wodurch ein Aufschluss und eine Gewinnbarkeit der soliden Konstituenten des pflanzlichen Hüllmaterials ermöglicht wird. Somit lassen sich bisher nicht oder nur schwer gewinnbare und mit anderen organischen Begleitstoffen verunreinigte pflanzliche Hüllmaterialien in reinen Fraktionen erhalten. Darüber hinaus ermöglicht die Desintegration/der Aufschluss den Erhalt von Grundbestandteilen (Konstituenten) der aufgeschlossenen Hüllmaterialien, die als Wertstoffe genutzt werden können. Somit kann das Verfahren genutzt werden, um Faserprodukte aus pflanzlichem Hüllmaterial durch eine Desintegration/Separation sowie Auflösung des Hüllmaterials herzustellen.

Bevorzugt ist ein Verfahren zur Herstellung von Faserprodukten, erhaltbar durch eine Desintegration und/oder Separation und/oder Auflösung/Aufschluss von pflanzlichen Hüllmaterialien mittels wässriger Lösungen, enthaltend gelöste Verbindungen zur Desintegration/Aufschluss.

Somit kann die Aufgabe der Erfindung gelöst werden durch ein Verfahren zur Herstellung von Faserprodukten, erhaltbar durch eine Desintegration und/oder Separation und/oder Auflösung von pflanzlichen Hüllmaterialien mittels wässriger Lösungen.

## Detaillierte Beschreibung

Das Hüllmaterial pflanzlicher Samen oder Kerne verändert sich strukturell und funktionell nach dem Abschluss der Wachstumsphase. Dabei kommt es u. a. zu einer Schrumpfung und einem irreversiblem Verschluss der wasserführenden kapillaren Strukturen. Ferner kommt es zu einer Verhornung von cellolose-basierten Fasern. Hierdurch sind pflanzliche Samen, Körner und Kerne, die von derartig Hüllschichten umschlossen sind, nicht oder erst nach langer Einwirkzeit durch Wasser quellbar. Ferner entsteht hierdurch eine zumeist sehr robuste Schicht, die das umschlossene pflanzliche Produkt vor einer mechanischen Alteration sehr effektiv schützt. Überraschenderweise sind wässrige Lösungen von gelösten Aminosäuren und Peptiden geeignet, um eine Desintegration der kompaktierten und verhornten pflanzlichen Hüllmaterialien zu bewirken. Weiter überraschend war, dass die Verfahren zur Desintegration auch geeignet sind, das desintegrierte pflanzliche Hüllmaterial weiter in seine Einzelkomponenten aufzuschließen/aufzulösen unter Erhalt reiner Fraktionen solider Feststoffe, sowie in wässriger Lösung vorliegenden gelösten löslichen Verbindungen.

Dieser Effekt war besonders bei der Verwendung von kationischen Aminosäuren sehr ausgeprägt. Daher sind Aminosäuren, die eine oder mehrere kationische Ladungsgruppe(n) aufweisen, oder Peptide, die Aminosäuren, die eine oder mehrere kationische Ladungsgruppen aufweisen, enthalten, besonders bevorzugt. Bevorzugte Aminosäuren sind Arginin, Lysin, Histidin, sowie Derivate dieser.

Bei den erfindungsgemäß einsetzbaren Peptiden kann es sich um Di-, Tri- und/oder Polypeptide handeln. Die erfindungsgemäßen Peptide haben mindestens eine funktionelle Gruppe, die ein Proton bindet oder binden kann. Das bevorzugte Molekulargewicht liegt dabei unter 500kDa, mehr bevorzugt < 250kDa weiter bevorzugt < 100kDa, und

insbesondere bevorzugt < 1.000Da. Die bevorzugten funktionellen Gruppen sind dabei insbesondere eine Guanidin-, Amidin-, Amin-, Amid-, Ammonium-, Hydrazino-, Hydrazono-, Hydroxyimino-oder Nitro-Gruppe. Die Aminosäuren können dabei eine einzige funktionelle Gruppe aufweisen oder mehrere der gleichen Verbindungsklasse oder eine oder mehrere funktionelle Gruppe(n) unterschiedlicher Verbindungsklassen aufweisen. Vorzugsweise weisen die erfindungsgemäßen Aminosäuren und Peptide mindestens eine positive Ladungsgruppe auf, bzw. haben eine positive Gesamtladung. Besonders bevorzugt sind Peptide mit kationischen funktionellen Gruppen. Vorzugsweise stellt sich ein pH der Lösung kationischer Aminosäuren oder Peptide im Bereich von 7 bis 14, mehr bevorzugt zwischen 8 und 13 und weiter bevorzugt zwischen 8,5 und 12,5 ein. In einer Ausführungsform kann der pH durch die Zugabe einer Säure oder einer Base auf einen beliebigen pH-Bereich zwischen 6 und 14 eingestellt werden. Dabei können Säuren und Basen, die im Stand der Technik bekannt sind, verwendet werden, wie beispielsweise Natronlauge oder HCl.

Besonders bevorzugte Peptide enthalten mindestens eine der Aminosäuren Arginin, Lysin, Histidin und Glutamin in einer beliebigen Anzahl und sequentiellen Folge. Besonders bevorzugt sind daher Aminosäuren und/oder Derivate, die mindestens eine Guadinino- und/oder Amidinogruppe enthalten. Als Guanidinogruppe wird der chemische Rest $H_2N$-C(NH)-NH- sowie dessen cyclische Formen bezeichnet und als Amidinogruppe der chemische Rest $H_2N$-C(NH)- sowie dessen cyclische Formen. Bevorzugt sind Guanidinoverbindungen, welche zusätzlich zur Guanidinogruppe mindestens eine Carboxylatgruppe (-COOH) aufweisen. Ferner ist bevorzugt, wenn die Carboxylatgruppe(n) durch mindestens ein Kohlenstoffatom von der Guanidinogruppe im Molekül getrennt ist. Bevorzugt sind auch Amidinoverbindungen, welche zusätzlich zur Amidinogruppe mindestens eine Carboxylatgruppe (-COOH) aufweisen. Ferner ist bevorzugt, wenn die Carboxylatgruppe(n) durch mindestens ein Kohlenstoffatom von der Amidinogruppe im Molekül getrennt ist.

Ferner geeignet sind Di-, Tri- oder Oligipeptide sowie Polypeptide, die aus einer, zwei oder mehreren Aminosäuren zusammengesetzt sind. Bevorzugt sind kurzkettige Peptide, z. B. RDG. Besonders bevorzugt sind Peptide, die aus Aminosäuren bestehen, die sowohl hydrophobe als auch hydrophile Seitengruppen aufweisen, wie beispielsweise (Angaben gemäß Namensalphabt der Aminosäuren) GLK, QHM, KSF, ACG, HML, SPR, EHP oder SFA. Weiter besonders bevorzugt sind Peptide, die sowohl hydrophobe und kationische und/oder anionische Seitengruppen aufweisen, wie beispielsweise RDG, BCAA, NCR, HIS, SPR, EHP oder SFA. Weitere Beispiele mit 4 Aminosäuren sind NCQA, SIHC, DCGA, TSVR, HIMS oder RNIF oder mit 5 Aminosäuren sind HHGQC, STYHK, DCQHR, HHKSS, TSSHH, NSRR. Besonders bevorzugt sind RDG, SKH oder RRC.

Die Anwendung erfolgt in Form wässriger Desintegrations-Lösungen, in denen die erfindungsgemäßen Aminosäuren und/oder Peptide vollständig gelöst vorliegen. Die Konzentration der Aminosäuren und/oder Peptide kann prinzipiell frei gewählt werden, bevorzugt sind Konzentrationen von 10μmol bis 3 mol/l, mehr bevorzugt zwischen 1mmol bis 1 mol/l und weiter bevorzugt zwischen 100μmol bis 0,5 mol/l. Dabei können die erfindungsgemäßen Aminosäuren oder Peptide einzeln oder in beliebiger Kombination in den wässrigen Lösungen vorliegen. Das Volumenverhältnis der wässrigen Phase, enthaltend die gelösten Aminosäuren oder Peptide, im Verhältnis zu den zu behandelnden pflanzlichen Produkten bzw. Hüllmaterialien kann prinzipiell frei gewählt werden, es sollte jedoch eine vollständige Benetzung der Hüllmaterialien, die zu desintegrieren/abzulösen oder aufzulösen sind, gewährleistet werden. Bevorzugt ist es, die zu behandelnden Pflanzenmaterialien vollständig in eine der erfindungsgemäßen Lösungen einzulegen.

Ferner wurde gefunden, dass sich der Vorgang der Desintegration pflanzlicher Hüllen und Schalen durch Desintegrationsadditive, die in den wässrigen Desintegrationslösungen gelöst vorliegen, beschleunigen lässt. Derartige Verbindungen umfassen die folgenden Verbindungen, ohne hierauf beschränkt zu sein, wie beispielsweise: Harnstoff, $NH_3$, Triethylamin, Diethylamin; ionische oder nicht-ionische Tenside, wie SDS oder DMSO; Antioxidantien oder Sulfate sowie Sulfite, wie Natriumsulfit oder Natriumbisulfit, ferner Carbonate, wie Natrium-Carbonat oder Natrium-Hydrogencarbonat. Vorzugsweise werden die Verbindungen in Wasser in einer Konzentration zwischen 0,1 und 30Gew% gelöst, weiter bevorzug in einer Konzentration zwischen 0,5 und 15 Gew% und am meisten bevorzugt ist diese zwischen 1 und 5 Gew%. Die Verbindungen können einzeln oder einer beliebigen Kombination eingesetzt werden.

Der Verfahrensprozess der Desintegration von pflanzlichem Hüllmaterial kann je nach dem zu erzielenden Effekt über verschiedene Parametereinstellungen gesteuert werden. So erfolgen beispielsweise in einer Ausführungsart eine Hydratation des Hüllmaterials und eine Desintegration im Bereich des Keimlings, beispielsweise bei Sojabohnen. Dies ist beispielsweise ausreichend, um eine mechanische Abstreifung der gesamten Hülle mittels einer Quetschvorrichtung vorzunehmen. Hierfür ist beispielweise die Einlage der intakten Bohnen in eine Aufschlusslösung enthaltend Arginin 0,3 molar bei 25°C über 6 Stunden ausreichend. Dies kann geprüft werden, indem sich die Schale durch "Ausdrücken" mit den Fingern vollständig ablösen lässt. In einem anderen Anwendungsfall wurden Walnüsse, die von der Außenschale befreit vorlagen, in eine 0,2molare Lysin-Lösung bei 35°C über 3 Stunden eingelegt. Nach Ablassen der Lösung war eine vollständige Ablösung der Kernhaut mittels einer Wasserstrahlvorrichtung möglich, wobei die erhaltenen Häute weitgehend vollständig und intakt blieben. Die erhaltenen Walnüsse waren zu > 98% enthäutet. Alle Schalen/Häute, die aus den Aufschluss-/Desintegrationsprozessen erhaltenen wurden, waren weich und flexibel. In einer anderen Ausführungsart wurden gehackte Mandeln in eine 100mmolare Histidinlösung für 20 Minuten bei 20°C eingelegt. Anschließend Separation von der Lösung und Trennung der abgelösten Kernhautanteile in einem Hydrozyklon. Es konnte eine >

95%ige Entfernung der Kernhäute erreicht werden. In einer anderen Ausführungsform wurden Kidney-Bohnen enthäutet. Hierzu wurden die Bohnen in einem Autoklaven in einer Lösung aus Polylysin und Histidin eingelegt und bei einer Temperatur von 120°C und einem Druck von 1,2 bar über 3 Minuten behandelt. Anschließend ließen sich die Schalen leicht und vollständig mit 2 Fingern ablösen.

In bevorzugten Verfahrensausführungen kann das Verfahren zur Desintegration von pflanzlichen Hüllmaterialien angewandt werden zur Hydratation einer Hülle/Haut und/oder Auftrennung der Textur von Hüllen und Häuten an präformierten Stellen und/oder Lösen von Zwischenschichten von Hüllmaterialien und/oder Erweichung von Hüllen und Häuten. Entsprechend den verschiedenen Anforderungen und der Unterschiede in den Ausgangsmaterialien, müssen die konkreten Bedingungen in einem Prozess zunächst ermittelt werden. Generell sind allerdings die folgenden Parametereinstellungen bevorzugt:
Die Dauer der Exposition des Pflanzenmaterials gegenüber den erfindungsgemäßen wässrigen Desintegrations-Lösungen ist prinzipiell frei wählbar. Bevorzugt ist eine Expositionsdauer zwischen 5 Minuten und 48 Stunden, mehr bevorzugt zwischen 10 Minuten und 24 Stunden und weiter bevorzugt zwischen 15 Minuten und 12 Stunden. Eine ausreichende Expositionsdauer kann sehr leicht dadurch erkannt werden, indem bei den behandelten Pflanzenprodukten geprüft wird, ob der zu erreichende Effekt, wie beispielsweise die Abstreifbarkeit einer Haut oder Hülse, erreicht ist. Die Temperatur, bei der die Exposition des Pflanzenmaterials gegenüber den wässrigen Desintegrations-Lösungen, enthaltend gelöste Aminosäuren und/oder Peptide und/oder andere gelöste Verbindungen zur Desintegration, erfolgt, kann prinzipiell frei gewählt werden. Vorzugsweise wird jedoch ein Temperaturbereich zwischen 5° und 145°C, mehr bevorzugt ist ein Temperaturbereich zwischen 10° und 140°C und weiter bevorzugt zwischen 15° und 80°C. Die Exposition erfolgt vorzugsweise unter Normaldruckbedingungen. In einer bevorzugten Ausführungsform wird ein erniedrigter oder erhöhter Druck auf das Reaktionsgemisch eingerichtet, dabei ist bevorzugt ein Druck zwischen 0,1bar bis 10 bar, mehr bevorzugt zwischen 0,5 bar und 5 bar und weiter bevorzugt zwischen 0,8 bar und 3 bar. Bevorzugt ist eine gleichzeitige Temperatur- und Druckerhöhung während der Exposition des zu behandelten pflanzlichen Materials mit den erfindungsgemäßen wässrigen Lösungen zur Desintegration. Bevorzugt ist die Durchführung der Exposition des Pflanzenmaterials mit den erfindungsgemäßen wässrigen Desintegrations-Lösungen in einem Autoklaven. Die bevorzugte Behandlungszeit in eine Autoklaven beträgt zwischen 30 Sekunden und 60 Minuten, mehr bevorzugt zwischen 1 Minute und 30 Minuten und weiter bevorzugt zwischen 2 Minuten und 15 Minuten.

In einer bevorzugten Ausführungsform werden die hydratisierten und teilweise oder vollständig desintegrierten Hüllmaterialien einer Vorrichtung zugeführt, die eine Entfernung des Hüllmaterials ermöglicht. Derartige Vorrichtungen sind in großer Zahl im Stand der Technik vorhanden. Bevorzugt sind produktschonende Ausführungsarten, da hierdurch die vorteilhaften Effekte der erfindungsgemäßen produktschonenden Behandlung zur Separation des pflanzlichen Hüllmaterials umgesetzt werden können. Beispielsweise eignen sich hydro-dynamische Verfahren, bei denen durch einen Wasserstrahl Scherkräfte an dem Hüllmaterialansetzen, die zu deren Abtrennung führen. Aber auch mechanische Verfahren können hierbei sehr vorteilhaft sein. In einer besonders bevorzugten Ausführungsform werden die vorbehandelten Samen, Körner oder Kerne nach Größe sortiert und in eine Ausblas-Vorrichtung befördert. Hierbei erfolgen bei einem Eintritt in eine flexible oder starre Röhre/Hülse oder erst während der Transportstrecke hierin, ein Zerreißen des desintegrierten Hüllmaterials und eine Translokation/Separation des Hüllmaterials von dem Samen, Korn oder Kern. Bei einem Austritt aus dem Rohr/Hülse, der unter Druck erfolgen kann, werden die Samen, Körner oder Kerne durch verschiedene anwendbare Verfahren, wie der Ausnutzung der Schwerkraft oder mittels einer Windsichtung, räumlich vom Hüllmaterial separiert. Die Eignung eines desintegrierten pflanzlichen Ausgangsmaterials zur Durchführung einer Abtrennung und Separation des Hüllmaterials kann beispielsweise dadurch festgestellt werden, indem eine Abstreifbarkeit des desintegrierten Hüllmaterials durch ein leichtes Verreiben mit den Handflächen möglich ist.

In einer bevorzugten Ausführungsart erfolgt eine erfindungsgemäße Desintegration pflanzlicher Hüllmaterialien im Anschluss an ein mechanisches Desintegrationsverfahren. Besonders bevorzugt sind Schrote, bei denen eine Entölung erfolgt ist und/oder eine Separation anderer Wertstofffraktionen, wie beispielsweise von Proteinen und/oder Kohlenhydraten erfolgen soll. Es konnte gezeigt werden, dass auch derartige grob bis feinkörnige Pflanzenprodukte sich mit den erfindungsgemäßen Desintegrations-Lösungen von Schalenanteile aufreinigen lassen. Für deren Separation können ebenfalls Wirbelstrom- oder Siebverfahren angewandt werden.

In einer Ausführungsform wird die Hydratisierbarkeit und Ablösbarkeit des pflanzlichen Hüllmaterials durch wässrige Desintegrations-Lösungen, enthaltend gelöste Aminosäuren und/oder Peptide und/oder andere gelöste Verbindungen zur Desintegration, durch die Hinzugabe von Tensiden und/oder Aufschlussmitteln erhöht. In einer Ausführungsform können die wässrigen Lösungen Desintegrations-Hilfsstoffe bzw. -Additive enthalten, wie z.B. Alkohole oder Tenside. Bevorzugte Alkohole sind Methanol, Ethanol. Bevorzugte Tenside sind Harnstoff, Thioharnstoff, Natrium Laurylsulfat und DMSO. Bevorzugte Aufschlussmittel sind Natrium-Bisulfit und Natriumsulfit. Die für die jeweilige Anwendung erforderliche Konzentration muss individuell ermittelt werden.

Bevorzugt ist die Abtrennung/Separation des/der Hüllmaterials/Hüllmaterialien unmittelbar nach Exposition der Pflanzenprodukte mit einer der erfindungsgemäßen wässrigen Desintegrations-Lösungen. Eine Abtrennung/Separation kann aber auch zu einem späteren Zeitpunkt erfolgen. Es hat sich gezeigt, dass wenn eine Desintegration oder Anlösung

des Hüllmaterials mit einem der erfindungsgemäßen Verfahren erfolgt ist, sich auch zwischenzeitlich wieder getrocknete Hüllmaterialien sehr einfach durch eine Anlösung/Quellung in Wasser separieren/abtrennen lassen. Daher lassen sich die erfindungsgemäßen Verfahren auch zur Vorbereitung von Pflanzenprodukten für eine zu einem späteren Zeitpunkt erfolgende erleichterte Abtrennung des Hüllmaterials verwenden. Es wurde gefunden, dass bereits hierdurch das vorbehandelte Hüllmaterial teilweise oder vollständig geruch- und/oder geschmack-frei wird. In einer Ausführungsart wird ein erfindungsgemäßes Verfahren daher auch zur Geschmacksneutralisierung/Entbitterung von Hüllmaterialien mit oder ohne eine gleichzeitige Desintegration/Ablösung der Hüllprodukte eingesetzt. Die Dauer der hierfür erforderlichen Exposition sowie die Temperatur und die Druckbedingungen müssen individuell ermittelt werden.

In einer weiteren bevorzugten Ausführungsart des Verfahrens werden die von pflanzlichen Ausgangsmaterialien desintegrierten und separierten Hüllmaterialien und/oder mechanisch von dem pflanzlichen Ausgangsprodukt separierte Hüllmaterialien in eine oder konsekutiv mehrere Desintegrations-Lösungen mit gelösten Aminosäuren und/oder Peptiden und/oder andere Verbindungen zur Desintegration eingelegt. Vorteilshafterweise wird hiermit ein Desintegrationsprozess fortgesetzt oder initiiert, wobei eine allseitige Benetzung des Hüllmaterials stattfinden kann. Hierdurch lässt sich beispielweise eine Erweichung zuvor spröder und leicht zerbrechlicher Hüllmaterialien herstellen, wodurch diese desintegrierten Hüllmaterialien eine sehr hohe Flexibilität aufweisen und nicht mehr brechen. Die hierfür bevorzugte Form der Desintegrierung erfolgt durch eine Langzeiteinlage in eine der erfindungsgemäßen wässrigen Lösungen. Bevorzugt ist eine Dauer zwischen 15 Minuten und 30 Tagen, mehr bevorzugt zwischen 60 Minuten und 14 Tagen und weiter bevorzugt zwischen 10 Stunden und 7 Tagen. Die Konzentrationen der gelösten Aminosäuren und/oder Peptide ist entsprechend auszulegen, als Orientierung können die oben angegebenen Werte verwandt werden. Bevorzugt ist die Desintegration bei Raumtemperatur durchzuführen. Der pH ist erfindungsgemäß zwischen 6,5 und 13 einzustellen, mehr bevorzugt zwischen 7 und 12 und weiter bevorzugt zwischen 8 und 12,5. In einer weiteren bevorzugten Ausführungsart erfolgt die Konditionierung/Erweichung von pflanzlichem Hüllmaterial durch eine Kurzzeitbehandlung in einem Autoklaven. Es wurde gefunden, dass die Erweichung des separierten Hüllmateriale auch bei erhöhter Temperatur und erhöhtem Druck bei einer kurzen Expositionsdauer erfolgen kann. Bevorzugt ist ein Temperaturbereich von 80 bis 140°C, weiter bevorzugt zwischen 90 und 130°C und weiter bevorzugt zwischen 100° und 121°c. Der bevorzugte Druck liegt zwischen 0,5 bis 10 bar, mehr bevorzugt zwischen 0,8 und 5 bar und weiter bevorzugt zwischen 1,0 und 2 bar. Die Expositionsdauer ist vorzugsweise zwischen 20 Sekunden und 10 Minuten, mehr bevorzugt zwischen 30 Sekunden und 8 Minuten und weiter bevorzugt zwischen 40 Sekunden und 3 Minuten. Es ist bevorzugt die mit den genannten Verfahrensausführungen desintegrierten und erweichten Hüllmaterialien einer ausgiebigen Spülung in Wasser zu unterziehen. Derartig desintegrierte Hüllmaterialien lösen sich nicht weiter, bei einer Belassung in einem neutraten Wasser. Hierin können sie über einen langen Zeitraum, der länger als 6 Monate beträgt, in einem unveränderten Zustand gelagert werden. Sie können aber auch getrocknet und gelagert werden. Bevorzugt ist die Herstellung eines Verbundes/Textur aus den einzelnen Hüllmaterialbestandteilen herzustellen. Dies erfolgt vorteilhafterweise durch eine Pressung der Hüllmaterialien, z.B. auf einer Siebpress-Vorrichtung, wodurch beispielsweise geformte Platten hergestellt werden können. Diese Presslinge können beispielsweise in einem Trocknungsschrank getrocknet werden. Die erhaltbaren komprimierten Hüllmaterial-Verbundplatten zeichnen sich durch ihre enorme Quellbarkeit bei einer Einlage in Wasser aus, die vorzugsweise > 200 Gew%, mehr bevorzugt > 300 Gew% und weiter bevorzugt > 400 Gew% beträgt. Vorzugsweise erfolgt bei der Prozesssierung zum Erhalt desintegrierter formbarer Hüllmaterialien, in einem oder mehreren zusätzlichen oder gleichzeitig erfolgenden Verfahren, auch eine Konditionierung und/oder Funktionalisierung des desintegrierten Hüllmaterials, mit einem der zuvor oder im Folgenden beschriebenen Verfahren. Vorteilhafterweise wurden auch und insbesondere mit diesem Verfahren desintegrierte erweichte/flexible pflanzliche Hüllmaterialien hergestellt, die vollständig oder annähernd vollständig geruchs- und/oder geschmacksfrei sind. Annähernd bedeutet dabei > 98%. Anders ausgedrückt ist eine zu mehr als 98%ige Reduktion der zuvor vorhandenen Geruchs- und/oder Geschmacksstoffe erfolgt. Ferner geben desintegrierte und erweichte Hüllmaterialien keine oder annähernd keine Farbstoffe an ein wässriges Medium ab. So konnte in einer Anwendung gezeigt werden, dass das Hüllmaterial von Knoblauch zu einer geschmacksneutralen hoch-flexible Platte formiert werden konnte.

Ferner können den erfindungsgemäßen wässrigen Desintegrations-Lösungen, enthaltend gelöste Aminosäuren und/oder Peptide, Additive hinzugegeben werden, wodurch weitere besonders vorteilhafte Effekte erzielt werden, die beispielsweise eine Konditionierung und/oder Funktionalisierung und/oder Verstärkung der Desintegration des pflanzlichen Hüllmaterials bedingen oder fördern. In einer Ausführungsform werden Carbonsäuren in den wässrigen Lösungen, enthaltend kationische Aminosäuren und/oder Peptide, vollständig gelöst. Dies ist deshalb besonders vorteilhaft, da sich Carbonsäuren durch die kationischen Verbindungen in einem wässrigen Medium zur vollständigen Lösung bringen lassen, unter Ausbildung von Nanoemulsionen. Dies ermöglicht in besonders vorteilhafter Weise in vielen Anwendungen eine Verkürzung der Einwirkdauer, bis zum Erreichen einer Ablösung von pflanzlichem Hüllmaterial. Ferner lassen sich die Hüllmaterialien während des durch die erfindungsgemäßen wässrigen Lösungen eingeleiteten Hydratationsprozess mit den gelösten Carbonsäuren beladen bzw. in die hydrierte cellulose-basierten Fasern in vorteilhafter Weise ein- und/oder aufbringen. Hierdurch lassen sich zum einen Hüllmaterialien mit veränderten Oberflächeneigenschaften herstellen, die beispielswiese hydrophobe Eigenschaften oder eine anti-mikrobielle Funktionalität aufweisen. Zum

anderen können bei einer Desintegration/Auflösung der Hüllmaterialien cellulose-basierte Fasern hergestellt werden, die mit Carbonsäuren, wie beispielsweise Omega-3-Fettsäuren, beladen sind. Bevorzugte Carbonsäuren, die in den erfindungsgemäßen wässrigen Lösungen gelöst werden sind Fettsäuren, wie beispielsweise einfach oder mehrfach ungesättigte Fettsäuren, wie die Ölsäure oder die Linolensäure, ferner organische Säuren, wie Essigsäure oder Ascorbinsäure. Die bevorzugte Konzentration der Carbonsäuren kann dabei zwischen 1μmol und 3 mol/l, mehr bevorzugt zwischen 1mmol bis 1 mol/l und weiter bevorzugt zwischen 100μmol bis 0,5 mol/l betragen. Vorzugsweise sind die Carbonsäuren in den erfindungsgemäßen wässrigen Desintegrations-Lösungen vollständig gelöst. Die Gesamtmenge der Carbonsäuren ist daher begrenzend auf die Anzahl und Konzentration der kationischen Verbindungen, die sich in dem Lösungsgemisch befinden und eine Lösung der Carbonsäuren ermöglichen.

Den wässrigen Desintegrations-Lösungen können auch weitere Verbindungen hinzugegeben werden. In einer bevorzugten Ausführungsform werden als Additive ionische oder nicht-ionische Tenside hinzugegeben. Dies ist besonders vorteilhaft bei der Gewinnung von Cellulose-basierten Fasern aus Hüllmaterialien, die einen deutlichen Anteil an Fetten bzw. Wachsen aufweisen. Weiterhin bevorzugt ist die Verwendung von Harnstoff oder Kreatin als Additiv. In einer Ausführungsform werden Additive verwandt, um einen besseren/vollständigeren Aufschluss der cellulose-basierten Fasern aus der organischen Matrix zu bewirken.

In einer weiteren Verfahrensausführung erfolgen neben einer Desintegration auch ein Aufschluss und eine Separation der Bestandteile (Konstituenten) des pflanzlichen Hüllmaterials.

In einer bevorzugten Verfahrensausführung erfolgt ein Aufschluss/Auflösung von Lignin und/oder ligninhaltigen Polymerstrukturen sowie von verhornten cellulose-basierten Fasern durch eine Kombination von Verbindungen zur Desintegration in Form einer wässrigen Lösung oder einer sequentiellen Abfolge wässriger Lösungen mit einem oder mehreren Desintegrations-Additiv(en). Besonders bevorzugt sind Natriumsulfit, Natrium Bisulfit, Harnstoff, Thioharnstoff, Natrium Laurylsulfat und DMSO sowie Carbonate, wie Natriumhydrogencarbonat. Die Konzentration der DesintegrationsAdditive in einer wässrigen Lösung, in der sie vorzugsweise in gelöster Form vorliegen, beträgt dabei vorzugsweise zwischen 50μmol und 3 mol/l, mehr bevorzugt zwischen 1mmol und 2 mol/l und weiter bevorzugt zwischen 200mmol und 1 mol/l. Die Verbindungen, bzw. wässrigen Lösungen können zusammen mit den erfindungsgemäßen gelösten Aminosäuren und/oder Peptiden eingesetzt werden oder in zeitlicher Abfolge. Bevorzugt ist ein Aufschlussverfahren, bei dem die gelösten Aminosäuren und/oder Peptide zusammen mit den Additiven verwandt werden. Die bevorzugte Temperatur, bei der ein Aufschluss von Lignin und/oder ligninhaltiger Polymerstrukturen erfolgt, ist vorzugsweise zwischen 40° und 140°C auszuwählen, mehr bevorzugt zwischen 60° und 130°C und weiter bevorzugt zwischen 80° und 120°C. Bevorzugt ist die gleichzeitige Anlage eines Druckes auf das Reaktionsgemisch. Bevorzugt ist ein Überdruck von 0,5 bis 10 bar, weiter bevorzugt von 0,8 bis 8 bar und weiter bevorzugt von 1 bis 6 bar. Die Expositionsdauer des Ausgangsmaterials mit den wässrigen Lösungen muss individuell ermittelt werden, da der Vernetzungsgrad der Ligninpolymere und der Grad der Verhornung der cellulose-basierten Fasern in den Ausgangsmaterialien sehr stark variieren kann. Die ausreichende Expositionsdauer lässt sich sehr leicht durch eine Probenentnahme aus dem Reaktionsgefäß bestimmen. Eine ausreichende Expositionsdauer liegt insbesondere dann vor, wenn dunkelbraune bis schwarze Strukturen der pflanzlichen Hüllmaterialien nicht oder nur noch zu einem geringen Anteil bestehen bzw. in kleinste Partikel zerfallen sind. Ferner ist die Expositionsdauer ausreichend, wenn in einer mikroskopischen Analyse keine zusammenhängenden Faserstrukturen mehr zu erkennen sind.

Es wurde gefunden, dass lignin-basiertes Hüllmaterial durch Anwendung der erfindungsgemäßen Verfahren desintegriert wird und in Form beispielsweise einer intakten Schale/Hülle oder Schalenfragmenten gewonnen werden kann. Ligninhaltige Schalenmaterialien liegen beispielsweise bei Saaten bzw. Körnern von Jatropha, Raps, Sonnenblumen oder Kernen von Äpfeln und Birnen vor. Das pflanzliche Hüllmaterial kann hierbei in einem intakten oder einem teilweise oder vollständig mechanisch oder thermisch desintegriertem Zustand vorliegen, wie beispielsweise nach einer Extraktion einer Ölfraktion oder in Form eines Tresters nach einer Entsaftung. Die erfindungsgemäßen Verfahren dienen hierbei der Gewinnung von noch erhaltbaren Wertstofffraktionen.

In einer anderen Verfahrensausführung wurden die Pressrückständen von Pflanzensaaten, wie beispielsweise der Presskuchen von Raps oder Jatropha, die u. a. aus einem wässrigen Aufschlussverfahren erhalten worden waren, mit den erfindungsgemäßen Lösungen beaufschlagt, indem sie hiermit durchtränkt wurden. Durchtränken bedeutet dabei vollständig durchfeuchtet, aber nicht nass. Nach 4 Stunden erfolge eine Verteilung der soliden Konstituenten in Wasser mit einem Mischer. Die soliden Anteile wurden mittels eines Filters abgetrennt und einer weiteren Verfahrensstufe mit den wässrigen Aufschlussgemischen zugeführt. In einer Ausführungsart kann hierzu beispielsweise eine Lösung mit 0,2 molar Lysin und 10Gew% Harnstoff verwandt werden, worin der solide Filterrückstand für 6 Stunden eingelegt wird. Anschließend wird die Flüssigphase durch eine Kammerfilterpresse entfernt und der Filterrückstand in Wasser verteilt und sodann mittels eines Hydrozyklons in die entstandenen 2 Feststofffraktionen aufgeteilt: cellulose-basierte Fasern und lignin-basierte Schalenanteile. Es konnte gezeigt werden, dass eine Separation der Konstituenten der Faserbestandteile mit den Verfahren zur Desintegration und Ablösung von lignin-basierten Bestandteilen möglich ist und eine Vereinzelung der verschiedenen Faserbestandteile erfolgen kann und gerade hierdurch sich in großem Umfang lignin-basierte Schalenanteile als separierbare Wertstofffraktion gewinnen lassen.

Die erhaltbaren cellulose-basierten Fasern weisen je nach Ursprung des Ausgangsmaterials sowie dem gewählten Desintegrations-/Aufschlussverfahren, eines Entwässerungsvorgangs oder einer Exposition gegenüber einem Bleichmittel einen unterschiedlichen Grad der Verhornung auf. Hierbei entstehen kristalline Bereiche, die zu einem im Mund deutlich wahrnehmbaren Festkörpergefühl führen und ein kleinkörniges Kaugefühl bedingen, was unerwünscht ist. Überraschenderweise wurde gefunden, dass bei einem Desintegrations-/Aufschlussverfahren, bei dem die erfindungsgemäßen Aminosäuren und/oder Peptide verwandt worden sind, es praktisch nicht zu einer Verhornung von cellulose-basierten Fasern kommt. Ferner wurde gefunden, dass wenn eine Verhornung der cellulose-basierten Fasern besteht, diese durch eine Desintegration mit einer Lösung, enthaltend erfindungsgemäße Aminosäuren und/oder Peptide, der Grad der Verhornung deutlich reduziert oder die Verhornung vollständig rückgängig gemacht werden kann. So konnte gezeigt werden, dass bei Zuckerrübenschnitzeln, bei denen eine Desintegration mit einer Natrium-Sulfit-Lösung bei 130° und einem Überdruck von 1,2 bar über 10 Minuten erfolgt war, die nach einer Homogenisierung und Abtrennung der freien Flüssigkeit erhaltene Masse cellulose-basierter Fasern einen starken Verhornungsgrad hatten und hierdurch nicht genießbar waren. Durch eine Einlage in eine 0,3 molare Arginin-Lösung kam es unter Durchmischung zu einem Aufschluss der Verhornung, sodass nach 3 Stunden praktisch keine Körnigkeit mehr bestand.

Bevorzugt ist ein Verfahren zur/zum Desintegration/Aufschluss einer Verhornung von cellulose-basierten Fasern.

In einer bevorzugten Verfahrensausführung werden die bereits aus einem der hierin beschriebenen Verfahren oder aus einem anderen Verfahren gewonnenen lignin-basierten Hüllen/Schalen oder Fragmente einer Desintegration einem Aufschlussverfahren mit einer der Aufschlusslösungen unterzogen. Bevorzugt ist es, hiermit eine Anlösung und/oder Auflösung der Lignin-Polymerstrukturen zu erreichen. Naturgemäß ist die Komplexität dieser Strukturen in den unterschiedlichen Hüllmaterialien verschieden, sodaß die genauen Reaktionsbedingungen individuell angepasst werden müssen. Bevorzugt ist es, die lignin-basierten Hüllen/Schalen oder Fragmente in einer Lösung von Natriumsulfit, vorzugsweise zusammen mit einer gelösten Aminosäuren und/oder Peptiden und/oder Harnstoff und/oder Carbonaten, bei erhöhter Temperatur und vorzugsweise unter erhöhtem Druck zu desintegrieren und aufzuschließen. Bevorzugt sind Konzentrationen von Natriumsulfit oder Natriumbisulfit, aber auch von Natrium-Carbonat oder Natrium-Hydrogencarbonat von 0,1 bis 3 molar, mehr bevorzugt von 0,3 bis 2 molar. Bevorzugte Konzentrationen von gelösten Aminosäuren und/oder Peptiden (einzeln oder zusammen) sind 0,1 bis 3 molar, bzw. bis zur Löslichkeitsgrenze, mehr bevorzugt von 0,2 bis 2 molar. Bevorzugt ist ein pH- der Desintegrationslösung zwischen 8 und 13, mehr bevorzugt zwischen 8,5 und 13 und weiter bevorzugt zwischen 9 und 12,5. Die bevorzugte Temperatur liegt zwischen 60 und 180 °C, weiter bevorzugt zwischen 70 und 160°C und weiter bevorzugt zwischen 80 und 140°C. Die bevorzugte Druckerhöhung beträgt 0,1 bis 20 bar, mehr bevorzugt 0,2 bis 10 bar. Die Dauer der Desintegration hängt von den Prozessparametern und dem Ausgangsmaterial ab. Bevorzugt ist eine Desintegrationsdauer zwischen 10 Minuten und 24 Stunden, mehr bevorzugt zwischen 15 Minuten und 10 Stunden und weiter bevorzugt zwischen 15 Minuten und 6 Stunden. Vorzugsweise werden die desintegrierten und/oder angelösten und/oder aufgelösten Hüllen/Schalen oder Fragmente einer ausgiebigen Spülung mit Wasser oder einem geeigneten Tensidgemisch unterzogen. Sofern sich in der Spülungslösung keine Trübung zeigt, ist der Spülprozess abgeschlossen. Die erhaltene Fraktion lignin-basierter Schalen wird vorzugsweise einem Trocknungsverfahren unterzogen. In einer bevorzugten Verfahrensausführung erfolgt die Abtrennung von umgebundenem Wasser mittels einer Siebvorrichtung oder mittels eines zentrifugalen Verfahrens. Bevorzugt sind Schwingsieb-vorrichtungen und Zentrifugen. Das in der Regel dann schon rieselfähige lignin-basierte Schalenmaterial kann dann vollständig, z.B. auf in einer Bandtrocknungsvorrichtung oder Vakuum-Trockenschrank, auf eine Restfeuchte von vorzugsweise < 20 Gew%, mehr bevorzugt < 15 Gew% und weiter bevorzugt < 10 Gew% getrocknet werden. Es wird bis zu einer Anwendung trocken gelagert.

Da bei dem Desintegrationsprozess auch cellulose-basierte Fasern ab-/herausgelöst werden, wird in einer bevorzugten Verfahrensausführung der Anteil cellulose-basierten Fasern vor, während oder nach einer weiteren Prozesssierung abgetrennt. Dies kann vorzugsweise mittels bekannter Verfahrenstechniken erfolgten. Bevorzugt sind Wirbelstromverfahren, bei denen ein semiselektiver Austrag von Partikel unterschiedlicher Dichte und mit unterschiedlichem Absetzverhalten, erfolgt. Bevorzugt ist die Verwendung eines Hydrozyklons. Die Reinheit der erhaltenen Fraktion lignin-basierter Schalenanteile kann beispielsweise in einer mikroskopischen Analyse ermittelt werden. Bevorzugt ist eine Reinheit der erhaltbaren Fraktionen von > 90%, mehr bevorzugt von > 95% und weiter bevorzugt von > 98,5%. Andererseits ist der Verbleib von cellulose-basierten Fasern in der Fraktion lignin-basierter Schalenanteile in der Regel nicht störend. Es konnte gezeigt werden, dass bei Anwesenheit von > 5% cellulose-basierter Fasern in der Fraktion lignin-basierter Schalenanteile eine Verkratzbarkeit von kratz-empfindlichen Oberflächen, die durch einen hohen Anpressdruck von Scheuermitteln entstehen kann, reduziert wird.

In einer bevorzugten Ausführungsart erfolgt an einem beliebigen Zeitpunkt des Verfahrens eine Größenselektion und/oder Zerkleinerung der lignin-basierten Schalenanteile auf ein definiertes Maß. Vorzugsweise erfolgt dies zum Ende der Prozesssierung. Vorzugsweise erfolgt eine Größensortierung, die mittels eines Rückhalts durch Siebvorrichtungen erfolgt. Dies kann sowohl bei trockenen, als auch bei in Wasser suspendierten lignin-basierten Schalenanteilen erfolgen. Eine Zerkleinerung kann ebenfalls bei getrockneten oder durchnässten lignin-basierten Schalenanteilen durchgeführt werden. Geeignet sind beispielsweise Schneid- oder Schleifmühlen. Die erhaltbaren Größenverteilungen, lassen sich durch erhältliche Analyse-Siebvorrichtungen bestimmen.

In Abhängigkeit von dem pflanzlichen Ausgangsmaterial, der Intensität des Desintegrationsprozesses und einer Fragmentierung des Hüllmaterials, entstehen flächige oder korpuskuläre Partikel lignin-basierter Schalenanteile. In der chemischen Analyse wurde ein Ligningehalt von > 40 Gew% ermittelt. Bevorzugt ist der Erhalt von korpuskulären Partikeln mit einem Ligninanteil von > 40 Gew%, mehr bevorzugt von > 50 Gew%, weiter bevorzugt von > 60Gew%, noch weiter bevorzugt von > 75 Gew% und besonders bevorzugt von > 90 Gew%. Die Zusammensetzung lässt sich durch analytische Verfahren ermitteln.

Bevorzugt ist ein Verfahren, bei dem durch eine Desintegration eines pflanzlichen Ausgangsmaterials korpuskuläre Partikel/Schalenanteile erhalten werden, die einen Ligningehalt von > 40Gew% aufweisen.

Es wurde gefunden, dass diese lignin-basierten Schalenanteile abrasive Abtragungseigenschaften, bzw. Scheuereigenschaften gegenüber organische oder anorganische Inkrustationen auf verschiedenen Oberflächen aufweisen. Überraschenderweise konnten differentielle abrasive Eigenschaften, der aus den Prozessverfahren hervorgegangenen lignin-basierten Schalenanteile, gefunden werden. Es konnte gezeigt werden, dass, wenn bei kratzenpfindlichen Oberflächen, wie die eines Glanzlacks oder einer Hochglanz-Kunststoffoberfläche, mechanisch zerkleinertes lignin-basierten Schalenmaterial, das aus einem der Aufschlussverfahren von Hüllmaterialien anfiel, mit einem konstant gehaltenen Anpressdruck zur Abtragung von Inkrustationen behandelt wurden, es zu einer Kratzer- und Furchenbildung bei einer Abtragung der Anhaftungen kam. Im Gegensatz hierzu, kam es zu keiner Furchen-/Kratzerbildung der Oberflächen, wenn ein erfindungsgemäßes Desintegrationsverfahren zum Aufschluss des pflanzlichen Hüllmaterials angewendet worden ist, bei ansonsten gleichen Reinigungs-/Abtragungsbedingungen von fest anhaftenden Verschmutzungen und einem identisch gewählten Anpressdruck. Somit erhalten die lignin-reichen Schalen durch die Desintegration eine differentielle abrasive Eigenschaft, durch die Oberflächenverschmutzungen und insbesondere inkrustierten Verschmutzungen, beispielswies durch organische Materialien, wie Proteinen, abgetragen werden können, ohne dass es dabei zu einer diskreten Abtragung (Furchen/Kratzer) von abtragungsempfindlichen (kratzempfindlichen) Oberflächen kommt, wie das bei Hochglanz-Kunststoffoberflächen oder Glanz-Lacken der Fall ist.

Abrasiv bezieht sich hierbei auf eine Abtragung von Anhaftungen, Verbackungen oder Inkrustationen, die auf einer Materialoberfläche, wie beispielsweise von Metallen, Keramiken, Glas, Kunststoffen, Lacken oder biologischen Materialien, wie beispielsweise Leder, vorliegen. Abrasiv bedeutet in diesem Zusammenhang nicht, dass es zu einer Verletzung/Beschädigung der Oberflächen/Oberflächenintegrität der abrasiv behandelten Materialien/Materialoberflächen kommt. Mikroskopisch waren bei lignin-basierten Hüllen/Schalen oder Fragmenten, die durch einen der Prozessschritte hergestellt worden waren, Mikro- und/oder Nanooberflächenunregelmäßigkeit der Oberflächen erkennbar, die äußere Konturen waren aber scharfkantig und/oder spitz. Diese lignin-reichen Schalenanteile hatten sehr gute abrasive Eigenschaften auf Inkrustierungen bei Metallen, Glas oder Keramiken, die im Vergleich zu Scheuermitteln aus dem Stand der Technik deutlich leichter abgetragen werden konnten. Kratzspuren waren hier nicht erkenntlich, was der Fall war bei einer Reinigung von Lack- und Kunststoffoberflächen mit derartigen lignin-reichen Schalenanteilen. Überraschenderweise wurde gefunden, dass, durch eine weitere Desintegration der lignin-basierten Schalenanteile gemäß der hierin beschriebenen Verfahren, Partikel erhältlich wurden, die abgerundete und flachbogige äußere Konturen auswiesen, aber weiterhin abrasive Effekte auf inkrustierte Rückstände auf Oberflächen hatten. Bei diesen abgerundeten lignin-basierten Schalenanteilen, kam es zu keinen Kratzerbildungen, wenn sie in einer Seifenlösung suspendiert vorlagen und mit einem Anpressdruck von 0,2N über eine Hochglanz-Lack- oder Hochglanz Kunststoffoberfläche bewegt wurden. Gemeinsam ist beiden Formen lignin-basierter Schalenanteile allerdings eine hohe Abhebe-/Ablöseeigenschaft auf Inkrustierungen. Ferner weisen beide Formen Mikro- und/oder Nano-Oberflächenrauigkeiten auf. Die bevorzugten lignin-basierten Schalenanteile, die für eine abrasive verkratzungsfreie Anwendung eingesetzt werden können, haben ein beliebiges Raummaß. Vorzugsweise handelt es sich um scheibchen-förmige Partikel. Aber auch andere Raumstrukturen können vorliegen. In einer bevorzugten Ausführungsart haben die Partikel vorzugsweise eine mittlere Partikelgröße zwischen 100μm und 3 mm, mehr bevorzugt zwischen 200μmund 1 mm und noch weiter bevorzugt zwischen 300μm und 800μm. In einer Ausführungsart erfolgt die Sortierung der Größe durch eine Siebvorrichtung. Bevorzugt sich agitierbare Siebe, wie Vibrationssiebmaschinen oder Windsichtungsvorrichtungen.

Bevorzugt ist die Herstellung von abrasiven Partikeln aus pflanzlichem Ausgangsmaterial zur Abhebung-/Ablösung von Oberflächeninkrustierungen.

Bevorzugt ist die Herstellung von abrasiven Partikeln aus lignin-basierte Schalen zur Abhebung-/Ablösung von Oberflächeninkrustierungen.

In einer Ausführungsart erfolgt daher eine Desintegration der lignin-basierten Schalenanteile bis vorzugsweise 95Gew%, mehr bevorzugt > 97Gew%, weiter bevorzugt > 99Gew % und weiter bevorzugt bis alle lignin-basierten Schalenanteile in einer allseits abgerundeten Form vorliegen. Mit diesem Qualitätsmerkmal ist ein nicht-Kratzer-erzeugendes abrasives Scheuermittel erhältlich, mit dem leicht verkratzbare Oberflächen, z.B. von Lacken und Kunststoffen, abrasiv gereinigt werden können. Vorzugsweise erfolgt eine Formulierung der erfindungsgemäß hergestellten nicht-Kratzer-erzeugendes abrasives Scheuermittel, indem die erfindungsgemäß hergestellten lignin-basierte Schalenanteile einer Tensid/Seifen Lösung hinzugegeben und in dieser suspendiert werden. Die lignin-basierten Schalenanteile können dabei in noch feuchter oder getrockneter Form und vorzugweise mittels eines hochtourigen Schermischers zu der Tensid/Seifenlösung hinzugegeben werden.

Für eine Verwendung als Scheuermittel können die lignin-basierten Schalenanteile in nassem, angetrocknetem oder getrocknetem und gepulvertem Zustand verwendet werden. Besonders geeignet für die Herstellung von abrasiven Scheuermitteln aus lignin-basierten Schalenanteilen sind die Schalenanteile von Jatropha- und Raps- Körnern/Samen.

In einer bevorzugten Ausführungsform erfolgt die erfindungsgemäße Desintegration/Aufschluss des pflanzlichen Hüllmaterials zusammen oder in unmittelbarer Abfolge mit einer Desintegration/Aufschluss der pflanzlichen Samen, Kerne oder Körner. Dies ist besonders vorteilhaft, da dies mit den gleichen wässrigen Desintegrations-/Aufschluss-Lösungen erfolgen kann. Hierzu ist es in der Regel erforderlich, eine längere Expositionszeit und/oder andere Prozessparameter, als die für die Desintegration/Ablösung/Auflösung von Hüllmaterialien zu wählen. Insbesondere kann eine Verlängerung der Expositionszeit erforderlich sein, bevorzugt ist eine Expositionszeit zwischen 10 Minuten und 48 Stunden, mehr bevorzugt zwischen 30 Minuten und 24 Stunden und weiter bevorzugt zwischen 1 Stunde und 12 Stunden. Ferner ist bevorzugt die Temperatur des Reaktionsgemisches während der Exposition mit den erfindungsgemäßen wässrigen Lösungen zu erhöhen, bevorzugt sind Temperaturen zwischen 20° und 140°C weiter bevorzugt zwischen 30° und 120°C und weiter bevorzugt zwischen 40° und 80°C. In einer besonders bevorzugten Ausführungsart erfolgt im Anschluss an die Desintegration des gesamten pflanzlichen Ausgangsmaterials, ein Aufschluss der Konstituenten des Ausgangsmaterials, bei dem die löslichen Komponenten, wie Proteine und lösliche Kohlenhydrate in einem wässrigen Verteilungsvolumen vollständig gelöst werden und die soliden Konstituenten, wie cellulose-basierte Fasern und ligninreiche Schalen, in der wässrigen Verteilungsphase suspendiert werden. Bevorzugt wird hierbei ein Wasservolumen gewählt, das eine leichte Vereinzelbarkeit der soliden Konstituenten gewährleistet. Bevorzugt ist ein Wasserzugabevolumenverhältnis zu den aus dem Desintegrationsprozess resultierenden Prozessgemisch von 2:1 bis 200:1, mehr bevorzugt von 5:1 bis 100:1 und weiter bevorzugt von 10:1 bis 50:1. Die Temperatur, bei der dieser Prozess-Prozessschritt erfolgen kann, ist beliebig, bevorzugt ist ein Temperaturbereich zwischen 5° und 95°C. Das Verteilungsvolumen wird vorzugsweise mittels eines Intensivmischeintrages hinzugemischt, bevorzugt sind Hochleistungs-Schermischer/Dispergierer oder Homogenisatoren. Das Vorliegen eines ausreichenden Verteilungsvolumens bzw. einer Verteilung bzw. einer Desintegration der Konstituenten des Ausgangsmaterials kann dadurch erkannt werden, indem eine Probe dem suspendierten Gemisch entnommen und gefiltert wird. Sofern, beispielsweise in einer mikroskopischen Analyse, die filtrierbaren soliden Konstituenten keine Anhaftungen von löslichen Konstituenten aufweisen, ist der Prozess abgeschlossen. Bevorzugt eine im Anschluss erfolgende Separation der suspendierten soliden Feststoffe, vorzugsweise mittels Filtration oder einem zentrifugalen Abscheidungsverfahren. Bevorzugt ist die Separation gelöster Konstituenten, die in dem wässrigen Verteilungsvolumen nach der Separation der soliden Konstituenten erfolgt, von denen vorzugsweise < 5Gew%, mehr bevorzugt < 2,5 Gew% und weiter bevorzugt < 1Gew% in dem separierten wässrigen Verteilungsvolumen vorliegen. Bevorzugt ist eine Separation von gelösten Proteinen, die dadurch erfolgt, indem dem wässrigen Verteilungsvolumen, enthaltend gelöste Proteine und ggf. andere lösliche Konstituenten des Ausgangsmaterials, gelöste Verbindungen zur Initiierung einer Aggregation/Komplexierung hinzugegeben werden. Dabei handelt es sich vorzugsweise um eine oder mehrere organische Säure(n), bevorzugt sind Carbonsäuren, wie beispielsweise Zitronensäure oder Milchsäure oder Ascorbinsäure. Aber auch andere Säuren können verwandt werden, wie beispielweise HCl oder Phosphorsäure. Ferner sind Kombinationen verschiedener Säuren möglich. Der pH der wässrigen Lösung, enthaltend gelöste Verbindungen zur Aggregation/Komplexierung, bei der die erfindungsgemäße Kondensation und/oder Aggregation und/oder Komplexierung der gelösten Proteine und/oder anderer gelöster Verbindungen erfolgt, liegt vorzugsweise in einem Bereich zwischen **4,5** und 13, mehr bevorzugt zwischen 6 und 12 und weiter bevorzugt zwischen 6,5 und 11.Ferner können vor/während und/oder nach der Säurezugabe Komplexbilder hinzugegeben werden, wie beispielsweise Kalzium- und/oder Magnesiumverbindungen, wie beispielsweise Kalziumchlorid oder Magnesiumchlorid. Ferner kann die Salinität des wässrigen Verteilungsvolumens verändert werden. Die Zugabemenge hängt von der Konzentration der gelösten und aggregierbaren Verbindungen ab und muss daher jeweils ermittelt werden. Es wurde gefunden, dass eine ausreichende Zugabemenge beispielsweise dann erreicht ist, wenn sich gut sichtbare Aggregate ausgebildet haben, bei gleichzeitigem Aufklaren der zuvor trüben Verteilungsphase. Aber auch analytische Verfahren können angewandt werden: bei einer erfindungsgemäßen Aggregation von Proteinen befinden sich nach deren Separation bevorzugt < als 5 Gew%, mehr bevorzugt < als 2,5Gew% und weiter bevorzugt < als 1Gew% an gelösten Proteinen in der Prozessflüssigkeit.

Das oder die hinzugegebene(n) Aggregations-/Komplexierungsmittel wird/werden in einer bevorzugten Verfahrensausführung mit einem Rührwerk und mit einer geringen Agitation der Prozessflüssigkeit gemischt. Dabei ist auf eine vollständige Durchmischung zu achten. Die Dauer der Mischung ist prinzipiell frei wählbar. In einer bevorzugten Verfahrensausführung erfolgt diese nur über die Dauer der Hinzugabe eines oder mehrerer Aggregations-/Kondensierungsmittel(s) oder für eine Dauer zwischen 10 Sekunden und 5 Minuten, mehr bevorzugt zwischen 20 Sekunden und 2 Minuten. In einer besonders bevorzugten Ausführungsart wird daher im Anschluss an den Zusatz eines oder - mehrerer

Aggregations-/Kondensierungsmittel eine Standzeit eingehalten, in der keine oder nur eine minimale Durchmischung des Gemisches erfolgt. In analoger Weise kann die erforderliche Zeit der Kondensierungsphase ermittelt werden, vorzugsweise beträgt diese zwischen 5 Minuten und 10 Stunden, weiter bevorzugt zwischen 10 Minuten und 5 Stunden und weiter bevorzugt zwischen 15 Minuten und 2 Stunden. Sofern die Standzeit auf ein Minimum verkürzt werden soll, kann die ausreichende minimale Dauer der Standzeit nach Zugabe des Komplexierungs-/Aggregationsmittels anhand einer Probe, die zentrifugiert wird und bei der die Vollständigkeit der Kondensation und/oder Aggregation und/oder Komplexierung, die durch das/die Komplexierungs-/Aggregationsmittel erreicht worden ist/sind, dadurch geprüft wird, indem dem Überstand des Zentrifugates die gleiche und/oder eine andere Lösung mit einem Aggregationsmittel hinzugegeben wird. Sofern sich keine weitere Aggregation einstellt, ist der Extraktionsprozess von gelösten Proteinen abgeschlossen. In einer bevorzugten Verfahrensausführung kommt es nach der Aggregation/Komplexierung der gelösten Proteine zu einer Sedimentation der Aggregate/Komplexe. Vorzugsweise kondensieren diese Aggregate/Komplexe im weiteren Verlauf, sodass sie sich leicht von der freien Wasserphase des Prozessmediums abtrennen lassen.

In einer bevorzugten Verfahrensausführung werden die aggregierten/komplexierten und kondensierten Verbindungen/Proteine in Form eines Sediments gewinnbar gemacht. Vorzugsweise erfolgt der Auslass der Sedimentphase über einen Bodenauslass und wird einem weiteren Verfahrensablauf zugeführt. Die Kondensierungsphase erfolgt vorzugsweise bei Umgebungstemperaturen, bevorzugt ist ein Temperaturbereich zwischen 15 und 40°C. In weiteren vorteilhaften Ausführungsformen erfolgt diese bei einer erniedrigten oder erhöhten Temperatur. Bevorzugt ist ein Temperaturbereich von 5° bis 15°C einerseits und von 40° bis 80°C andererseits. Die Auswahl einer erniedrigten Temperatur kann beispielsweise bei der Gewinnung thermolabiler Verbindungen vorteilhaft sein. Die Wahl einer hohen Temperatur, z.B. 60°C, kann beispielsweise gewählt werden, um bei einer mikrobiellen Belastung des Ausgangsmaterials eine Keimabtötung, z.B. in Form einer Pasteurisation vorzunehmen. Andererseits lassen sich durch eine Erhitzung auch Allergene und bestimmte Toxine sowie antinutritiven Verbindungen inaktivieren.

Bevorzugt ist ein Verfahren zur Gewinnung eines proteinhaltigen Sediments, bestehend aus aggregierten/komplexierten und kondensierten Proteinen.

Bevorzugt ist ein Verfahren zur Gewinnung und Erhalt von Proteinen aus pflanzlichen Ausgangsmaterialien, erhaltbar durch eine Desintegration/Aufschluss mit Separation aufgeschlossener gelöster Proteine sowie nachfolgender Aggregation/Komplexierung und Kondensierung.

Die erhaltbare Proteinmasse kann unmittelbar verwendet werden oder weiteren Reinigungsschritten zugeleitet werden.

In Untersuchungen zur Isolierung von gelösten Proteinen aus wässrigen Lösungen mit anderen gelösten löslichen Konstituenten, die durch das Ab-/Auftrennverfahren in der wässrigen Lösung, enthaltend gelöste Desintegrations-/Aufschlussverbindungen, erhalten werden, wurde gefunden, dass sich durch die mit dem Verfahren erreichbare Hydratation der Proteine, diese, durch eine geeignete Auswahl der Prozessparameter, in einer sehr reinen Fraktion erhalten lassen. Rein bedeutet dabei, dass die Proteinfraktionen einen Proteingehalt von vorzugsweise > 60 Gew%, mehr bevorzugt > 70 Gew%, weiter bevorzugt > 80 Gew% und noch weiter bevorzugt von > 85 Gew% und am meisten bevorzugt von > 90 Gew% aufweisen.

Es wurde gefunden, dass derartig reine Proteinfraktionen sich insbesondere dadurch herstellen lassen, indem ein großes Verteilungsvolumen nach einem erfindungsgemäßen Aufschluss der Konstituenten verwandt wird. Derartig gelöste Proteine passieren beispielsweise einen Membranfilter mit einer Porendurchlässigkeit von minimal 1$\mu$m. Hierdurch lässt sich eine größenselektive Separation gelöster Proteine bewirken. Ferner zeigte sich, dass gerade in dieser Situation einer optimalen Hydratisierung der gelösten Proteine und dem Vorliegen eines physiologischen pH-Bereiches, eine sehr rasche und ausgeprägte Interaktion mit den hierin aufgeführten Komplexierungs-/Aggregationsmitteln erfolgt, wodurch sich ein Zusammenschluss der hydratisierten Proteine einstellt, unter Verdrängung oder Ausschluss des Prozesswassers. Dies kann beispielsweise daran erkannt werden, dass es zu einer mit dem bloßen Auge sichtbaren Formation von Raumgebilden kommt, unter teilweiser oder vollständiger Klärung der Prozessflüssigkeit, welche nach ihrer Formation nur sehr langsam sedimentieren. Die Prozessflüssigkeit ist anschließend mäßig bis intensiv gefärbt und enthält Geruchs- und Geschmacksstoffe sowie lösliche Kohlenhydrate. Somit bedingt das Verfahren der Hydratisierung und anschließenden Kondensierung von löslichen Proteinen, dass sich die zuvor von den Proteinen (ab-) gelösten Verbindungen weiterhin in einem gelösten Zustand in der Prozesswasserphase befinden und sich nicht mit den kondensierenden Proteinen verbinden oder mit den kondensierten Proteinen ausgetragen werden.

Bevorzugt ist ein Verfahren zur Herstellung von Proteinkondensaten und/oder Proteinkonzentraten und/oder Proteinisolaten aus organischem Ausgangsmaterial mittels wässrigen Lösungen, enthaltend gelöste Desintegrations-/Aufschlussverbindungen.

In einer weiteren bevorzugten Ausführungsform erfolgt die Desintegration/Ablösung/Auflösung des pflanzlichen Hüllmaterials und/oder der übrigen Konstituenten des Ausgangsmaterials von Samen, Körnern oder Kernen, die thermisch und/oder mechanisch bereits desintegriert/zerteilt/zerkleinert wurden. Hierdurch verkürzt sich die erforderliche Expositionszeit für die erfindungsgemäßen wässrigen Lösungen.

Für die Ablösung und Separation der desintegrierten/an-/abgelösten Hüllmaterialien sind bevorzugt mechanische Verfahren, die Scherkräfte auf die behandelten Hüllmaterialien ausüben. In einer bevorzugten Ausführungsform erfolgt die Ablösung und Separation durch Walzen, auf oder zwischen denen die vorbehandelten Samen/Kerne transportiert werden und gleichzeitig tangentiale Scherungen erfahren. Insbesondere bevorzugt ist die gleichzeitige Einrichtung eine Spülvorrichtung oder einer Gebläseeinrichtung, um die abgelösten Hüllmaterialien zu separieren.

In einer Ausführungsform erfolgt eine Desintegration/ An- oder Ablösung einer Zwischenschicht, die sich auf den pflanzlichen Samen oder Kernen und/oder auf den abgetrennten Hüllmaterial befindet, indem eine längere Verweilzeit/Einwirkzeit in/mit einer der erfindungsgemäßen wässrigen Flüssigkeiten erfolgt, als dies für die Desintegration/Abtrennung/Separation von pflanzlichen Hüllmaterialien erforderlich ist. Bevorzugt ist eine Expositionszeit zwischen 1 Minute und 72 Stunden, mehr bevorzugt zwischen 10 Minuten und 48 Stunden und weiter bevorzugt zwischen 30 Minuten und 24 Stunden. Die Temperatur des Reaktionsgemisches kann beliebig gewählt werden, bevorzugt ist ein Temperaturbereich zwischen 5° und 120°C, weiter bevorzugt zwischen 10° und 100°C und weiter bevorzugt zwischen 15° und 70°C. Bevorzugt ist die Anwendung physikalischer Scherkräfte an das von einer Zwischenschicht zu bereinigende Material. Diese Scherkräfte werden vorzugsweise bei dem Reaktionsgemisch beispielswiese durch eine Rotation des Behältnisses oder eines Rührwerks durchgeführt. Vorzugsweise können Scherkräfte auch durch eine Spül-/Sprühvorrichtung hergestellt werden. Die ausreichende Expositionsdauer und Anwendung von Scherkräften zur Abspülung der Zwischenschicht lässt sich durch den Fachmann leicht dadurch prüfen, indem das behandelte Produkt auf seine physikalischen Oberflächeneigenschaften, wie das Vorhandenseins eines Belags oder einer Hautbildung, während einer Trocknung untersucht wird.

In einer Ausführungsform werden die pflanzlichen Hüllmaterialien desintegriert/an- oder aufgelöst, ohne sie von dem Pflanzenprodukt zu entfernen. Es konnte gezeigt werden, dass Hüllmaterialien, die durch die Exposition mit den erfindungsgemäßen wässrigen Lösungen zumindest angelöst bzw. gequollen worden sind, nicht mehr oder nur noch teilweise von der pflanzlichen Saat oder Korn entfernt werden müssen, da sie bei der weiteren Verwendung der Saat oder der Körner nicht mehr stören. In einer weiteren Ausführungsform werden die abgetrennten und separierten pflanzlichen Hüllmaterialien desintegriert/an-/aufgelöst durch eines der erfindungsgemäßen Verfahren. Dies ist insbesondere dann von Interesse, wenn hierdurch weitere Wertstoffe, die in dem pflanzlichen Hüllmaterial enthalten sind extrahierbar und gewinnbar gemacht werden sollen, bzw. wenn sich hierdurch cellulose-basierte Fasern herstellen und gewinnen lassen. Die Konzentrationen der kationischen Aminosäuren und/oder Peptide, sowie die Expositionsdauer und die Temperatur und der Druck des/auf das Reaktionsgemisch(es) müssen je nach Anwendung ermittelt werden.

*Cellulose-basierte Faserstoffe und lignin-reiche Schalenteile*

Die Art und die Zusammensetzung von Schalenmaterialien variieren naturgemäß von Art zu Art des pflanzlichen Ausgangsmaterials. Für die Gewinnung von Mehlen werden die Schalen zumeist vor der Vermahlung separiert, da diese in den erhaltbaren Produkten zumeist nicht erwünscht sind. Dies gelingt in aller Regel nur mit einem großen prozesstechnischen Aufwand und unter Verlust von Korn-/Samenmaterial infolge mechanischer Zer-/Abteilungen. Faserstoffe, die in Samen, Kernen und Körnern, aber auch in anderen pflanzlichen Ausgangsmaterialien als Strukturbestandteile vorhanden sind, lassen sich mit Verfahren aus dem Stand der Technik nicht rückstandsfrei separieren oder isolieren, da sie mit den Inhaltsstoffen vollständig/vollflächig verbunden und kompaktiert sind. Insbesondere eine mechanische Abtrennung dieser Faserstoffe ist nach dem Stand der Technik nicht möglich. Es war deshalb völlig überraschend, dass sowohl die lignin-reichen Schalenanteile, als auch die cellulose-basierten Fasern der pflanzlichen Ausgangsmaterialien separiert und dekompaktiert werden können und in einer unmittelbar reinen Form mit den hierin beschriebenen Verfahren erhalten werden können. So konnten im Anschluss an einen Desintegrations-/Aufschlussprozess, nach weitgehender Entfernung gebundener Wasseranteile von den soliden Feststoffanteilen, keine oder nahezu keine Proteine, löslichen Kohlenhydrate, Geruchs- oder Geschmacksstoffe oder andere organische oder anorganische ablösbaren Verbindungen gefunden werden. Mikroskopisch waren keine Anhaftungen anderer organischer Bestandteile erkennbar.

Die lignin-reichen Schalenteile weisen einen Ligningehalt von 30 - 95Gew% auf. Sie liegen als submillimetergroße Plättchen oder in amorpher Gestalt vor. Nach Trocknung liegen sie in riesel- und schütt-fähiger Form vor. Es besteht eine erhebliche Wasserretensionskapazität, die > 40% betragen kann. Die cellulose-basierten Fasern haben mikroskopisch eine watteartige 3-dimenstionale Raumstruktur mit mittleren Durchmessern zwischen 50$\mu$m und 500$\mu$m bei einem Aspektverhältnis (Länge/Durchmesser) von 1:1 bis 1.000:1. Es handelt sich um vereinzelte/diskrete Strukturen, die nicht zusammenhängen und ein sehr geringes Längengewicht von vorzugsweise < 70mg/100m, weiter bevorzugt < 50mg/100m, weiter bevorzugt < 30mg/100m, weiter bevorzugt < 20 mg/100m, weiter bevorzugt < 15 mg/100m und besonders bevorzugt < 10mg/100m aufweisen. Es wurde gefunden, dass derartige cellulose-basierte Fasern sich von Cellulosefasern, die beispielsweise aus Stängeln oder Hölzern hergestellt werden, in der chemischen Zusammensetzung, der Sekundär- und Tertiärstruktur, sowie den physiko-chemischen Eigenschaften erheblich unterscheiden. Ferner wurde gefunden, dass sowohl die gewinnbaren cellulose-basierten Fasern, als auch die lignin-reichen Schalenanteile eine erhebliche Wasserbindungskapazität aufwiesen, die mehr als 200 vol% betrugen. Darüber hinaus wurde gefunden, dass sowohl die lignin-reichen Schalenanteile als auch die cellulose-basierten Fasern frei oder nahezu frei sind

von Geruch- oder Geschmacksstoffen oder Farbstoffen, die sich in einem wässrigen Medium lösen. Daher sind die mit dem Verfahren erhaltbaren lignin-reichen Schalenanteile und cellulose-basierten Fasern in der Form, wie sie mit den erfindungsgemäßen Verfahren gewonnen und hergestellt werden können oder nach einer Trocknung, die mit Techniken aus dem Stand der Technik erfolgen kann, unmittelbar verwertbar oder sie können einer weiteren Verarbeitung zugeführt werden.

Bevorzugt ist ein Verfahren, bei dem reine lignin-basierte Schalenteile und/oder cellulose-basierte Fasern aus einem pflanzlichen Ausgangsmaterial erhalten werden, mit einer Wasserbindungskapazität von > 200vol%.

Überraschenderweise weisen getrocknete lignin-basierte Schalenteile neben einer hohen Wasserbindungskapazität und hohem Wasserrückhaltevermögen auch eine extrem große Bindungskapazität für Öle und Fette auf. Diese betrug in Versuchen zu verschiedenen lignin-basierten Schalenteilen zwischen 250 und 550Gew%. Bemerkenswert war, dass es über hydrophobe Wechselkräfte der Oberflächen zu einem sehr raschen Transport von Ölen und Fetten entlang der äußeren Oberflächen eines Granulates kommt. Hierdurch können, durch ein geschüttetes lignin-basiertes Granulat über Kapillarkräfte der inneren und äußeren Oberflächen, Öle und Fette gegen einen Druckgradienten befördert werden. Die Förderhöhe bei Versuchen in Steigrohren betrug dabei mehr als 5 cm. Ferner konnte gezeigt werden, dass die getrockneten und gepulverten cellulose-basierten Fasern ebenfalls eine sehr große Bindungskapazität für Öle und Fette aufwies, die zwischen 220 und 360 Gew% betrug.

Bevorzugt ist ein Verfahren, bei dem reine lignin-basierte Schalenteile und/oder cellulose-basierte Fasern aus einem pflanzlichen Ausgangsmaterial erhalten werden, mit einer Öl-und/oder Fettbindungskapazität von > 200 Gew%.

Lignin-reiche Schalenteile und/oder cellulose-basierte Fasern, mit einer Öl-und/oder Fettbindungskapazität von > 200 Gew%, erhältlich nach einem Verfahren zur Desintegration und Aufschluss von pflanzlichem Ausgangsmaterial.

Überraschenderweise wurde gefunden, dass sich die lignin-reichen Schalenanteile und die cellulose-basierten Fasern, die sich bei vielen der untersuchten pflanzlichen Ausgangsprodukte, wie beispielsweise Pressrückstände von Raps und Jatropha, im Filterrückstand befanden, mit Techniken aus dem Stand der Technik sehr leicht voneinander separieren lassen. Bevorzugt sind hierfür Wirbelstromverfahren, wie z. B. Hydrozyklone, aber auch Filtertechniken können verwandt werden. Es konnte gezeigt werden, dass es hierdurch möglich ist, sortenreine Fraktionen cellulose-basierter Fasern einerseits und lignin-reicher Schalenanteile andererseits, bei denen keine oder nahezu keine Proteine, löslichen Kohlenhydrate, Geruchs- oder Geschmacksstoffe, oder andere organische oder anorganische ablösbare Verbindungen vorliegen oder aus denen sich Farbstoffe in einem wässrigen Medium herauslösen, zu erhalten.

Die erhaltenen Schalen- bzw. Faserfraktionen werden vorzugsweise durch ein Pressverfahren von noch gebundenem Wasser befreit. Alternativ können zentrifugale Verfahren angewendet werden. Die entwässerten Schalen- bzw. Faserfraktionen können in der erhaltenen Form verwendet oder vollständig getrocknet werden. Trocknungsverfahren sind aus dem Stand der Technik bekannt. Bevorzug ist eine Warmlufttrocknung. Vorteilhafterweise liegen die nach Trocknung erhaltbaren lignin-reichen Schalenanteile unmittelbar in leicht vereinzelbarer und rieselfähiger Form vor.

Es wurde gefunden, dass die hergestellten cellulose-basierten Fasern sich in der chemischen Zusammensetzung im Vergleich zu Cellulosefasern sowie Cellulosederivaten unterscheiden. Während in Cellulosefasern und Cellulosederivate neben C, H und O praktisch keine weiteren Elemente bestimmt werden konnten, waren in cellulose-basierten Fasern zahlreiche Elemente wie N, S, P, Fe, Cl, Na, Ca, K, Ni, Cl, Cu, sowie weitere Elemente vorhanden. Aufgrund der Bindungseigenschaften, die für die cellulose-basierten Fasern gefunden wurden, ist anzunehmen, dass diese Elemente zumindest in Teilen funktionellen Gruppen zugehörig sind, die kovalent entweder direkt oder indirekt mit dem polymeren Gerüststrukturen verbunden sind. Eine kovalente indirekte Verbindung kann dabei vorliegen, z. B. über einen Zuckerrest oder ein Peptid. Es ist aber auch denkbar, dass nicht kovalent gebundene Verbindungen mit dem polymeren Grundgerüst über elektrostatische Wechselkräfte verbunden sind, die dies funktionellen Gruppen bzw. Elemente aufweisen. Das Vorliegen von funktionellen Gruppen an den Oberflächen der cellulose-basierten Fasern ist für viele der bisher gefundenen Effekte verantwortlich zu machen.

Die lignin-basierten Schalenteile weisen, wie die cellulose-basierten Faserteile, große innere Oberflächen auf, die das enorme Wasserbindungsvermögen bedingen. Dadurch eignen sie sich besonders zur Wasserhaltung und -Speicherung in Nutzböden. Im getrockneten Zustand sind sie hervorragend lager- und transportfähig. Es besteht eine optimale Mischbarkeit mit allen untersuchten Bodenarten (z.B. Lehm, Humus). Der Wasseraufnahme- und Wasserretentionsindex konnte durch den Zusatz von lignin-reichen Schalenanteilen bei allen untersuchten Erden deutlich gesteigert werden.

Bevorzugt ist die Verwendung von lignin-reichen Schalenteilen zur Verbesserung der Wasserbinde- und Haltekapazität von Kultivierungsböden.

Lignin-basierte Schalenteile weisen in getrockneten Zustand eine hervorragende öl- und fettaufsaugende Wirkung auf und sind damit sehr gut geeignet für die Aufnahme von Ölen und Fetten, z. B. von Oberflächen oder aus Luft-/Gasgemischen mit Ölen und Fetten. Die aufgenommenen Öle und Fette treten spontan nicht aus den lignin-basierten Schalenteilen, gleichzeitig erfolgt keine "Verbackung" des mit Öl oder Fett durchtränkten Materials, sodass eine sehr gute Transportfähigkeit bestehen bleibt. Es konnte ferner gezeigt werden, dass sich die adsorbierten Öle und Fette unter Einsatz von Lösungsmitteln vollständig aus den lignin-basierten Schalenteilen wieder entfernen ließen und diese

eine gegenüber dem Ausgang unveränderte Wiederaufnahmekapazität für Öle und Fette aufwiesen. Lignin-basierte Schalenteile weisen eine geringe Schüttdichte auf und können ohne großen Widerstand von einem Luft-bzw. Gasstrom durchströmt werden. Es konnte gezeigt werden, dass dies dazu genutzt werden kann, Luft- bzw. Gasgemische, die Dämpfe von Ölen und Fetten enthalten, wie z. B. die Abluft von Fritteusen, von den Öl- bzw. Fetttröpfchen praktisch vollständig zu reinigen. Somit eignen sich lignin-basierte Schalenteile hervorragend als Ölabscheider bzw. Ölaufnehmer für Anwendungen auf Oberflächen oder die Aufnahme aus Luft-/Gasgemischen.

Bevorzugt ist die Verwendung von lignin-basierten Schalenteilen zur Aufnahme und Bindung von Ölen und Fetten von Oberflächen und aus Luft-/Gasgemischen.

Bevorzugt ist die Verwendung von lignin-reichen Schalenteilen und/oder cellulose-basierten Fasern, mit einer Öl-und/oder Fettbindungskapazität von > 200 Gew%, zur Aufnahme von Fetten und Ölen.

Die mit den erfindungsgemäßen Verfahren erhaltbaren cellulose-basierten Fasern zeigten überraschenderweise besondere Eigenschaften, die sich von solchen, die aus den Aufschlussverfahren von Holz gewinnbaren Cellulosefasern unterscheiden. So konnte beispielsweise gezeigt werden, dass sich mit den gleichen cellulose-basierten Fasern sowohl hydrophile als auch hydrophobe Verbindungen an/in den cellulose-basierten Fasern ein-/aufbringen ließen. Ferner zeigte sich, dass es nach einer Trocknung derartig beladener cellulose-basierter Fasern zu einer deutlich verzögerten Freisetzung der angelagerten oder eingeschlossenen hydrophilen oder hydrophoben Verbindungen kommt. Dies war insbesondere dann der Fall, wenn ein schichtweiser Auftrag auf ein Trägermaterial oder schichtweiser Materialaufbau erfolgt war.

Somit kann ein Verfahren bereitgestellt werden, mit dem sich sehr einfach, effektiv und zuverlässig pflanzliche Hüllmaterialien von Pflanzensamen und Körnern desintegrieren/anlösen und dekompaktieren und separieren lassen unter Verwendung von wässrigen Desintegrations-Lösungen, in denen Verbindungen gelöst sind, die biologisch unbedenklich sind und in den erhaltbaren Produkten nicht stören oder sogar eine stoffliche Wertverbesserung bewirken. Die Qualität der pflanzlichen Samen, Körner und Kerne kann durch die erfindungsgemäße schonende Entfernung des pflanzlichen Hüllmaterials gegenüber dem Stand der Technik deutlich verbessert werden, insbesondere bleibt die Integrität der behandelten pflanzlichen Samen, Körner und Kerne erhalten. Gleichzeitig kann auch eine sensorische Verbesserung von pflanzlichen Saaten, Körnern und Kernen, z. B. im Sinne einer Entbitterung, vorgenommen werden. Des Weiteren kann das Verfahren auch für einen weiteren Aufschluss der behandelten pflanzlichen Ausgangsmaterialien verwandt werden. Außerdem können aus den desintegrierten/an- oder aufgelösten pflanzlichen Hüllmaterialien Wertstoffe herausgelöst und gewinnbar gemacht werden, wie beispielsweise Vitamine oder Antioxidantien. Insbesondere werden hierdurch dekompaktierte cellulose-basierte Fasern erhaltbar, die besondere physikalische Eigenschaften aufweisen und sich aufgrund der hervorragenden sensorischen Effekte sehr gut für die Zubereitung von Lebensmitteln und Speisen eignen. Somit kann ein einfaches durchführbares und kostengünstiges sowie produktschonendes Verfahren zur Desintegration/Aufschluss von Pflanzenmaterial bereitgestellt werden, das universell einsetzbar und biologisch unbedenklich ist.

**Definitionen**

Pflanzliche Ausgangsmaterialien

Unter dem Begriff "Ausgangsmaterialien", wie hierin verwendet, werden alle biogenen Produkte, die eine oder mehrere Gewebetexturen aufweisen, die sie ab- oder begrenzen, teilweise oder vollständig umschließen oder verbinden oder eine stoffliche Verbundstruktur darstellen, zusammengefasst. Unter dem Begriff "pflanzliches Hüllmaterial" werden insbesondere alle ab-/begrenzenden, in Teilen oder vollständig umschließenden oder verbindenden Gewebestrukturen verstanden, die als Schicht separierbar sind und im allgemeinen Sprachgebrauch als Häutchen, Haut, Hülle, Schale, Septe oder Spelze bezeichnet werden. Der Begriff ist nicht begrenzt auf eine bestimmte stoffliche Zusammensetzung der hierin gemeinten gewebigen Textur des pflanzlichen Hüllmaterials. Prinzipiell können die Ausgangsmaterialien einen beliebigen Anteil verschiedener Konstituenten sowie andere Bestandteile und Verbindungen aufweisen. Zu typischen Konstituenten zählen insbesondere Biopolymere, wie Cellulose oder Lignin, die in verschiedenen Zusammensetzungen und verschiedener texturaler Form/Verbundstrukturen vorliegen können. Bei den Verbundstrukturen handelt es sich dabei vorzugsweise um eine spaltraumfreie Kompaktierung aus einem oder mehreren der Konstituenten. Die bevorzugten Ausgangsmaterialien sind pflanzlichen Ausgangsmaterialien, wie beispielsweise Samen, Körner, Kerne, Nüsse, Bohnen, Rübengewächse, Knollengewächse, Gemüse, Früchte oder Wurzeln.

Diese können in Form unreifer, gereifter, reifer, überreifer, gealterter oder auch beschädigter Ausgangsmaterialien vorliegen. Auch geeignet sind kontaminierte oder verdorbene pflanzliche Ausgangsmaterialien. Das pflanzliche Ausgangsmaterial kann in vollständig intakter Form, beschädigt, zerkleinert, geschält, gepresst, gemahlen oder in anderer Weise desintegriert sein/vorliegen, hierzu gehören auch Schrote oder Mehle, die beispielsweise nach einer mechanischen Extraktion von Ölen entstehen, sogenannte Presskuchen. Hierzu gehören auch Ausgangsmaterialien und insbesondere pflanzliche Ausgangsmaterialien, die zuvor einen thermischen und/oder flüssigen Extraktionsprozess, z. B.

mit einem Alkohol oder einem organischen Lösungsmittel, wie Hexan, unterzogen worden sind. Ferner zugehörig sind pflanzliche Ausgangmaterialien, bei denen eine thermische Behandlung erfolgt ist. Hierzu gehören ferner Pflanzenprodukte, die aus einem Aufschluss- und/oder Fermentierungsprozess erhaltbar sind, insbesondere, wenn es sich dabei um Rückstände handelt, wie beispielsweise um Brauereirückstände (z.B. in Form von Treber oder Trebermehl) oder um Trester der Mostherstellung oder um Oliventrester. Ferner Rückstände von Kakaobohnen.

Ferner bevorzugt sind Rückstände aus Pressrückständen, die beispielsweise bei der Gewinnung von Säften (z.B. Apfel-, Tomaten- oder Karottensaft) oder Trester, z. B. von Trauben oder Äpfeln oder Auszügen, wie diese bei der Herstellung von Gelees oder Likören (z. B. Brombeergelee, Cassis) anfallen.

Ferner können Schäl-, Enthüllungs- oder Entkernungsprodukte pflanzlicher Ausgangsmaterialien verwendet werden.

Unter diese Definition fallen insbesondere sämtliche pflanzliche *Samen,* wie z. B. Leinsamen, Mohn, Chia, Amaranth, Chilli, Tomaten, Anis, Bergerbse; *Körner,* z.B. von Raps, Leindotter, Hafer, Hanf, Weizen, Buchweizen, Roggen, Gerste, Mais, Sonnenblumen, Grünkern, Jatropha; *Kerne,* z. B. von Äpfeln, Birnen, Trauben, Apfelsinen, Kirschen, Pflaumen, Aprikosen, Pfirsichen, Speierling, Mispeln, Mirabellen, Vogelbeeren, Kürbissen, Melonen, Avocado; *Bohnen,* wie Sojabohnen, Ackerbohnen, Mattenbohnen, Mungbohnen oder Kidney-Bohnen, Kaffee-Bohnen, Erbsen, Linsen, wie z.B. Wasserlinsen ferner Lupinen oder Sesam; *Gemüse,* wie Blumenkohl, Brokkoli, Kohlrabi, Zucchini, Paprika, Artischocken oder Okra; *Rübengewächse,* wie Karotten oder Zuckerrüben; *Früchte,* wie Äpfel, Birnen, Quitten, Bananen, Brotfrucht, Mango, Kiwi, Maracuja, Melonen, Passionsfrucht, Feigen, Kürbis, Ananas, Avocado, Oliven, Mango, Chayote, Guave, Papaya, Tamarillo, Marmayapfel, Grape Frucht, Orangen, Zitronen oder Trauben; *Beeren,* wie Hagebutten, Stachelbeeren, Heidelbeeren, Brombeeren, Erdbeeren, Holunder, Johannisbeeren, Preiselbeeren, Maulbeeren, Apfelbeeren, Himbeeren, Brombeeren, Sandorn; ferner *Knollengewächse und Wurzeln,* wie Kartoffeln, rote Bete, Batate, Kurkuma, Maniok, Meerrettich, Sellerie, Radieschen, Ingwer, Arakascha, Taro, Wasabi, Yacon, Schwarzwurzeln, Spargel, Pastinace, Mairüben, Topinambur, Rohrkolben, Steckrüben, Sibirische Engelwurz, Yamswurzel, Yam, Sonnenblumenwurzel, Knoblauch, Zwiebeln, Teufelskralle oder Ginko; ebenso *Gurken,* wie Salat- oder Gewürzgurken, ferner Auberginen oder Zucchini, ferner Eicheln; *Nüsse,* wie Mandeln, Haselnüsse, Erdnüsse, Walnüsse, Cashew-Nüsse, Paranuss, Perkannuss, Pistazien, Kastanie, Maronen, Datteln oder Kokosnüsse. Ferner Zuckerrohr.

Bevorzugt sind getrocknete Ausgangprodukte. Bevorzugt ist eine Vorzerkleinerung durch ein mechanisches Verfahren. Bevorzugt ist ein GMO-freies pflanzliches Ausgangsmaterial zur Herstellung von GMO-freien Produkten.

Die Hauptkonstituenten pflanzlicher Samen, Körner und Kerne bestehen aus Proteinen, Kohlenhydraten, cellulose-basierten Fasern und lignin-reichen Schalen. Daneben sind u. a. enthalten, Vitamine, Phytosterole, Mineralstoffe, Antioxidantien, Aroma- und Farbstoffe.

Cellulose-basierte Fasern

Unter den Begriff "cellulose-basierte Fasern", wie hierin verwendet, werden alle korpuskulären Strukturen der pflanzlichen Ausgangsmaterialien, die aus einem Cellulose-Grundgerüst bestehen, zusammengefasst, die mindestens 2 der nachfolgenden Charakteristika aufweisen:

- einen Ursprung aus einem pflanzlichen Ausgangsmaterial
- ein Aspektverhältnis von einem Längs- und Querdurchmesser von 1:1 bis 1.000:1
- ein Wasserbindungsvermögen von > 200 Gew%
- einem Anteil an chemischen Verbindungen und funktionellen Gruppen von > 2,5 Gew%, die nicht den Elementen C, H oder O entsprechen.

Die cellulose-basierten Fasern können bereits in einem losen Verbund mit anderen Verbindungen oder Komponenten vorliegen, wie z. B. in aufgebrochenen und durch einen Press- oder Prallvorgang auseinander gebrochenen Matrix, wie z. B. im Falle von gepressten Ölsamen oder gemahlenen Körnern oder sie liegen in einer stabilen Verbundstruktur vor, die eine Herauslösung der cellulose-basierten Fasern verhindert, wie das z. B. bei Gemüsen oder Früchten der Fall ist. In einem nicht aufgeschlossenen Ausgangsmaterial liegen die cellulose-basierten Fasern gleichwohl in einem spaltraumfreien Verbund mit anderen Konstituenten des Ausgangsmaterials vor. Dabei enthält der kompaktierte Verbund lösliche Proteine und Kohlenhydrate. Derartige cellulose-basierte Fasern liegen somit in einer kompaktierten Form vor. Die erfindungsgemäßen cellulose-basierten Fasern weisen in dekompaktierten Form eine dreidimensionale Raum-und Oberflächenstrukturen auf. Sie können dann in einer Verbundstruktur mit anderen Feststoffen, wie z.B. ligninreiche Schalen, vorliegen, die sich durch physikalische Maßnahmen, wie einer mechanischen Zerkleinerung und/oder einer thermischen Behandlung, in sphärische oder korpuskuläre Bruchstücke zerteilen lassen.

Die unter die Definition gehörenden cellulose-basierten Fasern zeichnen sich durch Strukturmerkmale und physikalische Eigenschaften, die ihnen gemeinsam sind, aus. In dekompaktierter Form weisen sie insbesondere räumliche Strukturen in Form von freien Fasern, Netzen oder räumlichen Gewebestrukturen auf. Die erfindungsgemäßen

cellulose-basierten Fasern haben vorzugsweise eine flächige und/oder korpuskuläre Geometrie. Insbesondere zeichnen sie sich durch ein niedriges Längengewicht von < 20mg/100m aus. Sie können Pigmente einschließen, umschließen oder diese sind strukturelle Bestandteile der erfindungsgemäßen Fasern. Aber auch andere organische oder anorganische Verbindungen können Bestandteile der cellulose-basierten Fasern oder mit diesen durch ein wässriges Medium nicht ablösbar verbunden sein.

Die cellulose-basierten Fasern, die mit den erfindungsgemäßen Verfahren in dekompaktierter Form erhalten werden, weisen diese Eigenschaften auf, die mit Verfahren aus dem Stand der Technik überprüft werden können.

Lignin-reiche Schalenanteile

Unter dem Begriff "lignin-reiche Schalenanteile" oder "lignin-basierte Schalen", wie hierin verwendet, werden alle Hüll- und Stützstrukturen des pflanzlichen Ausgangsmaterials zusammengefasst, die einen Ligningehalt von > 30 Gew% aufweisen. Die bevorzugten lignin-reichen Schalenanteile weisen Ligningehalt von > 40 Gew%, mehr bevorzugt von > 50 Gew%, weiter bevorzugt von > 60 Gew%, noch weiter bevorzugt von > 75 Gew% und besonders bevorzug von > 90 Gew%. Sie haben keine spezifische äußere Gestalt, die flach und polymorph bis korpuskulär und rund sein kann. Die Dimensionen hängen vom Herstellungsprozess ab und können von wenigen Mikrometern bis einigen Millimetern betragen. Lignin-reiche Schalenanteile liegen beispielsweise in Pressrückständen von Raps- oder Jatropha-Saaten in einem Gewichtsanteil von 8 bis 15 Gew% vor.

Desintegration/Aufschluss

Unter dem Begriff "Desintegration" werden hierin alle Verfahren zusammengefasst, die zu einer Auftrennung/Aufschluss wasserundurchlässiger Gewebestrukturen oder Texturen des Ausgangsmaterials führen, wodurch es zur Schaffung von Rissen, Lücken oder Spalten von Hüll- oder Schalenmaterialien des pflanzlichen Ausgangsmaterials kommt, bis hin zu einem vollständigen Aufschluss gewebiger Texturen mit Freilegung der eingeschlossenen Oberflächen der Samen, Körner oder Kerne des pflanzlichen Ausgangsmaterials. Entscheidend ist dabei, dass es durch eine Desintegration zu einer Hydratation des Hüllmaterials und/oder der Trennschicht oder des Spaltraums zwischen dem desintegrierten Hüllmaterial und der Oberfläche des eingeschlossenen Samen, Korns oder Kerns kommt. Hierunter fällt auch eine teilweise oder in Teilen und oder lokal erfolgende oder vollständige Auflösung des pflanzlichen Hüllmaterials unter Freilegung/Freisetzung der Einzelkomponenten des Hüllmaterials. Die hierin gemeinte Desintegration bezieht sich auch auf das pflanzliche Ausgangsmaterial, das von Hüllen und Schalen eingeschlossen wird/wurde. Dabei kommt es gleichfalls zu einer Auftrennung/Ablösung der Konstituenten des Ausgangsmaterials, die bewirkt wird durch eine Hydratation ihrer Konstituenten. Durch die hierin gemeinte Desintegration wird eine Hydratation der Konstituenten, die durch kovalente oder elektrostatische Bindungskräfte miteinander und/oder untereinander verbunden sind, wie dies bei spaltraumfreien Verbundstrukturen oder verhornten Cellulose-Aggregaten der Fall ist, bewirkt, wodurch die einzelnen Konstituenten aufgeschlossen werden und sich in einem wässrigen Verteilungsvolumen spontan vereinzeln oder durch eine leichte Scherung voneinander abtrennen lassen. Der hierin gemeinte "wässrige Aufschluss", der hierin vereinfacht auch als nur als "Aufschluss" bezeichnet wird, ist dann gegeben, wenn durch eine Hydratation einzelner Verbindungen/Konstituenten, die Bindungsenergie zu anderen Verbindungen/Konstituenten um ein Maß reduziert worden ist, bei dem sich die hydratisierten Verbindungen/Konstituenten spontan in einer Wasserphase verteilen oder durch einen geringen Energieeintrag voneinander trennen lassen. Daher können die Begriffe "Desintegration" und "Aufschluss", wie hierin verwendet, auch synonym verwendet werden.

Wässrige Desintegrations-/Aufschlusslösung

Unter dem Begriff "wässrige Desintegrationslösung" oder "wässrige Aufschlusslösung" werden hierin verstanden, eine wässrige Lösung von gelösten Substanzen zur Desintegration sowie zur Ab-/Auftrennung von Konstituenten des Ausgangsmaterials. In einer bevorzugten Verfahrensausführung sind die Substanzen zur Desintegration bzw. zur Ab-/Auftrennung von Konstituenten des Ausgangsmaterials eine oder mehrere Aminosäure(n) und/oder Peptid(e), die in Wasser in einer vollständig gelösten Form vorliegen. Bei dem Wasser kann es sich um geklärtes, geklärtes und gereinigtes Prozesswasser, ein entionisiertes, teil-entionisiertes, ein Brunnen- oder Stadtwasser handeln. Die bevorzugten Substanzen, die zur Ab-/Auftrennung von Konstituenten des Ausgangsmaterials in einer gelösten Form vorliegen, sind natürlich vorkommende Aminosäuren und/oder Peptide, die aus diesen Aminosäuren bestehen oder diese enthalten. Bei den erfindungsgemäßen wässrigen Aufschlusslösungen handelt es sich vorzugsweise um Lösungen aus einer, zwei oder mehreren Aminosäure(n) und/oder Peptid(en), die in der Einzel- und/oder Gesamtkonzentration in einem Bereich von 10μmol/l bis 3mol/l, mehr bevorzugt zwischen 1mmol/l und 1mol/l und weiter bevorzugt zwischen 0,1mol/ und 0,5 mol/l vorliegen. Es kann sich dabei um L- oder D-Formen oder Racemate der Verbindungen handeln. Bevorzugt ist die Verwendung der L-Form. Bevorzugt sind dabei Alanin, Arginin, Asparagin, Asparaginsäure, Glutamin, Glutaminsäure,

Glycin, Histidin, Isoleucin, Leucin, Lysin, Phenylalanin, Prolin, Serin, Treonin, Tryptophan, Thyrosin und Valin. Besonders bevorzugt sind die Aminosäuren Arginin, Lysin, Histidin und Glutamin. Ferner bevorzugt sind Derivate der vorgenannten Aminosäuren. Bei den erfindungsgemäß einsetzbaren Peptiden kann es sich um Di-, Tri- und/oder Polypeptide handeln. Die erfindungsgemäßen Peptide haben mindestens eine funktionelle Gruppe, die ein Proton bindet oder binden kann. Das bevorzugte Molekulargewicht liegt dabei unter 500kDa, mehr bevorzugt < 250kDa weiter bevorzugt < 100kDa und insbesondere bevorzugt < 1.000Da. Die bevorzugten funktionellen Gruppen sind dabei insbesondere eine Gunanidin-, Amidin-, Amin-, Amid-, hydrazino-, hydrazono-, hydroxyimino-oder nitro-Gruppe. Die Aminosäuren können dabei eine einzige funktionelle Gruppe aufweisen oder mehrere der gleichen Verbindungsklasse oder ein oder mehrere funktionelle Gruppe(n) unterschiedlicher Verbindungsklassen enthalten. Vorzugsweise weisen die erfindungsgemäßen Aminosäuren und Peptide mindestens eine positive Ladungsgruppe auf, bzw. haben eine positive Gesamtladung. Daher sind kationische Aminosäuren besonders bevorzugt. Besonders bevorzugte Peptide enthalten mindestens eine der Aminosäuren Arginin, Lysin, Histidin und Glutamin in einer beliebigen Anzahl und sequentiellen Folge. Besonders bevorzugt sind Aminosäuren und/oder Derivate dieser, die mindestens eine Guanidino- und/oder Amidinogruppe enthalten. Als Guanidinogruppe wird der chemische Rest $H_2N-C(NH)-NH-$ sowie dessen cyclische Formen bezeichnet und als Amidinogruppe der chemische Rest $H_2N-C(NH)-$ sowie dessen cyclische Formen. Diese Guanidinoverbindungen und Amidinoverbindungen haben vorzugsweise einen Verteilungskoeffizienten $K_{OW}$ zwischen n-Octanol und Wasser von keiner als 6,3 ($K_{OW}$ < 6,3). Insbesondere bevorzugt sind Argininderivate. Argininderivate sind definiert als Verbindungen, welche eine Guanidinogruppe und eine Carboxylatgruppe oder eine Amidinogruppe und eine Carboxylatgruppe aufweisen, wobei Guanidinogruppe und Carboxylatgruppe oder Amidinogruppe und Carboxylatgruppe durch mindestens ein Kohlenstoffatom voneinander entfernt sind, d.h. sich zumindest eine der folgenden Gruppen zwischen der Guanidinogruppe oder der Amidinogruppe und der Carboxylatgruppe befindet: $-CH_2-$, -CHR-, -CRR'-, worin R und R' unabhängig voneinander beliebige chemische Reste darstellen. Natürlich kann der Abstand zwischen der Guanidinogruppe und der Carboxylatgruppe oder der Amidinogruppe und der Carboxylatgruppe auch mehr als ein Kohlenstoffatom betragen, beispielweise bei folgenden Gruppen $-(CH_2)n-$, -(CHR)n-, -(CRR')n-, mit n = 2, 3, 4, 5, 6, 7, 8 oder 9, wie es z.B. bei Amidinopropionsäure, Amidinobuttersäure, Guanidinopropionsäure oder Guanidinobuttersäure der Fall ist. Verbindungen mit mehr als einer Guanidinogruppe und mehr als einer Carboxylatgruppe sind beispielsweise Oligoarginin und Polyarginin. Weitere Beispiele von Verbindungen, die unter diese Definition fallen, sind Guanidinoessigsäure, Kreatin, Glycocyamin. Bevorzugte Verbindungen weisen dabei als gemeinsames Merkmal die allgemeinen Formel (I) oder (II)

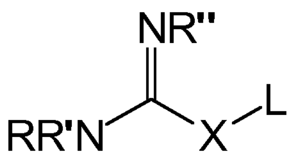

Formel (I)

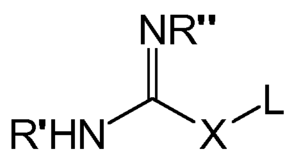

Formel (II)

wobei

R, R', R'', R''' und R'''' unabhängig voneinander -H, $-CH=CH_2$, $-CH_2-CH=CH_2$, $-C(CH_3)=CH_2$, $-CH=CH-CH_3$, $-C_2H_4-CH=CH_2$, $-CH_3$, $-C_2H_5$, $-C_3H_7$, $-CH(CH_3)_2$, $-C_4H_9$, $-CH_2-CH(CH_3)_2$, $-CH(CH_3)-C_2H_5$, $-C(CH_3)_3$, $-C_5H_{11}$, $-CH(CH_3)-C_3H_7$, $_CH_2-CH(CH_3)-C_2H_5$, $-CH(CH_3)-CH(CH_3)_2$, $-C(CH_3)_2-C_2H_5$, $-CH_2-C(CH_3)_3$, $-CH(C_2H_3)_2$, $-C_2H_4-CH(CH_3)_2$, $-C_6H_{13}$, $-C_7H_{15}$, Cyclo-$C_3H_5$, cyclo-$C_4H_7$, cyclo-$C_3H_9$, Cyclo-$C_6H_{11}$,$-C\equiv CH$, $-C\equiv C-CH_3$, $-CH_2-C\equiv CH$, $-C_2H_4-C\equiv CH$, $-CH_2-C\equiv C-CH_3$ repräsentieren,

oder R' und R'' bilden zusammen den Rest $-CH_2-CH_2-$, $-CO-CH_2-$, $-CH_2-CO-$, -CH=CH-, -CO-CH=CH-, -CH=CH-CO-, $-CO-CH_2-CH_2-$, $-CH_2-CH_2-CO-$, $-CH_2-CO-CH_2-$ oder $-CH_2-CH_2-CH_2-$;

X repräsentiert -NH-, -NR''''-, oder $-CH_2-$ oder ein substituiertes Kohlenstoffatom; und

L repräsentiert eine $C_1$ bis $C_8$ lineare oder verzweigte und gesättigte oder ungesättigte Kohlenstoffkette mit mindestens einem Substituent ausgewählt aus der Gruppe umfassend oder bestehend aus $-NH_2$, -OH, $-PO_3H_2$, $-PO_3H^-$, $-PO_3^{2-}$, $-OPO_3H_2$, $-OPO_3H^-$, $-OPO_3^{2-}$, -COOH, $-COO^-$, $-CO-NH_2$, $-NH_3^+$, $-NH-CO-NH_2$, $-N(CH_3)_3^+$, $-N(C_2H_5)_3^+$, $-N(C_3H_7)_3^+$, $-NH(CH_3)_2^+$, $-NH(C_2H_5)_2^+$, $-NH(C_3H_7)_2^+$, $-NHCH_3$, $-NHC_2H_3$, $-NHC_3H_7$, $-NH_2CH_3^+$, $-NH_2C_2H_5^+$, $-NH_2C_3H_7^+$, $-SO_3H$, $-SO_3^-$, $-SO_2NH_2$, $-C(NH)-NH_2$, $-NH-C(NH)-NH_2$, - -NH-COOH, oder

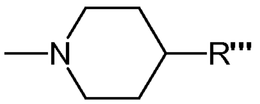 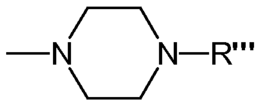 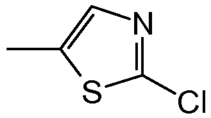 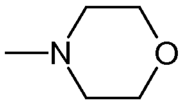 .

Es ist bevorzugt, dass die Kohlenstoffkette L im Bereich von $C_1$ bis $C_7$ ist, bevorzugter im Bereich von $C_1$ bis $C_6$, weiterhin bevorzugt im Bereich von $C_1$ bis $C_5$, und am bevorzugtesten im Bereich von $C_1$ bis $C_4$.

Vorzugsweise repräsentiert L $-CH(NH_2)-COOH$, $-CH_2-CH(NH_2)-COOH$, $-CH_2-CH_2-CH(NH_2)-COOH$, $-CH_2-CH_2-CH_2-CH(NH_2)-COOH$, $-CH_2-CH_2-CH_2-CH_2-CH(NH_2)-COOH$, oder $-CH_2-CH_2-CH_2-CH_2-CH_2-CH(NH_2)-COOH$.

Bevorzugt sind auch Verbindungen der allgemeinen Formel (III) wie unten gezeigt:

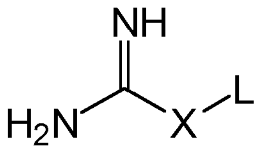

wobei die Reste X und L die Bedeutungen haben wie hierin offenbart.

Ferner geeignet sind Di-, Tri- oder Oligipeptide sowie Polypeptide, die aus einer, zwei oder mehreren Aminosäuren zusammengesetzt sind. Bevorzugt sind kurzkettige Peptide, z. B. RDG. Besonders bevorzugt sind Peptide, die aus Aminosäuren bestehen, die sowohl hydrophobe als auch hydrophile Seitengruppen aufweisen, wie beispielsweise (Angaben gemäß Namensalphabet der Aminosäuren) GLK, QHM, KSF, ACG, HML, SPR, EHP oder SFA. Weiter besonders bevorzugt sind Peptide, die sowohl hydrophobe und kationische und/oder anionische Seitengruppen aufweisen, wie beispielsweise RDG, BCAA, NCR, HIS, SPR, EHP oder SFA. Weitere Beispiele mit 4 Aminosäuren sind NCQA, SIHC, DCGA, TSVR, HIMS oder RNIF oder mit 5 Aminosäuren sind HHGQC, STYHK, DCQHR, HHKSS, TSSHH, NSRR. Besonders bevorzugt sind RDG, SKH oder RRC.

Für die erfindungsgemäßen Aufschluss-/Desintegrationslösungen können weitere Substanzen verwendet werden bzw. enthalten sein, die hierin vollständig gelöst vorliegen. Besonders bevorzugte Substanzen sind: Sulfite, wie Natriumsulfit oder Natrium-Bisulfit und/oder Harnstoff und/oder Carbonate, wie Natriumcarbonat oder Natriumhydrogencarbonat. Ferner Substanzen zur Einstellung des pH der Lösung, insbesondere eine Base oder Säure, wie Harnstoff oder NaOH, Natriumcarbonat, Natriumhydrogencarbonat oder Triethylamin bzw. Essigsäure oder Harnsäure oder Substanzen mit tensidischen Eigenschaften, wie beispielsweise DMSO oder SDS. Ferner können hierin Stabilisatoren, wie beispielweise Antioxidantien oder Reduktionsmittel enthalten sein. Ferner sind bevorzugte Substanzen, die eine Desintegration von Konstituenten des Ausgangsmaterials ermöglichen, Substanzen ausgewählt aus der Gruppe der Sulfite und Sulfate. Besonders bevorzugt sind Natriumsulfit und Natriumbisulfit. Ferner kationische Stickstoffverbindungen, wie Diethylamin oder Triethylamin. In den wässrigen Desintegrations-/Aufschlusslösungen können die aufgeführten Substanzen einzeln oder in einer beliebigen Kombination miteinander und/oder zusammen mit anderen Substanzen in gelöster Form vorliegen. Die bevorzugte Konzentration in der eine einzelne Substanze in gelöster Form vorliegt, liegt zwischen 0,001 und 30 Gew%, mehr bevorzugt zwischen 0,01 und 15 Gew% und weiter bevorzugt zwischen 0,1 und 10 Gew%. Der pH der wässrigen Lösungen liegt bevorzugt im Bereich von 7 bis 13, mehr bevorzugt von 8 bis 13 und weiter bevorzugt von 8,5 bis 12,5.

<u>Dekompaktierung</u>

Unter dem Begriff "Dekompaktierung", wie hierin verwendet, wird verstanden eine partielle oder vollständige Auftrennung eines spaltraumfreien Verbunds gleicher oder verschiedener Konstituenten, wodurch diese Konstituenten voneinander separiert werden und/oder sich Spalträume ausbilden, die ein Gas oder ein flüssiges Medium enthalten. Bei der hierin gemeinten Dekompaktierung ist insbesondere die zu einer Separierbarkeit führende Hydratation von filamentären und/oder geweblichen wasserunlöslichen Strukturen von cellulose-basierten Fasern und lignin-reichen Schalen gemeint, die eine räumliche Separation der löslichen Konstituenten in einem wässrigen Verteilungsvolumen ermöglicht, wodurch es zu einer Ausbildung von räumlichen Strukturgebilden der dekompaktierten wasserunlöslichen cellulosebasierten Fasern kommt, die frei oder annähernd frei sind von wasserlöslichen Verbindungen.

<u>Verteilungslösung</u>

Unter dem Begriff "Verteilungslösung", der hierin synonym mit dem Begriff "Verteilungsvolumen" verwandt wird, wird verstanden: eine Wasserphase, die einem Reaktionsgemisch hinzugegeben wird, die eine Verteilung und Vereinzelung löslicher gelöster, löslicher solider und komplexer unlöslicher Bestandteile des Ausgangsmaterials ermöglicht. In einem erfindungsgemäßen Verteilungsvolumen liegen diese Bestandteile in einer leicht vereinzelbaren Form vor. Das Vorliegen eines ausreichend großen Verteilungsvolumens kann durch eine Probeentnahme, bei der die Vereinzelbarkeit der gelösten und suspendierten Bestandteile durch Techniken und Verfahren, wie hierin beschrieben, festgestellt wird, geprüft werden.

Kondensierung/Aggregation/Komplexierung

Unter den Begriffen "Kondensierung/Aggregation/Komplexierung" werden alle physikalischen und/oder chemischen Prozesse zusammengefasst, die zu einem Zusammenschluss gleicher und/oder ungleicher organischer und/oder anorganischer Verbindungen führt, wodurch Kondensate oder Aggregate oder Komplexe entstehen, die sich als Feststoff aus einem wässrigen Prozessgemisch mittels geeigneter Separationsverfahren von der Wasserphase separieren lassen. Unter dem Begriff "Kondensat" wird verstanden: eine räumliche Annäherung von makromolekularen Strukturen, die hierdurch ein messbares Raumgebilde formieren. Die Bindungskräfte sind elektrostatisch durch hydrophobe oder hydrophile Bindungsenergien. Im Allgemeinen bedeutet "Aggregation" eine Anhäufung oder Ansammlung von Atomen bzw. Molekülen und/oder Ionen zu einem größeren Verband, dem Aggregat. Die Anhäufung oder Ansammlung wird durch Van-der-Waals-Kräfte, Wasserstoffbrückenbindung und/oder andere chemische oder physiko-chemische Bindungsarten bewirkt. Unter "Komplexen" werden hierin makroskopisch sichtbare Formationen verstanden, die durch Kondensate und/oder Aggregate zu einer größeren Verbundstruktur zusammengeschlossen sind. Bei den Kondensaten/Aggregaten und Komplexen sind aufgrund der geringen Bindungsenergien die Einzelverbindungen leicht aus den Verbundstrukturen, z. B. durch einen Mischprozess, herauslösbar und können vereinzelt werden. Im Gegensatz hierzu sind Koagulate Raumgebilde von klein- bis makromolekularen Verbindungen, die durch eine chemische Reaktion entstehen, bei der kovalente Bindungen zwischen den molekularen Strukturen entstehen und/oder gespalten werden. Bei einem Koagulat lassen sich die Einzelverbindungen nicht oder nur in einem geringen Maß durch einen Lösungsprozess in Wasser voneinander separieren bzw. vereinzeln. Die hierin gemeinte Kondensierung/Aggregation/Komplexierung grenzt sich ab von einer Koagulation, die insbesondere durch eine Fällungsreaktion mit einer (starken) Säure erfolgt, bei der es zu einer Denaturierung kommt und bei der zumindest die ursprüngliche Tertiärstruktur der Proteine in Teilen oder vollständig nicht mehr vorliegt. Dies ist bei der erfindungsgemäßen Aggregation/Komplexierung oder Kondensation nicht der Fall. Eine Denaturierung von Verbindungen ist beispielsweise an einer geringeren Wasserbindungskapazität erkennbar, die bei den hierin gemeinten Kondensaten/Aggregaten und Komplexen erheblich höher ist.

Komplexierungsmittel/Aggregationsmittel

Unter dem Begriff "Komplexierungsmittel" oder "Aggregationsmittel" werden hierin verstanden, eine oder mehrere organische und/oder anorganische Substanzen, die eine Kondensierung/Aggregation/Komplexierung von in Wasser gelösten Konstituenten/organische Verbindungen eines wässrigen Prozessgemisches initiieren, unterhalten und/oder beschleunigen. Sie können dabei u. a. eine katalytische, destabilisierende, verdrängende und/oder freisetzende Wirkung auf zu kondensierende/aggregierende oder komplexierende Bestandteile haben, die zu einem Zusammenschluss der Konstituenten/organischen Verbindungen führt. Dabei können die Substanzen auch durch eine Änderung des pH und/oder der Salinität diese Wirkung bedingen und/oder selbst an dem Zusammenschluss beteiligt sein.

Die bevorzugten Aggregationsmittel umfassen insbesondere organische Säuren, besonders bevorzugt sind Zitronensäure, Ascorbinsäure, Milchsäure, Adipinsäure, EDTA. Ferner anorganische Säuren, besonders bevorzugt ist Phosphorsäure. Ferner Calcium-, Magnesium- und Aluminium-Ionen, die bevorzugt in Form eines Salzes, z.B. Calciumchlorid oder Magnesiumchlorid bereitgestellt werden. Ferner Carbonatanionen, die vorzugsweise in Form von Salzen bereitgestellt werden, z.B. Nartiumcarbonat oder Natriumhydrogencarbonat. Ferner Silicatanionen, die vorzugsweise als gelöstes Salz bereitgestellt werden, z. B. Natriummetasilicat.

Die Komplexierungsmittel können in Form eines Feststoffs, vorzugsweise in Form eines feinen Pulvers oder in einem wässrigen Medium vollständig gelöster Form appliziert werden. Wässrige Lösungen sind bevorzugt. Die Konzentration liegt dabei bevorzugt in einem Bereich von 1mmol bis 5 mol/l, mehr bevorzugt zwischen 100mmol und 3 mol/l und weiter bevorzugt zwischen 200mmol und 2 mol/I.

Konstituenten des Ausgangsmaterials/Organische Verbindungen

Die Begriffe "Konstituenten des Ausgangsmaterials" und "organische Verbindungen", die hierin synonym verwendet werden, umfassen alle organischen Verbindungen biogenen Ursprungs, aus denen die hierin gemeinten Ausgangsmaterialien bestehen bzw. die sie beinhalten und die durch eines der hierin beschriebenen Verfahren aus biogenen Ausgangsmaterialien ab-/herausgelöst werden können. Dabei kann es sich um einzelne Verbindungen, z.B. in Form von Molekülen oder komplexe Verbindungen, z.B. in Form von Polymeren, handeln. Entsprechend den unterschiedlichen Ursprungsmöglichkeiten werden organische Verbindungen verschiedener Stoffgruppen vorgefunden, die einzeln, zumeist aber in unterschiedlicher Kombination und in einem unterschiedlichen Mengenverhältnis, vorliegen. Im Folgenden sind daher nur die wesentlichen Stoffgruppen aufgeführt, denen die organischen Verbindungen zugeordnet werden können, ohne sich auf diese zu beschränken: Proteine, darunter Albumine, Globuline, Oleosine. Ferner Lipide, wie Mono-, Di- oder Triglyceride, Wachse, Wachssäuren, Hydroxy- und Mykolsäure, Fettsäuren mit cyclischen Kohlenwasserstoff-Strukturen, wie die Shikimisäure oder 2-hydroxy-11-cyclohepttylundeicansäure, Mannosterylerythritol Lipid, Farbstoffe, wie Carotine und Carotinoide, Chlorophylle, sowie deren Abbauprodukte, weiterhin Phenole, Phytosterole, insbesondere β-Sitosterol und Campesterol sowie Sigmasterol, Sterole, Sinapine, Squalene. Phytoöstrogene, wie z.B. Isoflavone oder Lignane. Kohlenhydrate, die in polymerer Form vorliegen und wasserunlöslich sind, wie cellulose oder in komplexierter Form vorliegen, wie Stärke oder in wasserlöslicher Form vorliegen, wie Glucose oder Fructose. Ferner, Steroide sowie deren Derivate, wie Saponine, weiterhin Glycolipide sowie Glycoglycerolipide und Glycerosphingolipide, weiterhin Rhamnolipide, Sophrolipide, Trehalose Lipide, Mannosterylerythritol Lipide. Ebenso Polysacharide, hierunter Pektine, wie Rhamnogalacturonane und Polygalacturonsäureester, Arabinane (Homoglykane), Galactane und Arabinogalactane, ferner Pektinsäuren und Amidopektine. Ferner Phospholipide, insbesondere Phosphotidylinositol, Phosphatide, wie Phosphoinositol, weiterhin langkettige oder zyklische Carbonverbindungen, ferner Fettalkohole, Hydroxy- und Epoxyfettsäuren. Ebenso Glycoside, Liporoteine, Phytat bzw. Phytinsäure sowie Glucoinosilate. Ferner Vitamine, wie z.B. Retinol, (Vitamin A) sowie Derivate, wie z. B. Retinsäure, Riboflavin (Vitamin B2), Pantothensäure (Vitamin B5), Biotin (Vitamin B7), Folsäure (Vitamin B9), Cobalamine (Vitamin B12), Calcitriol (Vitamin D) sowie Derivate, Tocopherole (Vitamin E) und Tocotrienole, Phyllochinon (Vitamin K) sowie Menachinon. Des Weiteren Tannine, Terpenoide, Curcumanoide, Xanthone. Aber auch Aromastoffe, bzw. Geruchs- und Geschmacksstoffe, Farbstoffe, Phospholipide und Glycolipide, Wachse bzw. Wachssäuren sowie Fettalkohole. Ferner wasserunlösliche Biopolymere, wie Lignine und Cellulose, die vorzugsweise in Form von gewebeartigen Verbundstrukturen vorliegen.

Proteine

Unter den Begriff "Proteine", wie hierin verwendet, werden Makromoleküle verstanden, die aus Aminosäuren bestehen, die durch Peptidbindungen miteinander verbunden sind. Die hierin gemeinten Proteine weisen eine Anzahl von > 100 Aminosäuren auf. Dabei können sie in ihrer Primärstruktur, Sekundärstruktur oder Tertiärstruktur sowie in einer funktional aktiven Form vorliegen. Dabei kann bei der Sekundärstruktur die räumliche Geometrie in Form einer α-Helix, β-Faltblatt, β-Schleife, β-Helix oder ungeordnet als Random-Coil-Strukturen vorliegen. Ferner hierin inbegriffen sind supramolekulare Verbindungen von Proteinen, wie z. B. Kollagen, Keratin, Enzyme, Ionenkanäle, Membranrezeptoren, Gene, Antikörper, Toxine, Hormone oder Gerinnungsfaktoren. Entsprechend des ubiquitären Vorkommens in allen Lebensformen und Lebensbereichen kann es sich bei den hierin gemeinten Proteinen um makromolekulare Verbindungen in einer der angegebenen Form handeln, deren physiologische Aufgabe beispielsweise eine Formgebung, eine Stütz-, Transport- oder Abwehrfunktion war oder zur Reproduktion, der Energiegewinnung oder Energieumsatz oder zur Reaktionsförderung/Umsatz dienten. Hierunter werden insbesondere die Proteine nach der angegeben Definition verstanden, die aus den hierin beschriebenen Ausgangsmaterialien extrahierbar sind.

**Methoden**

Verfahren zur Bereitstellung von pflanzlichem Ausgangsmaterial.

Entsprechend der unterschiedlichen Herkunft und Gewinnungsmöglichkeiten der erfindungsgemäß verwendbaren Ausgangsmaterialien, können diese in unterschiedlicher Form und Zustand vorliegen. So kann es sich beispielsweise um ganze/intakte Samen, Körner, Kerne, Nüsse, Gemüse, Früchte, Blüten, Fruchtknoten oder Wurzeln handeln und/oder um ganz oder teilweise aufgeschlossene, aufgebrochene, zerkleinerte, zerriebene, zerquetschte oder gepresste Pflanzenmaterialien und/oder pflanzliche Materialien, bei denen teilweise oder vollständig ein fermentativer oder desintegrativer Prozess, insbesondere durch eine(n) Autolyse/mikrobiellen Abbau/chemisch-physikalische Reaktion, stattgefunden hat und/oder es sich um Rückstände aus der landwirtschaftlichen Produktion /der Nahrungsmittel-Herstellung oder -Verwertung handelt. Die aufgebrochenen, geteilten, zerkleinerten, pulverisierten oder liquidisierten oder gelösten pflanzlichen Ausgangsmaterialien können als zusammenhängende oder vereinzelte Stücke oder aggregiert, z.B. als Pellets oder Pressmasse oder in einem losen Verbund, wie z. B. Granulate oder Schüttgut oder in vereinzelter Form, wie einem Mehl oder Pulver oder in Form einer Suspension vorliegen. Die Konsistenz, Form und Größe der pflanzlichen Ausgangsprodukte ist prinzipiell unerheblich, bevorzugt sind allerdings zerkleinerte pflanzliche Ausgangsmaterialien, die einen erleichterten Aufschluss zulassen. Bevorzugt sind maximale Durchmesser der verteilbaren Partikel der pflanzlichen Ausgangsmaterialien zwischen 100μm und 100cm, mehr bevorzugt zwischen 0,5 mm und 50cm, weiter bevorzugt zwischen 1mm und 20cm und weiter bevorzugt zwischen 2mm und 5 cm. Die Form der geeigneten pflanzlichen Ausgangsmaterialien ist beliebig, ebenso wie die Konsistenz, die hart oder weich sein kann oder es kann in einer

verflüssigten Form vorliegen. Dabei kann das Ausgangmaterial eine beliebige Temperatur aufweisen, bevorzugt ist ein erwärmtes Ausgangsmaterial, wie es beispielsweise im Anschluss an einen Pressvorgang erhalten wird. Sofern das pflanzliche Ausgangsmaterial nicht die geeigneten Eigenschaften/Voraussetzungen für eine der erfindungsgemäßen Prozessdurchführungen erfüllt, können mit Verfahren, die aus dem Stand der Technik verfügbar sind, diese Bedingungen hergestellt werden. Hierzu gehören insbesondere Verfahren, mit denen ein erfindungsgemäßer Aufschluss des pflanzlichen Ausgangsmaterials ermöglicht und/oder erleichtert werden kann. Hierzu zählen insbesondere mechanische Verfahren, mit denen das pflanzliche Ausgangsmaterial zerkleinert werden kann. Dabei kann es, insbesondere zur Prozessökonomisierung erforderlich sein, ein Pflanzenmaterial zunächst zu zerkleinern und zu trocknen oder zu trocknen und dann zu zerkleinern. In einer Verfahrensausführung wird das zerkleinerte und dann getrocknete pflanzliche Ausgangsmaterial vor der Prozessstufe a) auf eine bestimmte Partikelgröße zerkleinert, bevorzugt sind Partikelgrößen zwischen 10μm und 2 cm, weiter bevorzugt zwischen 30μm und 5mm. Erfindungsgemäß ist allerdings auch einen Zerkleinerung, die während oder nach der Hinzugabe einer Desintegrations-/Aufschlusslösung erfolgt. In einer Verfahrensausführung werden ligninhaltige Bestandteile der pflanzlichen Ausgangsmaterialien zunächst mechanisch entfernt. Hierbei kann es sich beispielsweise um Hüllmaterialien der pflanzlichen Ausgangsmaterialien handeln, wie z. B. Häute, Hüllen oder Schalen, wie beispielsweise die von Apfel- oder Traubenkernen. Hierfür sind mechanische Verfahren aus dem Stand der Technik bekannt. Die Ausgangsmaterialien werden in ein geeignetes Behältnis, das vorzugsweise von oben befüllt werden kann und einen verschließbaren Auslass an der Unterseite aufweist, gefüllt.

Methoden zur Zubereitung und Verwendung von wässrigen Lösungen zur Desintegration sowie zum Aufschluss des Ausgangsmaterials

Die erfindungsgemäßen Aufschlusslösungen werden mit den erfindungsgemäßen Aufschlusssubstanzen, wie hierin definiert, hergestellt. Hierzu wird/werden eine oder mehrere der Substanzen in Wasser gelöst, wobei es sich bei dem Wasser um ein geklärtes Prozesswasser, ein vollständig ionenfreies Wasser sowie Brunnen- oder Stadtwasser handeln kann. Für das Lösen kann es erforderlich sein, die Temperatur zu erhöhen und/oder den Mischvorgang bis zu 2 Tagen fortzusetzen. Vorzugsweise stellt sich ein pH der Lösung kationischer Aminosäuren oder Peptide im Bereich von 7 bis 13, mehr bevorzugt zwischen 8 und 13 und weiter bevorzugt zwischen 8,5 und 12,5 ein. In einer nicht in allen Bereichen erfindungsgemäßen Ausführungsform kann der pH durch die Zugabe einer Säure oder einer Base auf einen beliebigen pH-Bereich zwischen 6 und 14 eingestellt werden. Dabei können Säuren und Basen, die im Stand der Technik bekannt sind, verwendet werden, wie beispielsweise Natronlauge oder HCl.

Methoden zur Durchführung des Verfahrensschritts b): Versetzen des Ausgangsmaterials mit einer Desintegrationslösung und belassen in der Desintegrationslösung bis zum Erreichen einer Desintegration.

In diesem Verfahrensschritt muss die Benetzung der Oberflächen der Konstituenten innerhalb des pflanzlichen Ausgangsmaterials gewährleistet werden. Dies kann mit Verfahren aus dem Stand der Technik bei intakten oder desintegrierten pflanzlichen Ausgangsmaterialien erfolgen. Die Aufschlusslösungen können in einer beliebigen Temperatur hergestellt und dem Ausgangsmaterial zugesetzt werden. Die Applikation kann in Tröpfchenform, z.B. als Aerosol, tropfen- oder strahlweise, kontinuierlich oder diskontinuierlich zu, in und/oder auf das Ausgangsmaterial erfolgen. In einer bevorzugten Ausführungsform erfolgt dies unter Luftausschluss und/oder Schutzgasbedingungen. Bevorzugt ist ein Einlegen des aufzuschließenden Pflanzenmaterials in eine wässrige Aufschlusslösung. Die Applikation erfolgt, indem eine hergestellte Aufschlusslösung aus einem Vorratsbehälter über eine Zuleitung in einer einstellbaren Menge dem Ausgangsmaterial zugeführt wird.

Eine desintegrierte Form von Hüllen und Schalen liegt dann vor, wenn sich die Hüllen oder Schalen, ganz oder in Teilen von dem pflanzlichen Ausgangsmaterial spontan, z.B. in einem wässrigen Verteilungsvolumen oder durch einen Wasserstrahl oder durch eine leichte mechanische Kraft von dem pflanzlichen Ausgangsmaterial ablösen/separieren lassen. Eine Desintegration von Konstituenten des Hüll- oder Schalenmaterials oder der Konstituenten des Ausgangsmaterials liegt dann vor, wenn die einzelnen Konstituenten des Ausgangsmaterials aus einem festen und wasserunlöslichen Verbund oder sie aus einer umgebenden Verbundstruktur (z. B. Schalen) herausgelöst oder herauslösbar sind. Herausgelöst bedeutet in diesem Zusammenhang, dass die einzelnen Verbindungen/Konstituenten spontan in einem wässrigen Verteilungsvolumen vereinzelbar sind. Herauslösbar bedeutet hierbei, dass die desintegrierten bzw. aufgeschlossenen Konstituenten bzw. Verbindungen durch einen geringen Energieeintrag in einem wässrigen Verteilungsvolumen leicht und vollständig vereinzelbar sind. Hierzu können auch physikalische Verfahren angewandt werden, wie eine Erhitzung oder eine mechanische Verkleinerung.

Prinzipiell ist eine thermische Desintegration vorteilhaft, wenn der pflanzliche Ausgangsstoff einen hohen Wasseranteil aufweist, wie bei frischen Früchten und Gemüsen. Hier erfolgt die Desintegration vorzugsweise durch eine Übertragung der thermischen Energie durch Wasser oder Wasserdampf. Vorzugsweise erfolgt gleichzeitig eine Druckbeaufschlagung.

Eine mechanische Desintegration ist insbesondere dann vorteilhaft, wenn die pflanzlichen Ausgangsstoffe einen geringen Wasseranteil haben und/oder in Hüllen/Schalen eingeschlossen sind, die wasserundurchlässig sind.

Ferner ist ein mechanisches Verfahren vorzuziehen, wenn zunächst eine andere Fraktion des pflanzlichen Ausgangsmaterials, wie z. B. Öl, aus diesem entfernt werden soll. In einer bevorzugten Verfahrensausführung erfolgt bei pflanzlichen Materialien eine Desintegration, indem der Rohstoff ganz oder in Teilen mechanisch zerkleinert, in ein Wasserbad eingelegt wird und eine Erhitzung solange erfolgt, bis sich der Anteil des Rohstoffes, der im Wesentlichen die gewinnbaren Konstituenten des Ausgangsmaterials enthält, so weich ist, dass er durch eine leichte Krafteinwirkung, z. B. durch Zerdrücken mit den Fingern, zu einer breiartigen oder flüssigen Phase zerfällt. Dies ist dann besonders vorteilhaft, wenn infolge des unterschiedlichen Festigkeitsgrades verschiedener Strukturen sich im Anschluss an eine der vorgenannten Desinterationsformen, die unterschiedlichen Strukturen, wie beispielsweise das Mesosperm und die Schale, als Schichten sehr leicht voneinander differenzieren und mechanisch trennen lassen. In einer bevorzugten Ausführungsform erfolgt die Erhitzung zusammen mit einer Druckerhöhung in einem Autoklaven. In einer bevorzugten Ausführungsform werden vor und/oder nach einer Desintegration des pflanzlichen Ausgangsmaterials pflanzliche Hüllmaterialien entfernt.

In einer besonders bevorzugten Ausführungsform erfolgt eine Desintegration des pflanzlichen Ausgangmaterials durch ein zuvoriges Einlegen in eine der erfindungsgemäßen wässrigen Lösungen, enthaltend eine erfindungsgemäße wässrige Desintegrations-/Aufschlusslösung. Dabei kann prinzipiell das Volumen- bzw. Gewichtsverhältnis frei gewählt werden, es ist allerdings vorteilhaft, wenn das pflanzliche Ausgangsmaterial vollständig von der Aufschlusslösung benetzt wird. Bevorzugt ist ein Wasservolumenverhältnis der wässrigen Aufschlusslösung zur Masse des Pflanzenmaterials zwischen 0,3 bis 30, mehr bevorzugt zwischen 0,5 und 20, weiter bevorzugt zwischen 0,7 und 10 und weiter bevorzugt zwischen 0,8 und 5. In einer Verfahrensvariante erfolgt die Durchtränkung des Pflanzenmaterials mit einer der Aufschlusslösungen während der Anwendung eines der Desintegrationsverfahren oder unmittelbar im Anschluss hieran. In einer Verfahrensvariante erfolgt die Durchtränkung unmittelbar zusammen mit Verbindungen, die eine Desintegration des pflanzlichen Ausgangsmaterials ermöglichen/beschleunigen. Die Dauer der Exposition mit der Aufschlusslösung hängt von den eingesetzten pflanzlichen Ausgangsmaterialien ab. Bevorzugt ist eine Dauer zwischen 1 Minute und 48 Stunden, weiter bevorzugt zwischen 10 Minuten und 14 Stunden und weiter bevorzugt zwischen 20 Minuten und 6 Stunden. Die Temperatur, bei der die Exposition des pflanzlichen Ausgangsmaterials mit den wässrigen Aufschlusslösungen erfolgt, ist prinzipiell frei wählbar. Bevorzugt ist eine Temperatur zwischen 5° und 140°C, weiter bevorzugt zwischen 10° und 120°C und weiter bevorzugt zwischen 15° und 90°C.

Methoden zur Durchführung des Verfahrensschrittes c): Verteilung der Konstituenten des desintegrierten Ausgangsmaterials in einem Verteilungsvolumen.

In einer bevorzugten Ausführungsform wird das in einem zuvorigen Prozessschritt desintegrierte Hüll-/Schalenmaterial und /oder pflanzliche Ausgangsmaterial in Wasser gelöst, um die ab-/aufgetrennten Konstituenten vollständig zu hydratisieren, wodurch sie in vereinzelbarer Form und ohne Verbindung/Anhaftungen mit oder von anderen Konstituenten vorliegen. Das erfindungsgemäße Verteilungsvolumen ist dabei ein Wasservolumen, das die Vereinzelbarkeit und Separation des Hüll-/Schalenmaterial und/oder der Konstituenten des Ausgangsmaterials gewährleistet.

Bei einer Auf-/Abtrennung von Hüllmaterial kann ein sehr geringes Wasservolumen ausreichend sein, das z.B. mittels eines Wasserstrahls appliziert wird. Sofern eine Desintegration und ein Aufschluss durchgeführt werden, ist das erforderliche Verteilungsvolumen so groß zu bemessen, dass eine vollständige Hydratisierung der löslichen oder abzulösenden Konstituenten ermöglicht und eine Vereinzelbarkeit der gelösten und unlöslichen Konstituenten des Ausgangsmaterials gewährleistet werden kann. Sofern es sich um ein Aufschlussgemisch handelt, erfolgt die Ermittlung des erforderlichen Verteilungsvolumens vorzugsweise, indem mit einer Probe der vorherigen Prozessstufe (z.B. 10g des Ab-/Auftrennungsgemisches) eine Verdünnungsreihe hergestellt wird. Nach einer Rührphase von 3 Minuten erfolgt die Filtration (Siebmaß 100μm) der Suspension. Der Filterrückstand wird analysiert (visuell oder mikroskopisch) auf Anlagerungen/Anhaftungen von löslichen und mit Wasser abspülbaren Verbindungen. Dem Filtrat wird dann eine geeignete Lösung eines Aggregationsmittels in ansteigender Dosierung hinzugemischt. Ein ausreichend großes Verteilungsvolumen liegt vor, wenn sowohl keine Anlagerungen/Anhaftungen an den soliden Konstituenten des Ausgangsmaterials, die sich im Filterrückstand befinden, vorliegen und eine vollständig ablaufende Kondensation und/oder Aggregation und/oder Komplexierung der gelösten löslichen Konstituenten, die in dem Verteilungsgemisch vorliegen, erfolgen kann.

Bevorzugt ist ein Verhältnis des Wasservolumens zur Trockenmasse des Ausgangsproduktes von 5:1 bis 500:1, mehr bevorzugt von 10:1 bis 150:1 und weiter bevorzugt von 15:1 bis 50:1. Hierzu kann geklärtes Prozesswasser subsequenter Verfahrensschritte verwandt werden oder ent-ionisiertes oder nicht weiter behandeltes Stadt- oder Brunnenwasser. Die Art der Einbringung bzw. in Kontaktbringung des Ab-/Auftrennungsgemisches und der Wasserphase dieses Prozessschritts ist beliebig. Bevorzugt ist ein Eintrag, der mittels eines Hochleistungsschermischers oder einem anderen Intensivmischer, zusammen mit der Wasserphase erfolgt. Dies ist deshalb besonders vorteilhaft, da hierdurch eine unmittelbare Hydratisierung und Vereinzelung erfolgen kann. Ferner bevorzugt sind Rührvorrichtungen, die einen turbulenten Fluss bedingen, wie Propeller- oder Düsenstrahlmischer. Der Verteilungsprozess kann kontinuierlich oder diskontinuierlich sowie bei einer beliebigen Temperatur erfolgen, bevorzugt ist ein Temperaturbereich der wässrigen Suspension zwischen 6° und 90°C, weiter bevorzugt zwischen 10° und 60°C und weiter bevorzugt zwischen 18° und 40°C. Die Dauer des Verteilungsprozesses ist beliebig, bevorzugt ist eine Dauer von 1 Minute bis 24 Stunden, mehr

bevorzugt von 5 Minuten bis 5 Stunden und weiter bevorzugt von 10 Minuten bis 1 Stunde.

Der Verteilungsprozess bei einem Aufschluss der Konstituenten eine Ausgangsmaterials ist ausreichend und abgeschlossen, wenn es bei einer repräsentativen Probe, die dem Verteilungsgemisch entnommen wird und anschließend durch ein grobes (Maschenweite 1mm) und durch ein feines Sieb (Siebmaß 100µm) filtriert wird und im Filterrückstand mikroskopisch oder visuell keine sichtbaren Aggregate von verschiedenen Konstituenten der pflanzlichen Ausgangsmaterialien zu erkennen sind. Die erfolgreiche Verteilung der Konstituenten des Ausgangsmaterials kann auch daran erkannt werden, indem eine Probe des Verteilungsgemisches in einen Messzylinder gefüllt wird und es innerhalb kurzer Zeit zur Separation von 3 Phasen oder im Falle der Anwesenheit von Lipiden von 4 gut gegeneinander unterscheidbaren Phasen kommt. Die hierfür erforderliche Zeit sollte 4 Stunden nicht übersteigen.

Weiterhin erfindungsgemäß ist eine Kontrolle und optionale Adjustierung des pH der Verteilungslösung. Dies kann mit Laugen oder Säuren aus dem Stand der Technik erfolgen, bevorzugte Säuren sind HCL oder Ameisensäure, bevorzugte Basen sind NaOH oder Harnstoff. Bevorzugt ist ein pH der Verteilungslösung zwischen **7** und 13, mehr bevorzugt zwischen 7 und 12,5 und weiter bevorzugt zwischen 7,5 und 11.

Das Wasservolumen, das zur erfindungsgemäßen Durchführung der folgenden Prozessstufen erforderlich ist, wird in einen geeigneten Behälter bereitgestellt.

Methoden zur Durchführung des Verfahrensschritts d): Separation solider Konstituenten von gelösten Konstituenten des Ausgangsmaterials.

Die hierin gemeinten soliden Konstituenten des Ausgangsmaterials, sind organische Verbindungen, die sich durch eine der erfindungsgemäßen Desintegrations-/Aufschlussprozess nicht weiter auflösen und als partikuläre Gebilde mittels einer Filtration gewinnen lassen und ein Siebmaß von 10µm nicht passieren. Vorzugsweise erfolgt die Gewinnung solider Konstituenten mittels filtrativer Verfahrenstechniken aus dem Stand der Technik. Es können aber auch Verfahrenstechniken angewendet werden, bei denen eine Abtrennung der soliden Feststoffe aus dem flüssigen Stoffgemisch, beispielsweise mittels einer Zentrifugalbeschleunigung, z. B. einem Siebdekanter oder einem Wirbelstromverfahren, bewerkstelligt wird. Die Prozessflüssigkeit bzw. das Verteilungsgemisch enthält im Anschluss an den Verfahrensschritt d) vorzugsweise < 5 Gew%, mehr bevorzugt < 2,5 Gew% und weiter bevorzugt < 1 Gew% an soliden Feststoffen, die eine maximale Raumlänge von > 10 µm aufweisen.

Methoden zur Durchführung des Verfahrensschritts e) Gewinnung der separierten Konstituenten des pflanzlichen Ausgangsmaterials als Wertstofffraktionen

In einer bevorzugten Ausführungsform werden die in der Verfahrensstufe d) voneinander separierten Fraktionen gesonderten Behandlungsstufen zugeführt:

e1) Fraktionierung von cellulose-basierten Fasern von lignin-reichen Schalen der soliden Konstituenten des pflanzlichen Ausgangsmaterials mittels eines Wirbelstromverfahrens und Erhalt gereinigter Fraktionen cellulose-basierter Fasern sowie lignin-reicher Schalen,

e2) Aggregation/Komplexierung gelöster Proteine der gelösten Konstituenten des pflanzlichen Ausgangsmaterials durch Komplexierungsmittel und Separation der sedimentierten aggregierten/komplexierten kondensierten Proteine, unter Erhalt einer aggregierten/komplexierten Proteinmasse.

Sofern nur eine Wertstofffraktion gewonnen werden soll, kann auch nur einer der beiden Verfahrensschritte angewandt werden.

In dem Verfahrensschritt e1) erfolgt eine Separation von unterschiedlichen oder gleichen desintegrierten soliden Feststoffen, die bevorzugt in Form von Hüll-/Schalenmaterial oder von cellulose-basierten Fasern und/oder lignin-reichen Schalen(anteilen) vorliegen. Bei einer Separation unterschiedlicher Feststoffe, kann dies mittels filtrativer Verfahrenstechniken oder Wirbelstromverfahren erfolgen. Die Filtration erfolgt vorzugsweise, indem das Feststoffmaterial in Wasser suspendiert wird und vorzugsweise unter Agitation eines Siebes und/oder der Suspension durch Siebmaterial mit unterschiedlichem Siebmaß geleitet wird. Bei den Wirbelstromverfahren erfolgt vorzugsweise ebenfalls eine Suspendierung der Fasermasse. Die aus dem Ober- und Unterlauf der Trennvorrichtung austretenden Wasserphasen werden filtriert und die Siebfraktionen gewonnen. Bevorzugt ist die Verwendung eines Volumenverhältnisses der Prozesslösung zu dem Volumen des Pflanzenmaterials aus Prozessstufe b) zwischen 0,1:1 und 10.000:1, mehr bevorzugt zwischen 0,5:1 und 1.000:1, weiter bevorzugt zwischen 1:1 und 500:1 und weiter bevorzugt zwischen 2:1 und 20:1.

Der Verfahrensschritt ist beendet, wenn in einer makroskopischen oder mikroskopischen oder Analyse, eine Sortenreinheit der erhaltenen unterschiedlichen Feststofffraktionen von vorzugsweise > 95 Gew%, mehr bevorzugt > 97 Gew% und weiter bevorzugt von > 99 Gew% erreicht ist.

Der Prozessschritt e2) ist ausführbar, sofern durch ein Desintegrations-/Aufschlussverfahren auch lösliche Konstituenten aus dem Ausgangsmaterial ab-/herausgelöst worden sind und sich in der von soliden Feststoffen bereinigten Prozessflüssigkeit des zuvorigen Prozessschrittes befinden. In einer bevorzugten Ausführungsform erfolgt in diesem Verfahrensschritt eine Kondensation und/oder Aggregation und/oder Komplexierung der gelösten Proteine

und/oder anderer gelöster organischer und/oder anorganischer Verbindungen des Filtrats des zuvorigen Prozessschritts. Ziel dieses Aggregationsprozesses ist es, einen Zusammenschluss von gelösten bzw. hydratisierten Konstituenten und hierbei insbesondere der Proteine zu bewerkstelligen, unter Ausbildung einer kondensierten Phase/Masse, die mittels bekannter Trenntechniken separieren und möglichst wasserarm gewonnen werden kann. Bevorzugt ist ein Zusatz eines oder mehrerer geeigneten(r) Aggregationsmittels(n). Geeignete Aggregationsmittel sind beispielsweise Säuren, hierunter bevorzugt organischen Säuren, wie beispielsweise Essigsäure, Ascorbinsäure, Zitronensäure, Milchsäure, Apfelsäure , aber auch anorganische Säuren, wie HCl, Schwefelsäure oder Phosphorsäure, ferner Salze, wie beispielsweise NaCl, KCl, $MgCl_2$, $CaCl_2$ oder $NaSO_4$, $AlCl_2$, ferner Komplexbildner, wie beispielsweise EDTA aber auch Adsorptionsmittel, wie Kalziumoxid, Magnesiumoxid, Kaolin oder andere Tonmineralien. Weiterhin bevorzugt sind lösliche zweiwertige Kationen, bevorzugt von Aluminium-, Calcium- und Magnesium-Salzen. Ferner sind Kombinationen der hierin aufgeführten Aggregationsmittel vorteilhaft, wie z. B. eine Kombination aus Zitronensäure und Aluminiumchlorid. Ferner bevorzugt sind Carbonate, wie Na-Carbonat, Na-Hydrogencarbonat oder Kalzium-Carbonat. Ferner Silikatverbindungen, besonders Na-Metasilikat, Natrium Orthosilikat, sowie andere lösliche Silikate. Der pH der wässrigen Lösungen, enthaltend gelöste Aggregationsmittel, kann prinzipiell frei gewählt werden und richtet sich nach der Effektivität der hiermit erreichbaren Aggregation. Ggf. kann einer Lösung von Aggregationsmittel auch ein Puffer, der den pH der Lösung einstellt, hinzugefügt werden. Die Eignung kann durch den Fachmann sehr leicht erkannt werden, indem zu Proben der faserfreien Prozesslösung der Verfahrensstufe d), in ansteigende Konzentrationen, verschiedene Aggregationsmittel zugegeben und untergemischt werden und bei denen eine Untersuchung auf Vollständigkeit der Aggregation/Komplexierung der gelösten Konstituenten erfolgt. Hierzu wird dem Überstand nach einer zentrifugalen Abtrennung der Kondensate eines oder mehrere der Aggregationslösungen/Aggregationsmittel hinzugegeben und gemischt. Sofern sich nach einer Standzeit von mindestens 10 Minuten bei einer erneuten Zentrifugation kein Sediment ausbildet und die Wasserphase klar oder fast klar ist, hat eine ausreichende Aggregation/Kondensation der gelösten Konstituenten stattgefunden. In einer weiteren Ausführungsform erfolgt die Applikation des/der Aggregationsmittel(s) als Feststoff, bevorzugt hierbei ist die Verwendung einer gepulverten Form, die dem Reaktionsgemisch hinzugegeben wird. Eine Aggregation/Komplexierung kann nach kurzer Verweilzeit mit dem bloßen Auge erkannt werden. Die Auswahl der geeigneten Konzentration kann dadurch erfolgen, indem eine Probelösung, bei der eine Aggregation/Komplexierung/-Kondensation erfolgt ist, zentrifugiert wird und der Überstand erneut mit dem gleichen und/oder unterschiedlichen Aggregationsmittellösungen behandelt wird. Sofern sich hierdurch keine sichtbaren Kondensate/Aggregate/Komplexe mehr bilden und/oder abtrennen lassen, liegen in der Lösung < 6 Gew%, vorzugsweise < 4 Gew% und am meisten bevorzugt < 2 Gew% an gelösten Proteinen vor.

Die Aggregationsmittel werden in einem Wasser, das vorzugsweise ionenfrei oder entionisiert ist, vollständig gelöst. Die Konzentration des/der Aggregationsmittel(s) hängt von den Prozessbedingungen ab und muss individuell ermittelt werden. Generell bevorzugt ist ein Konzentrationsbereich von 1mmol bis 5 mol/l, mehr bevorzugt zwischen 100mmol und 3 mol/l und weiter bevorzugt zwischen 200mmol und 2 mol/l. Das Volumen der Lösung mit einem oder mehreren Aggregationsmittel (n) oder im Falle, dass Aggregationsmittel mit unterschiedlichen wässrigen Lösungen bereitgestellt werden, erfolgt kontinuierlich oder diskontinuierlich, tropfen oder strahlweise. Vorzugsweise erfolgt eine Agitation des Reaktionsgemisches, vorzugsweise erfolgt die Agitation unter leicht turbulenten oder laminaren Strömungsbedingungen, die einen Zerfall von sich ausbildenden Kondensaten/Aggregaten/Komplexen vermeidet. Vorzugsweise erfolgt eine vollständige Durchmischung des Reaktionsgemisches. Vorzugsweise erfolgt eine Prozesskontrolle durch eine visuelle Inspektion des Kondensationsfortschrittes oder eine Prozessüberwachung durch Ermittlung des Trübungsgrades der sich ausbildenden geklärten Wasserphase. Die Vollständigkeit der Kondensation/Aggregation/Komplexierung der gelösten Verbindungen kann durch das zuvor beschriebene Verfahren leicht überprüft werden und ggf. der Reaktionslösung eines oder mehrere der Aggregationsmittel hinzudosiert werden. Die Dauer der Mischung ist prinzipiell frei wählbar. In einer bevorzugten Verfahrensausführung erfolgt diese nur über die Dauer der Hinzugabe eines oder mehrerer Aggregationsmittel(n) oder für eine Dauer zwischen 10 Sekunden und 5 Minuten, mehr bevorzugt zwischen 20 Sekunden und 2 Minuten.

Die Temperatur, bei der eine Kondensation und/oder Aggregation und/oder Komplexierung erfolgt, kann prinzipiell frei gewählt werden. Bevorzugt ist eine Temperatur zwischen 6° und 90°C, weiter bevorzugt zwischen 10° und 60°C und weiter bevorzugt zwischen 18° und 40°C. Bevorzugt ist die Einstellung eines bestimmten pH-Bereiches, das pH- Optimum ergibt sich aus der Auswahl bzw. der Kombination mit dem Aggregationsmittel. Der optimale pH-Bereich kann mit dem zuvor beschriebenen Verfahren ermittelt werden. Der pH der wässrigen Lösung, enthaltend gelöste Verbindungen, bei dem die erfindungsgemäße Kondensation und/oder Aggregation und/oder Komplexierung der gelösten Proteine und/oder anderer gelöster Verbindungen erfolgt, liegt vorzugsweise in einem Bereich zwischen 5 und 13, mehr bevorzugt zwischen 6 und 12 und weiter bevorzugt zwischen 6,5 und 11. In einer besonders bevorzugten Ausführungsart wird im Anschluss an den Zusatz eines oder mehrerer Aggregationsmittel eine Standzeit eingehalten, in der keine oder nur eine minimale Durchmischung des Gemisches erfolgt. In analoger Weise, wie in dem hierin beschriebenen Verfahren, kann die erforderliche Zeit der Kondensierungsphase ermittelt werden, vorzugsweise beträgt diese zwischen 5 Minuten und 10 Stunden, weiter bevorzugt zwischen 10 Minuten und 5 Stunden und weiter bevorzugt

zwischen 15 Minuten und 2 Stunden. Sofern die Standzeit auf ein Minimum verkürzt werden soll, kann die ausreichende minimale Dauer der Standzeit nach Zugabe des Aggregationsmittels anhand einer Probe, die zentrifugiert wird und bei der in analoger Weise, wie zuvor beschrieben, die Vollständigkeit der Kondensation und/oder Aggregation und/oder Komplexierung, die durch das/die Kondensierungsmittel erreicht worden ist/sind, geprüft wird, leicht ermittelt werden. Die Kondensierungsphase erfolgt vorzugsweise bei Umgebungstemperaturen, bevorzugt ist ein Temperaturbereich zwischen 15° und 40°C. In weiteren bevorzugten Ausführungsformen erfolgt diese bei einer Temperatur zwischen 5° und 15°C einerseits und zwischen 40° und 90°C andererseits. Die Auswahl einer erniedrigten Temperatur kann beispielsweise bei der Gewinnung thermolabiler Verbindungen vorteilhaft sein. Die Wahl einer hohen Temperatur, z.B. 60°C, kann beispielsweise gewählt werden, um bei einer mikrobiellen Belastung des Ausgangsmaterials eine Keimabtötung, z.B. in Form einer Pasteurisation vorzunehmen. Andererseits lassen sich durch eine Erhitzung auch Allergene und bestimmte Toxine sowie anti-nutritive Verbindungen inaktivieren. In einer bevorzugten Verfahrensausführung werden die kondensierten/aggregierten/komplexierten Proteine in Form eines Sediments gewinnbar gemacht. Die Sedimentation ist abgeschlossen, wenn keine weitere Sedimentation mehr stattfindet. Vorzugsweise erfolgt der Auslass der Sedimentphase über einen Bodenauslass und wird einem weiteren Dehydrierungsverfahren oder unmittelbar einem Trocknungsverfahren, wie beispielsweise einer Sprüh- oder Mahl-Sprühtrocknung oder einer Gefriertrocknung, zugeführt.

In einer bevorzugten Verfahrensausführung werden die kondensierte/aggregierten/komplexierten Verbindungen dieses Verfahrensschritts dehydriert, um sie von gebundene Prozesswasser zu befreien, zu reinigen, zu konditionieren und/oder leicht transportfähig zu machen oder zu formulieren. Das zum Ende dieses Verfahrensschritts erhaltbare Sediment liegt vorzugsweise als Suspension bis hin zu einer viskösen creme-artigen Masse vor. Bevorzugt ist ein Wasserentzug, der mittels filtrativer Verfahrenstechniken erfolgt. Bevorzugt ist ein Auftrag auf einen Bandfilter. Die bevorzugten Filter haben dabei ein Siebmaß von 50 bis 500μm, mehr bevorzugt von 80 bis 350μm und weiter bevorzugt von 100 bis 320μm. Vorzugsweise werden Filtergewebe aus Polypropylen oder anderen hydrophoben Polymerfäden verwandt. Bevorzugte Vorrichtungen sind Bandfilter, Kammerfilter, bzw. Filterpressen und Kammerfilterpressen, sowie Vakuum-Bandfilter. Ferner bevorzugt sind zentrifugale Verfahren, besonders geeignet sind Zentrifugen oder Dekanter. Der Restwassergehalt der erhaltbaren dehydrierten Kondensatmasse kann prozessspezifisch ausgewählt werden, sodass z.B. eine fließfähige oder streichfähige oder formstabile Proteinmasse erhalten wird. Prinzipiell wird eine möglichst vollständige Separation des gebundenen Prozesswassers angestrebt. Bei Verwendung eines Dekanters erfolgt die Separation vorzugsweise mit > 2.000 g, mehr bevorzugt mit > 3.000g und weiter bevorzugt mit > 3.500g. Vorzugsweise beträgt die Verweilzeit in einem Dekanter > 10 Sek., mehr bevorzugt > 20 Sek. und weiter bevorzugt > 30 Sek. Ferner bevorzugt ist ein Pressverfahren zur Entfernung von gebundenem Prozesswasser. Vorzugsweise erfolgt Entfernung von Prozesswasser in einer Filtervorrichtung mit einem wasserdurchlässigen Filtergewebe/-material. Vorzugsweise wird dies beispielsweise in einer Filterkammer befindliche kondensierte oder bereits dehydrierte Masse mit einem Druck beaufschlagt, wodurch der Restfeuchtegehalt auf das gewünscht Maß reduziert werden kann. Bevorzugt ist, die Verfahrensdurchführung bei Umgebungstemperaturen, in einem Bereich zwischen 15° und 40°C, durchzuführen. In weiteren vorteilhaften Ausführungsformen können Temperaturen im Bereich zwischen 5° und 15°C, bzw. zwischen 40° und 80°C gewählt werden. Bevorzugt ist der Erhalt einer dehydrierten Masse mit einem Restfeuchtegehalt von < 90 Gew%, mehr bevorzugt < 80 Gew%, weiter bevorzugt < 70 Gew% und noch weiter bevorzugt < 60 Gew% und noch weiter bevorzugt von < 40 Gew%.

Methode zur Prüfung des Wasserrückhaltevermögens

Das Wasserrückhaltevermögen kann mit Verfahren aus dem Stand der Technik bestimmt werden. Bei einem der Verfahren wird der Wassergehalt einer 0,5g Probe bestimmt und diese in einem 100ml Erlenmeyerkolben in 50ml destilliertem Wasser suspendiert. Nach Agitation für 1 Stunde bei 20 °C wird die freie Wasserphase durch Aufgabe auf eine G3 Glasfritte entfernt, zusammen mit der Glasfritte wird das Probenmaterial bei 2.000g für 15 Minuten zentrifugiert. Es wird die Menge der abzentrifugierten Flüssigkeit und das Probengewicht bestimmt. Der Wasserretensionswert (WRR) errechnet sich nach der folgenden Formel

$$\text{WRR (\%)} = \frac{\text{Proben-Feuchtmasse} - \text{Proben-Trockenmasse}}{\text{Proben-Trockenmasse}} \quad \text{X } 100$$

Das Hydratationsvolumen kann ermittelt werden, indem die erhaltenen dekompaktierten cellulose-basierten Fasern (z.B. 100g mit einem Wasseranteil von 100Gew%) mittels eines Intensivmischers in einer Wasserphase mit einem neutralen pH und einem Volumenverhältnis zur Feststoffmasse der Fasern von > 1.000:1 für 3 Minuten gemischt werden und hiernach der Ablauf der nicht gebundenen Wasserphase durch ein Sieb mit einem Siebmaß von 50μm ermöglicht wird. Nach 1 Stunde erfolgt eine Bestimmung des Raumvolumens der cellulose-basierten Fasermasse. Hiernach mechanische Entwässerung und anschließend Trocknung auf eine Restfeuchte von < 10 Gew%. Bestimmung des

Raumvolumens und Berechnung des Volumenverhältnisses.

Ein Ölrückhaltevermögen lässt sich in analoger Weise mit einer flüssigen Lipidphase, wie z.B. einem paraffinischen Öl, ermitteln.

Die Wasserlöslichkeit (NSI) von Proteinen wird bestimmt gemäß dem Standardverfahren AOCS 1990, (Daun and DeClercq, 1994)

**Anwendungen**

Das Verfahren ist prinzipiell bei allen pflanzlichen Produkten anwendbar. Die Anwendung erfolgt insbesondere zum Aufschluss, An- /Ablösung pflanzlicher Hüllstoffe sowie zu deren teilweisen oder vollständigen Auflösung oder Zersetzung.

Das Verfahren ist auch geeignet, abgetrenntes pflanzliches Hüllmaterial an- oder aufzulösen. Hierzu bevorzugt sind insbesondere bevorzugt Schalen, z. B. von Kartoffeln, Äpfeln, Kürbis, sowie Spelzen bzw. Kernhausmaterial, z. B. von Sonnenblumen oder Weizensaaten bzw. von Äpfeln oder Birnen. Bevorzugt ist auch ein Verfahren bei dem pflanzliche Hüllmaterialien, wie Häute, Schalen Hülsen, Spelzen, mit einem der erfindungsgemäßen Verfahren oder mit einem anderen Verfahren separiert worden sind, diese mit einem der erfindungsgemäßen Verfahren weiter aufzuschließen. Das Verfahren ist daher besonders geeignet für die Abtrennung pflanzlicher Hüllen von Samen und Kernen, insbesondere, wenn diese in einer kompaktierten Form vorliegen. Das Verfahren ist daher insbesondere geeignet für die Ab- oder Anlösung von Schalen, Hülsen oder Häuten, z. B. von getrockneten Nüssen, wie Walnüsse oder Haselnüsse, Mandeln, Bohnen, wie Soja- oder Kidneybohnen, Kernen, wie Apfel-, Orangen- oder Traubenkernen oder auch Avokadokernen oder Jatrophakernen, Hülsenfrüchten, wie Reis, Mais oder Erbsen und Bohnen, ferner von getrockneten Samen und Kernen, wie beispielsweise von Raps, Sonnenblumen, Weizen, Roggen, Hafer, Lupinen, Leindotter. Durch die erfindungsgemäßen Verfahrensausführungen lassen sich verschiedene bevorzugte Produkte herstellen. So können beispielsweise enthäutete Körner und Kerne bereitgestellt werden, die unter sehr schonenden Bedingungen hergestellt worden sind. Durch den Verzicht auf eine Temperaturerhöhung für den Ablösungsprozess können Körner sowie Kerne mit unveränderter Integrität ihrer Konstituenten erhalten werden. Insbesondere kommt es nicht zur Bildung von Transfettsäuren oder thermischen Reaktionsprodukten. In einer Ausführung werden Körner und Kerne, aber auch andere Ausgangsmaterialien erhalten, die mit Aminosäuren und/oder Peptiden angereichert sind. In einer weiteren Verfahrensausführung wird hierdurch oder eine andere Funktionalisierung eine Erhöhung der Oxidationsstabilität des Pflanzenproduktes erreicht.

In weiter vorteilhaften Ausführungen werden desintegrierte Hüllmaterialien erhaltbar, die sich in Lebensmitteln, z.B. als Trennschicht oder als Quellstoff in geschmacksneutraler Form herstellen lassen. Derartige hervorragend formbare und für die Texturierung von Lebensmitteln geeignete Hüll-/Faserstoffkondensate weise eine hervorgarende(s) Quellbarkeit und Wasserbindungsvermögen auf und dienen damit auch der Frischhaltung von Nahrungszubereitungen.

In weiteren Ausführungsformen werden aus den Hüllmaterialien reine Fraktionen ihrer Konstituenten gewonnen, die bisher nicht erhaltbar gewesen sind und hervorragende Eigenschaften aufweisen, die sich in zahlreichen Lebensbereichen einsetzen lassen.

Für lignin-basierte Schalenanteile konnte ein hervorragendes Wasserretensionsvermögen gezeigt werden. Daher ist eine bevorzugte Anwendung der Zusatz zu Erden/Böden zur Verbesserung der Wasserbindungskapazität, insbesondere von Kulturböden. Somit werden lignin-reiche Schalenfraktionen erhalten, die aufgrund des hohen Wasserbindungsvermögens und der natürlichen Abbaubarkeit und Bio-kompatibilität zur Verbesserung der Bodenqualität, insbesondere im Bereich des Nutzpflanzenanbaus, eingesetzt werden können. Lignin-reiche Schalenanteile sind ferner verwendbar zur Adsorption und/oder Lagerung/Transport von Lipidphasen. Sie können daher auch zur Ölaufnahme/-Abscheidung verwandt werden. Ferner sind sie verwendbar zur Formulierung von Tiernahrungserzeugnissen. Von ganz besonderem Wert sind lignin-basierte Schalenanteile, die durch einen desintegrativen Prozess eine abrasive Reinigungswirkung erhalten und hiermit auch Oberflächen behandelt/gereinigt werden können, die kratzempfindlich sind. Insofern kann auch ein biogenes und biologisch abbaubares abrasives Reinigungsmittel bereitgestellt werden.

Die erfindungsgemäß hergestellten cellulose-basierten Fasern können prinzipiell in allen Lebensbereichen sowie industriellen Prozessen und Prozessabläufen eingesetzt werden. Cellulose-basierten Fasern, die nach dem erfindungsgemäßen Verfahren gewonnen und hergestellt wurden, sind besonders geeignet für Anwendungen in der menschlichen Ernährung. Hierbei besteht insbesondere eine Eignung als diätetischer Lebensmittelzusatzstoff für eine kalorienreduzierte Nahrungszubereitung. Darüber hinaus sind cellulose-basierte Fasern geeignet zur diätetischen Gewichtsreduktion. Zusätzlich als Ersatzstoff oder zur Reduktion von löslichen Kohlenhydraten, wie Pektinen oder Stärke, in Lebensmittelzubereitungen. Des Weiteren als Ersatzstoff oder zur Reduktion von Ölen oder Fetten in Nahrungsmittelzubereitungen. Cellulose-basierte Fasern sind geeignet, um die Darmtätigkeit zu regulieren und die Stuhlkonsistenz zu verändern/erweichen. Ferner können sie als diätetisches Anti-Opstipationsmittel eigesetzt werden. Cellulose-basierte Fasern können gleichsam bei Tieren zur Stuhlregulierung und diätetischen Gewichtsreduktion eingesetzt werden. Ferner sind cellulose-basierte Fasern geeignet für die Verdickung und Stabilisierung von flüssigen oder fließfähigen Lebensmitteln und Lebensmittelzubereitungen. Cellulose-basierte Fasern erhöhen das Wasserbinde- und Rückhaltevermögen von Lebensmittelzubereitungen. Hierdurch sind cellulose-basierte Fasern auch geeignet, um in Lebensmitteln oder Lebensmittelzubereitungen den Wassergehalt länger zu halten bzw. diese frisch zu halten und die Gefahr einer Austrocknung zu reduzieren. Ferner können cellulose-basierte Fasern verwandt werden, um Substanzen/Verbindungen oder Mikroorganismen in Lebensmittel oder Nahrungszubereitungen einzubringen und/oder darin zu stabilisieren. Hierdurch lassen sich beispielweise labile Verbindungen, wie Vitamine oder Antioxidantien, in Nahrungsmitteln oder -Zubereitungen stabilisieren/verteilen. Ferner können hierdurch Mikroorganismen in Nahrungsmittel eingebracht werden, die eine erhöhte Stoffwechselaktivität ausweisen, wie beispielsweise Hefen oder milchsäure-spaltende Bakterien. Diese Eigenschaften der cellulose-basierten Fasern können auch angewandt werden, um Algen oder andere Mikroorganismen zu kultivieren und sie zur Produktion von Substanzen/Verbindungen oder Gasen mit einer gesteigerten Effizienz zu nutzen. Erfindungsgemäß hergestellte cellulose-basierte Fasern sind insbesondere geeignet für die Herstellung von Lotionen/Cremes/Salben oder Pasten für Anwendungen an Haut oder Schleimhäuten. Dabei ermöglichen sie bei diesen einen verbesserten Wasserrückhalt an der Oberfläche von Haut und Schleimhäuten sowie eine verbesserte Emulgierbarkeit hydrophiler und lipophiler Verbindungen sowie die Einbringbarkeit von Verbindungen, wie Antioxidantien oder Lichtschutz-Verbindungen und führen zu einem verbesserter Glattheit der Haut und Schleimhautareale. Des Weiteren sind cellulose-basierte Fasern sehr gut geeignet als Trennmittel für Nahrungsprodukte/Lebensmittel, die bei hohen Temperaturen mit direkter oder indirekter Hitzeeinwirkung gegart werden, wie Brat-, Back-, Grill- oder Frittiergüter. Somit sind cellulose-basierte Fasern als Trennmittel bzw. als Ersatz für Panaden/Paniermehl anwendbar, beispielsweise bei Zubereitungen von Fleisch oder Fisch und Fleisch- oder Fischprodukten, Kartoffel- oder Teigzubereitungen. Ferner sind cellulose-basierte Fasern geeignet, um andere Nährmittel oder Nahrungsbestandteile zu formulieren oder haltbar zu machen. Dies ist insbesondere bei der Herstellung von Proteinprodukten, wie Proteinkonzentrate oder Isolate der Fall. Aber auch Zubereitungen mit Ölen/Fetten und/oder löslichen oder komplexierten Kohlenhydraten oder Geruchs- und Aromastoffen lassen sich mit den erfindungsgemäßen cellulose-basierten Fasern herstellen und/oder formulieren und/oder lagern. Ferner sind cellulose-basierte Fasern geeignet, um ein langanhaltendes Feuchtigkeitsgefühl an Schleimhäuten zu bewirken. Daher sind cellulose-basierte Fasern besonders geeignet, um eine trockene Mundschleimhaut zu behandeln. Darüber hinaus sind cellulose-basierte Fasern geeignet, um Gerüche zu reduzieren, insbesondere sind sie zur Reduktion oder Vermeidung von Mundgerüchen anwendbar.

Ferner können Proteine in sehr reiner Form für Ernährung von Menschen und Tieren bereitgestellt werden. Die erhaltenen Proteinfraktionen eignen sich insbesondere für eine Formulierung von Speisezubereitungen und Verwendung beispielsweise in Fleisch- und Wurstwaren, Backmischungen, Cremes und Getränken oder in Säuglingsnahrung oder als/in Sondennahrung. Bevorzugt ist der Erhalt und Verwendung der Proteinfraktionen von/als hypoallergenes Konzentrat oder Proteinisolat. Bevorzugt ist die Herstellung von GMO-freien Produkten, erhältlich aus pflanzlichem GMO-freie Ausgangsmaterial.

## Beispiele

Der Rohproteingehalt der Proben wurde gemäß LMBG §3 5 L 03.00-27, über die Stickstoffbestimmung nach dem Dumas-Verfahren bestimmt. Zur Umrechnung des Stickstoffgehaltes in den Rohproteingehalt der Proben wurde der Faktor 6,25 verwendet. Die Stickstoffbestimmung wurde mit dem Leco-System FP-528 durchgeführt.

Die Wasserbindekapazität (WBC) der soliden Feststofffraktionen wurde bei Raumtemperatur ermittelt. 2 g Probe wurden auf 0,01 g genau in ein Zentrifugenglas eingewogen und mit 40 ml demineralisiertem Wasser für eine Minute mit einem Reagenzglasrüttler vermischt. Nach 5 min und nach 10 min wurde jeweils 30 sec kräftig mit dem Reagenzglasrüttler gemischt. Anschließend wurde bei 1000*g und 20 °C 15 min zentrifugiert. Der Überstand wurde dekantiert. Das Zentrifugenglas wurde zurückgewogen. Das Gewicht der mit Wasser gesättigten Probe wurde bestimmt.

Die Fettbindekapazität der soliden Feststofffraktionen wurde bei Raumtemperatur ermittelt. 3 g wurden in einem graduierten 25 ml Zentrifugenglas in 20 ml Öl (kommerzielles Maiskeimöl) dispergiert. Anschließend wurde 15 min bei 700*g zentrifugiert. Das Volumen des nicht gebundenen Öls wurde ermittelt. Die Ölbindekapazität wird in ml Öl / g Probe angegeben.

Zur Bestimmung der Proteinlöslichkeit bei definiertem pH-Wert wurde die Methode nach C.V. Morr. Es wurde 1 g Probe in ein 100 ml Becherglas eingewogen. Unter Rühren wurden 40 ml einer 0,1 mol/l Natriumchloridlösung mit Entschäumer zugegeben. Der pH-Wert wurde auf den gewünschten Wert mit 0,1 mol/l Salzsäure oder 0,1 mol/l Natronlauge eingestellt. Der Ansatz wurde in einen 50 ml Messkolben überführt und mit 0,1 mol/l Natriumchloridlösung auf das definierte Volumen aufgefüllt. Aus der Lösung wurden 20 ml in ein Zentrifugenglas pipettiert und für 15 min bei 20.000*g zentrifugiert. Der resultierende Überstand wurde über ein Whatman No.1 Filter filtriert. Im filtrierten Überstand wurde der Stickstoff nach Dumas (System Leco FP 521) bestimmt.

Alle Untersuchungen erfolgten unter Normaldruckbedingungen (101,3 Pa) und bei Raumtemperatur (25 °C), sofern nicht anders angegeben.

Beispiel 1

Untersuchung zur Desintegration von pflanzlichen Schalen und Hüllen.

Für die Untersuchungen wurde die folgenden Ausgangsmaterialien verwandt: 1) Sojabohnen, 2) Kidney-Bohnen, 3) Mandeln, 4) Walnüsse. Die Materialien lagen ohne äußeres Schalenhaus (3) und 4)) sowie in getrockneter Form vor. Jeweils 200 g wurden in ein Gefäß gegeben, in dem eine wässrige Lösung ohne (a) oder mit einer der folgenden hierin gelösten Substanzen vorlag: b) 0,1 molare Natronlauge, c) Arginin 0,3 molar, d) SDS 1 Gew%, e) Lysin 300mmol/l, f) Histidin und Glycin 300mmol/l, g) RDG 0,3 molar. Alle 10 Minuten wurden einzelne Bohnen/Nüsse zur Analytik aus den Ansätzen entfernt. Die maximale Expositionsdauer betrug 4 Stunden. Die aus den Lösungen entnommenen Bohnen und Nüsse wurden unmittelbar auflichtmikroskopisch auf Perforationen/Auflösungen des Hüllmaterials untersucht. Ferner wurde die Ablösbarkeit des Hüllmaterials untersuch durch einen manuellen tangential gerichteten Druck auf das Hüllmaterial sowie durch einen zentrierten Wasserstrahl der mit einem Druck von 3 bar erzeugt wurde. Ein anderer Teil der Bohnen und Nüsse wurde in ein Wasserbad mit 25°C gegeben. Es wurde jeweils registriert, ob und zu welchem Anteil sich das Hüllmaterial in Teilen oder vollständig ablösen ließ bzw. spontan ablöste. Ferner wurde die Konsistenz des abgelösten Hüllmaterials untersucht.

Ergebnisse:

Die Hüllen der Bohnen bzw. Nüsse wiese eine deutlich sichtbare Quellung bereits nach wenigen Minuten nach Einlage in die wässrigen Lösungen der Untersuchungsserien c), e), f) und g) auf, die im Verlauf weiter zunahm, während dies bei reinem Wasser oder in den Untersuchungsserien b) und d) erst nach 40 bzw. 20 Minuten erkennbar war. Die sichtbare Quellung war verbunden mit der Ermöglichung einer Verschieblichkeit des Hüllmaterials gegenüber der Bohnen-/Nussoberfläche.

In der mikroskopischen Analyse des Hüllmaterials wurde gefunden, dass es durch eine Einlage der Ausgangsmaterialien die wässrigen Lösungen der Untersuchungsserien c), e), f) und g) im Bereich des Keimlings zu einer oberflächlich beginnenden Zersetzung des Hüllmaterials gekommen war, die einen nahtartigen zirkuläre (1) oder longitudinale (2 + 3) Ausrichtung/Verlauf hatte, während dies nach Exposition in den anderen Lösungen nicht zu erkennen war. Im zeitlichen Verlauf kam es in diesem Bereich regelhaft zu einer Perforation des Hüllmaterials mit Freilegung der Bohne/Nuss, wodurch sich jeweils gleichartige Geometrien der Hüllmaterialien abtrennten. Durch die Exposition in der Untersuchungsserie b) kam es zu einer dunklen Verfärbung des Hüllmaterials und/oder des freigelegten Ausgangmaterials.

Durch Einlegen in reines Wasser kam es während der Untersuchungzeitraums bei keinem der Materialien zu einem spontanen Ablösen des Hüllmaterials. Durch eine tangentiale Krafteinwirkung konnten zum Untersuchungsende nur kleine Bruchstücke abgelöst werden. In den Untersuchungsserien b) und d) war eine spontane und partielle Ablösung von Hüllmaterial nach 380 Minuten bzw. 400 Min. erkennbar. Durch eine tangentiale Krafteinwirkung konnte eine partielle Ablösung von Hüllmaterial bei 1) und 3) nach 180 bzw. 240 Minuten erreicht werden und bei 2) und 4) nach 280 bzw. 360 Minuten. Eine vollständige Ablösung war nicht möglich. Bei den Materialien, die in die Lösungen c), e), f) und g) eingelegt worden waren, kam es zu einer spontanen Abtrennung des Hüllmaterials nach 30 bis 100 Minuten. Bei alle Präparaten der Serien c), e), f) und g) konnte eine vollständige spontane Separation nach 110 bis 180 Minuten erreicht werden. Bei diesen Präparaten war eine partielle Ablösung durch einen tangentiale Druck erstmalig nach 10 bis 20 Minuten möglich und eine vollständige Ablösung nach 20 bis 40 Minuten. Das Hüllmaterial, das in den Untersuchungsserien b) und d) erhalten wurde, war wenig elastisch, unabhängig von der Expositionsdauer. Das abgelöste Hüllmaterial der Untersuchungsserien c), e), f) und g) war ab einer Expositionsdauer von 20 bis 40 Minuten weich und flexibel und es war eine plan-ebene Verpressung, ohne ein Zerreißen des Hüllmaterials, möglich.

**Beispiel 2**

Untersuchungen zur Desintegration von Hüllmaterial und Separation von Hüllen und Keimlingen.

Für die Untersuchungen wurden a) Sojabohenen, b) Kidney-Bohnen sowie c) Linsen verwandt, die als getrocknetes Ausgangsprodukt vorlagen. In den Untersuchungsserien wurden wässrige Lösungen verwandt, die 1) keine Substanzen enthielten oder 2) NaOH 0,5 Gew%, 3) Natrium-Carbonat 1 Gew%, 4) Arginin 0,3 molar oder 5) Lysin-Isoleucin + DMSO 0,3 molar enthielten. In der Untersuchungsserie A) wurden je 100 g der Ausgangsmaterialien vollständig in die Lösungen eingelegt und der Zeitpunkt einer sichtbare Keimsprossung durch Analyse einer kontinuierlichen Videoauszeichnung ermittelt sowie die Dauer bis zum Erreichen einer Keimlänge von 5 mm. Die Versuchsdauer war auf 72 Stunden begrenzt. In der Untersuchungsserie B) wurden je 500g Ausgangsmaterialien über die Dauer in Wasser eingelegt, die zu einem Keimwachstum von 5 mm geführt hat und anschließend hiervon Portionen von je 100g in die wässrigen Untersuchungslösungen 1) bis 5) gegeben. Hierin erfolgte eine Aufbewahrung über den Zeitraum, der

gemäß der Versuchsdurchführung des Beispiels 1 eine spontane Perforation des Hüllmaterials ergeben hatte, mit leichter und vollständiger Separierbarkeit des Hüllmaterials. Zu diesem Zeitpunkt wurde die Hälfte des Untersuchungsmaterials entnommen und in eine Einfüllvorrichtung gegeben, die eine Druckluft getriebene Passage durch ein Silikonröhrchen gewährleistete. Es wurde die Häufigkeit einer vollständigen Separation des Keimlings und des Hüllmaterials untersucht. Die Untersuchungsserie C) erfolgte mit den in den Untersuchungslösungen belassenen Ausgangsmaterialien der Untersuchungsserie B) bis zum Erreichen einer Gesamteinlagedauer in den Untersuchungslösungen von 48 Stunden. Während dieses Zeitraums erfolgte eine Videoaufzeichnung zur Erkennung eines weiteren Größenwachstums der Keimlinge. Zum Untersuchungsende erfolgte in analoger Weise zur Untersuchungsserie B) eine Separation der Hüllen und Keimlingen mit der Abstreifvorrichtung. Es wurde die Vollständigkeit der Separation von Hüllmaterial und Keimlingen untersucht und die Länge der Keimlinge, mit der der Untersuchungsserie B) verglichen. Ferner wurden die separierten Hüllmaterialien in einem Wasserbad mittels eines Schermischers (UltraThurrax, T18, 20.00rpm, 30 s) homogenisiert und anschließend die erhaltenen Suspensionen verkostet.

Ergebnisse:

Nach Einlage in Wasser kam es bei den jeweiligen Ausgangsmaterialien relativ zeitgleich zu einer Keimaussprossung mit einem gleichförmigen Wachstum der Keimlinge. Durch Einlage in die Lösungen 2) und 3) wurde eine Verzögerung um 12 bzw. 18 Stunden gegenüber einer Einlage in reines Wasser erreicht und bei der Lösung 5 um 30 Stunden. Bei Lösung 4) kam es in der vorgegeben Zeit bei den Ausgangsmaterialien zu keinem (b) und c)) oder nur sehr geringem Keimwachstum von < 5 mm. In der Untersuchungsserie B) kam es bei den Ausgangsmaterialien zu einem weiteren Wachstum der Keimlinge, welches bei Aufbewahrung in den Lösungen 4) und 5) stark verzögert bis unterbunden war. Eine vollständige Abstreifung des Hüllmaterials sowie der Keimlinge lag bei 36% und 28% der Bohnen und Linsen nach Einlage in die Lösungen 2) bzw. 3) vor. Bei den Präparat, die in den Lösungen 4) und 5) eingelegt waren, war dies in 92% und 90% möglich. Bei den Präparaten der Untersuchungsserie C) war ein geringes Wachstum bei einer Einlage in die Lösungen 2) und 3) erkennbar, während dies nicht erkennbar war bei Präparaten, die in die Lösungen 4) und 5) eingelegt worden waren. Die Verkostung der Suspensionen ergab einen unangenehmen und seifigen Geschmack, wenn eine Einlage in die Lösungen 2) und 3) erfolgt war, während die Suspensionen praktisch geschmacksneutral waren nach Einlage der Ausgangsmaterialien in die Lösungen 4) und 5).

**Beispiel 3:**

Untersuchung zur Desintegration wasserhaltiger Ausgangsmaterialien und Separierbarkeit von Konstituenten.

Für die Untersuchungen wurden die folgenden Ausgangsmaterialien verwandt: 1. Kürbis, Sorte Butternut, 2. Quitten und 3. Sellerie. Die Materialien wurden gut gereinigt und in 4 oder 8 Teile geteilt und in die folgenden wässrigen Lösungen eingelegt: a) Lysin 0,1 molar + Harnstoff 1Gew%, b) Poly-Arginin 0,1 molar + SDS, c) Arginin 0,1molar, d) Histidin-Isoleucin 0,1 molar + Natriumsulfit 1 Gew%. Als Referenz wurden Versuche mit reinem Wasser, bei sonst gleichen Bedingungen, durchgeführt. Die Lösungen wurden für 1 Stunde auf 90°C erhitzt, anschließend wurden die eingelegten Materialstücke entnommen und abkühlen gelassen. Es wurde dann die Ablösbarkeit der äußeren Hüllschicht untersucht. Bewertet wurde dabei, ob sich das Hüllmaterial leicht, mit wenigen Anhaftungen des Mesosperms und in großen Stücken manuell abtragen ließ. Ferner wurde die Zerteilbarkeit des enthäuteten Materials untersucht, indem diese in Wasser das in einem Gefäß vorlag in einem Gewichtsverhältnis von 1:10 gegeben wurde. Anschließend erfolgte eine Verteilung mit einem Schermischer (Silverson, L5M, UK; 35mm/8.000rpm) für 30 Sekunden. Hiernach wurden die Suspensionen mittels einer Vakuum-Nutsche von der freien Wasserphase befreit. Das pastöse Material wurde in einem Volumenverhältnis von 2:1 mit reinem Wasser gemischt, durch eine Sieb mit einem Siebmaß von 0,8mm geleitet und erneut von der freien Wasserphase befreit. Unmittelbar anschließend erfolgte eine sensorischen Bewertung durch 4 Sachverständige. Bewertet wurden das Vorliegen von Geruchs- und Geschmacksqualitäten sowie die sensorischen Eigenschaften im Mund und beim Schlucken. Ergebnisse: Bei den Referenzversuchen konnten die äußeren Hüllschicht nicht (Präparat 3) und nur in kleinen Stücken (insb. Präparat 2) sowie mit noch deutlichen Anhaftungen des Mesosperms abgetrennt werden. Bei den Präparaten, die in den Lösungen a) bis d) desintegriert worden waren, ließen sich die äußeren Hüllschichten leicht (b) und d)) bis sehr leicht (a) + c)) abtrennen. Korrespondierend wurden mittelgroße oder große und zusammenhängende Stücke des Hüllmaterials ohne Anhaftungen des Mesosperms abgetrennt. Die enthäutete Referenzprobe ließ sich nicht vollständig zerkleinern, sodass im Siebrückstand eine große Menge an kleinen zusammenhängenden Aggregaten vorlag. Die mit den Lösungen a) - d) desintegrierten Präparate lagen in Form einer mus-artigen Suspension vor, die praktisch rückstands-frei das Sieb passierte. Bei der sensorischen Bewertung wiesen die aus den Referenzproben erhaltenen Pasten einen intensiven art-typischen Geruch und Geschmack auf. Ferner war ein stumpfes (2.) bis körniges Mundgefühl (besonders Präparat 3.) wahrnehmbar. Bei den Proben, die durch eine Desintegration mit den Lösungen a) bis d) erhalten worden waren, war kein oder praktische kein art-typischer Geruch oder Geschmack

wahrnehmbar. Es wurde in allen Fällen ein angenehmes Mundgefühl, das als "weich" und "cremig" qualifiziert wurde, festgestellt. Partikel waren nicht wahrnehmbar.

**Beispiel 4**

Untersuchung zur Desintegration und Aufschluss von pflanzlichen Hüll- und Schalenmaterial.

Folgende Ausgangsmaterialien wurden verwandt: 1. Soja-Schrot nach einer Hexanextraktion, 2. Maisschrot, 3. Apfeltrester, 4. Traubenkernmehl. Je 300g wurden in Gefäße mit a) reinem Wasser und den folgenden wässrigen Lösungen: b) Histidin-Valin-Leucin 0,2 molar + Natrium-Sulfit 1 Gew%, c) Arginin 0,1 molar, d) Lysin 0,3 molar + Natrium-Bisulfit 0,5 Gew%, e) Natriumsulfit 0,5 Gew% + Natrium-Carbonat 0,1 Gew%, in einem Gewichtsverhältnis von (Feststoff:Wasserphase) 1: 10 gegeben. Die Behältnisse wurden in einem Autoklaven einer Temperatur von 125°C und einem Druck von 1,2 bar über 5, 15 und 30 Minuten exponiert. Nach Abkühlung wurden die gesamten Suspensionen mit einem Schermischer (Silverson, L5M, UK; 35mm/8.000rpm) für 90 Sekunden homogenisiert. Anschließend erfolgte eine Nasssiebung mit einem Vibrations-Siebturm-Analysegerät mit Siebmaßen von 500μm, 250μm, 100μm sowie 50μm. Aus einer Probe der Siebfraktionen wurde der Restfeuchtegehalt bestimmt und hieraus die Trockenmassen der einzelnen Siebfraktionen kalkuliert. Ferner wurden Proben zur mikroskopischen Analyse entnommen. Die Proben wurden hinsichtlich des Vorliegens von erkennbaren Hüll-/Schalenstrukturen und den relativen Mengenanteil im Verhältnis zu anderen Faserstrukturen analysiert. Ferner erfolgte eine chemische Analyse hinsichtlich des Gehalts an löslichen Kohlenhydraten und Proteinen. Den nach der Siebtrennung erhaltenen Wasserphasen wurde eine wässrige Lösung, enthalten 10Gew% Zitronensäure und 10 Gew% Calciumchlorid, in einem Volumenverhältnis zwischen 1 und 3 Vol% zugesetzt, zur Erreichung eines pH der Prozessflüssigkeit zwischen 4,8 und 5,4. Nach einmaliger Durchmischung wurde eine Standphase von 2 Stunden eingehalten. Im Anschluss wurde (sofern vorhanden) eine Überstandphase, die nicht oder wenig getrübt war abgegossen und die Sedimentphase auf ein Filterbett geleitet. Nach 10 Stunden wurde die dehydrierte Masse von dem Filter abgezogen und chemisch hinsichtlich des Protein- und Kohlenhydratgehalts analysiert. Ferner erfolgte eine Verkostung dieser Fraktionen. Ferner erfolgte eine sensorische Prüfung gemäß Beispiel 3 der Fasermassen der einzelnen Siebturm-Fraktionen nach einer Spülung und Entfernung der freien Wasserphase mittels einer Siebpresse.

Ergebnisse: Bei alleiniger thermischer Desintegration in einem Wasserbad lagen nach einer Homogenisierung überwiegend großkalibrige Partikel vor, bei einem nur geringen Einfluss der Dauer der thermischen Exposition. Im Gegensatz hierzu waren die erhaltbaren Partikel, die durch eine Desintegration in den Lösungen b) bis e) erfolgte, bereits nach einer kurzen Erhitzungsdauer erheblich kleiner. In der mikroskopischen Analyse lagen nach alleiniger thermischer Desintegration (a)) zu allen Zeitpunkten und in allen Siebfraktionen Hüll- oder Schalenfragmente vor. Im Gegensatz hierzu waren bei einer kurzen Expositionsdauer mit den Lösungen b) bis e) Hüll-oder Schalenfragmente nur zu einem geringen Anteil in den Siebfraktionen mit einem Siebmaß von > 250μm erkennbar und bei längerer Expositionsdauer lagen solche nicht mehr vor. Während in den Partikelmassen einer rein thermischen Desintegration der überwiegende Anteil der löslichen Kohlenhydrate und Proteine, die zum Eingang in den Ausgangsmaterialien vorgelegen hatte, noch vorlag, waren in den Partikelfraktionen nach einem Aufschluss mit den Lösungen b) bis e) nur noch geringe bis minimale Mengen löslicher Verbindungen nachweisbar. Entsprechend konnten aus dem wässrigen Filtrat nach rein thermischer Degradation praktisch keine Proteine oder Kohlenhydrate mittels einer Aggregationsmittel-initiierten Aggregation gewonnen werden. Im Gegensatz hierzu konnten die theoretisch errechneten Mengen an Proteinen, die sich aus der Mengenanalyse des Ausgangsmaterials, abzüglich der Menge an Proteinen, die in den Partikel ermittelt worden war, mit dem Aggregations- und Dehydrierungsverfahren aus den Filtratphasen der Aufschlusslösungen b) bis e) gewonnen werden. Die Protein-/Kohlenhydratfraktionen, die nach einem Aufschluss mit den Lösungen b) bis e) erhalten wurden, waren praktisch geruchs- und geschmacksfrei. Während die durch einen rein thermischen Aufschluss gewonnenen Fasern noch als überwiegend hart und faserig bei der Verkostung bewertet wurden, wurden die Faserfraktionen, die durch eine Desintegration mit den Lösungen b) bis e) erhalten worden waren, als weich bis sehr weich, zart und cremig klassifiziert. In einer mikroskopischen Analyse der Siebrückstände nach Desintegration und Aufschluss mit den Lösungen b) bis e) zeigte sich, dass es sich bei den Partikeln um großvolumige Faserstrukturen handelt, die in weiteren Analysen sich als cellulose-basierte Fasern darstellten.

Beispiel 5

Untersuchung zum Aufschluss und Separierbarkeit von lignin-reichen Schalenanteilen und cellulose-basierten Fasern.

Mit den Pressrückständen von Jatrophakernen (JPK) und des Rapssamen (RPK) wurde ein wässriges Aufschlussverfahren durchgeführt. Hierbei wurde mit einer wässrigen Lösung eine Separation von Proteinen und Kohlenhydraten durchgeführt und die soliden Feststoffe mittels einer Kammerfilterpresse von den Wasseranteilen befreit. Der

Rückstand hatte eine Restfeuchte von 40 Gew% und einen intensiven und unangenehmen pflanzentypischen Geruch (daher keine Verkostung). Für den Aufschluss des Filterrückstands wurden in den folgenden Versuchen Je 100g des bröckeligen Rückstandes verwandt, die in die folgenden Lösungen gegeben und kontinuierlich über 4 Stunden gerührt wurden: 1. Lysin 0,3mol/l, 2. Polyarginin + Glutamin 0,2 mol/l, 3. Histidin + RDG 0,2 mol/l, 4. NaOH 0,5N, 5. Wasser. Anschließend wurden die Feststoffe mittels eines Filter separiert und 2-mal mit Wasser auf dem Filter durchspült. Hiernach wurden die Proben in 2 l Leitungswasser (LW) mit einem Schermischer für 60 Sek. verteilt. Aus der agitierten Suspension erfolgte nach Passage eines Vorsiebs mit einem Siebmaß von 500µm mittels einer Pumpe die Einleitung in einen Hydrozyclon (Akavortex, AKW, Deutschland) bei einem Differenzdruck von 1 bar. Der Unterlauf wurde aufgefangen und im Verhältnis 1:5 mit Leitungswasser gemischt und erneut dem Hydrocyclon zugeleitet. Der Oberlauf beider Separationsvorgänge wurde durch ein Vibrationssieb mit einem Siebmaß von 100µm von Schwebstoffen befreit, unter Erhalt des Siebrückstands 1 (SR 1). Der Unterlauf wurde durch ein 200µm Vibrationssieb von der freien Wasserphase und Kleinstpartikeln getrennt, unter Erhalt des Siebrückstands 2 (SR 2). Die Massen der lignin-reichen Schalen (SR2) sowie eine Probe der cellulose-basierten Fasern des (SR1) wurden auf einem Feinsieb verteilt und mittels Warmluft getrocknet. Die übrige Masse der cellulose-basierten Fasern wurde für die Durchführung weiterer Untersuchungen nach einer Auspressung des gebundenen Wasser gekühlt gelagert. Es wurden dann Proben für eine mikroskopische und chemische Analyse entnommen. Der getrocknete SR2 wurden durch eine Walzung vereinzelt. Es wurden Proben zur aufsicht-mikroskopischen sowie zur chemischen Analyse der Zusammensetzung der Partikel entnommen. Zur Prüfung der Wasserbindungskapazität wurden je 100 g in ein schmal-basiges Becherglas gefüllt, das im Bodenbereich einen seitlichen Ablauf hatte. Es wurde tropfenweise Wasser von oben auf das Schalenmaterial aufgeben bis Wasser aus dem Auslass austrat. Es wurde das Gewichtsverhältniss zwischen der Trockensubstanzmenge und dem gebundenen Wasser berechnet. Der gleiche Versuch wurde anstatt mit Wasser, mit einem Lampenöl durchgeführt und die Ölbindungskapazität errechnet. Eine Probe des SR1 wurde in ent-ionisiertem Wasser in einem Volumenverhältnis von 1:10 für 3 Minuten durch Rühren suspendiert und anschließend die Dimensionen der hierin befindlichen cellulose-basierten Fasern mit einem FiberLab FS 300 (Valmet) bestimmt. Die erhaltenen Fraktionen wurden mittels einer Auflichtmikroskopie hinsichtlich von Anhaftungen von organischen Bestandteilen (z.B. Proteine), sowie das Vorliegen von Agglomeraten und Verbackungen der Faserbestandteile sowie anderer Inhaltsstoffe des pflanzlichen Ausgangsmaterials untersucht.

Ergebnisse:

Der Filterrückstand, enthaltend die soliden Feststoffe, die im Anschluss an ein wässriges Aufschlussverfahren erhalten wurden, konnten nach einer Desintegration mit den Aufschlusslösungen 1) - 3) in Wasser leicht resuspendiert und hydratisiert werden, was erkenntlich war an einer raschen spontanen Separation der lignin-reichen Schalenanteile von den cellulose-basierten Fasern, die rasch sedimentierten, während die cellulose-basierten Fasern nur eine geringe Sedimentationsrate aufwiesen. Ein solches Verhalten bestand bei der verteilten Faserfraktion, die mit den Lösungen 4) und 5) behandelt worden waren, nicht. Mittels eines Hydrocyklon konnte bei den Proben, die mit den Lösungen 1) - 3) behandelt worden waren, bei der ersten Separation eine Trennschärfe zwischen cellulose-basierten Fasern und liginin-reichen Schalenanteilen von ca. 80% für die Oberlauffraktion und ca. 70% für die Unterlauffraktion abgeschätzt werden. Nach der 2. Separation der einzelnen Feststoffphasen war das Separationsergebnis für beide Fraktionen jeweils > 95%. Bei den Proben, die mit den Lösungen 4) und 5) behandelt worden waren, war eine derartige Separation nicht oder unvollständig (<60% Sortenreinheit) möglich. Mikroskopisch waren keine Anlagerungen organischer Bestandteile an den erhaltenen Feststoffpräparaten erkennbar, bei Proben die mit den Aufschlusslösungen 1) - 3) behandelt worden waren, während die übrigen Proben erhebliche Anlagerungen von organischen Materialien aufwiesen und z.T. in Form von großen Aggregaten vorlagen. Für die mit den Aufschlusslösungen 1) - 3) behandelten Präparate wurde eine Wasserbindekapazität der getrockneten lignin-reichen Schalen zwischen 250 und 300Gew% und die Ölbindungskapazität zwischen 280 und 320 Gew% ermittelt. Die entsprechenden Wasser- bzw. Ölbindungskapazitäten von Fraktionen, die mit den Lösungen 4) und 5) erhalten worden waren betrugen < 150Gew%, bzw. < 120 Gew%. Für die getrockneten cellulose-basierten Fasern, die mit den Aufschlusslösungen 1) - 3) hergestellt worden waren, betrug die Wasserbindungskapazität von 290 bis 340 Gew% und die Ölbindekapazität von 220 bis 310 Gew%. Für die aus einem Prozess mit den Lösungen 4) und 5) erhältlichen Fraktionen lagen die korrespondierenden Werte bei < 100 Gew% bzw. bei < 80 Gew%.

In der chemischen Analyse der Schalenfraktionen, die mit den Aufschlusslösungen 1) - 3) erhalten worden waren, ergab sich ein Ligningehalt zwischen 52 und 73 Gew%.

Die Volumendimensionen von cellulose-basierten Fasern, die nach Erhalt aus diesem Desintegrationsprozess erneut resuspendiert wurden, zeigte sich, dass deutlich größere Raumvolumen (+ 158 bis + 340vol%) bei cellulose-basierten Fasern vorlagen, die mit den Aufschlusslösungen 1) - 3) behandelt worden waren, als dies nach einer Behandlung mit den Lösungen 4) und 5) der Fall war. In der chemischen Analyse zeigte sich, dass der in den cellulose-basierten Fasern und in den lignin-reichen Schalenanteilen vorliegende Gehalt an Proteinen oder löslichen Kohlenhydraten <1 Gew% betrug nach einer Desintegration mit den Aufschlusslösungen 1) bis 3), während bei den anderen Präparaten ein Gehalt an Proteinen und löslichen Kohlenhydraten von > 10 Gew% vorlag. Bei der sensorischen

Bewertung wurde eine Geruchs- und Geschmacksfreifeit der mit den Aufschlusslösungen 1) bis 3) behandelten Faserbestandteile gefunden, während die übrigen Präparate einen unangenehmen Geschmack und Geruch hatten.

**Beispiel 6**

Untersuchung zu Aufschlussbedingungen bei pflanzlichen Ausgangsmaterialien.

Die folgenden Pressrückstände, die in Form von Pellets vorlagen und Mahlprodukte, die in Form eines Mehls vorlagen, mit dem jeweils angegebenen Gehalt der Inhaltsstoffe, wurden untersucht: Sojapresskuchen (SPK): Proteine 38Gew%, Kohlenhydrate 26 Gew-%, Faserstoffe 21Gew-%, Öl 11 Gew-%, sonstige 4 Gew-%; Rapspresskuchen (RPK): Proteine 35 Gew%, Kohlenhydrate 21 Gew-%, Faserstoffe 30Gew-%, Öl 9 Gew-%, sonstige 5 Gew-%; Jatropha-Presskuchen (JPK): Proteine 32 Gew%, Kohlenhydrate 22 Gew-%, Faserstoffe 25 Gew-%, Öl 13 Gew-%, sonstige 8 Gew-%; Hafermehl (HM): Proteine 40 Gew%, Kohlenhydrate 30 Gew-%, Faserstoffe 18 Gew-%, Öl 8 Gew-%, sonstige 4 Gew-%; Linsenmehl (LM): Proteine 33 Gew%, Kohlenhydrate 33 Gew-%, Faserstoffe 25 Gew-%, Öl 6 Gew-%, sonstige 3 Gew-%. Es wurde zunächst die erforderliche Aufschlussdauer ermittelt, indem jeweils 50g der Ausgangsprodukte in Gläsern mit 1000ml mit wässrigen Lösungen von: a) Arginin 0,2 molar, b) Histidin und Lysin jeweils 0,1 molar, c) Poly-Arginin 0,1 molar und Glutaminsäure 0,1 molar, d) $NH_4$ 0,2 molar, e) KOH, 0,2 molar, f) Harnstoff 0,3 molar, g) Natrium-Carbonat 0,5 Gew%, h) Natriumsulfit 0,2 Gew%, bei einer Durchmischungsfrequenz von 50/min aufgeschlossen wurden. Dabei wurde durch Beobachtung untersucht, wann keine sichtbaren Feststoff-Aggregate in der sich bildenden Suspension mehr vorlagen. Die jeweilige Suspension wurde zu diesem Zeitpunkt durch ein Vibrationssieb mit einem Siebmaß von 100$\mu$m gelassen und der Filterrückstand mikroskopisch, gemäß Beispiel 5, untersucht. Sodann wurde ein Test zur Bestimmung der minimal erforderlichen Volumenmenge für eine(n) vollständige(n) Durchdringung und Aufschluss der Ausgangsprodukte untersucht, indem zu je 100g der Produkte, beginnend mit einem Gewichtsverhältnis von 1:1, eine um jeweils 50ml ansteigende Menge der Aufschlusslösungen hinzugegeben wurde, unter langsamer Durchmischung über die in der Voruntersuchung ermittelte Zeitdauer, die für einen vollständigen Aufschluss für die jeweilige Aufschlusslösung erforderlich war. Zum Ende der jeweiligen minimalen Einwirkdauer wurden Proben entnommen und bei 3000 U/Min. über 3 Minuten zentrifugiert. Ein ausreichendes Volumen, zur Herstellung einer vollständigen Quellung wurde für das Massenverhältnis zwischen der Ausgangsmaterial und der Aufschlusslösung festgelegt ($P_{ref}$), bei dem sich nach der Zentrifugation einer Probe nur eine minimale freie Flüssigkeitsschicht als Überstand darstelle. Je 10g der Ansätze, bei denen mit der minimal erforderlichen Volumenmenge der jeweiligen Ansätze sich eine maximal erreichbare Quellung eingestellt hatte, wurden in 90ml Stadtwasser gegeben, durch Schütteln verteilt und sodann durch ein Vibrationssieb mit einem Siebmaß von 100$\mu$m geleitet. Das Eluat wurde durch ein 10$\mu$m Feinsieb gelassen. Der jeweilige Filterrückstand wurde in Wasser suspendiert und die hierin vorhandenen partikulären Strukturen nach einer identisch vorgenommenen Filtration mikroskopisch (Versuchsdurchführung gemäß Beispiel 1) analysiert. Der Siebrückstand wurde bei einer Versuchswiederholung getrocknet und die Substanzmenge der zurückgehaltenen Partikel ermittelt. In einer weiteren Untersuchung wurden 100g der Masse des Ansatzes $P_{ref}$ in 900ml Wasser mit einen Laminarmischer für 5 Minuten durchmischt. Die Suspension wurde dann durch ein Schwingsieb geleitet. Der Siebrückstand wurde in einer Kammerfilterpresse von gebundenem Wasser befreit und der Restfeuchtegehalt bestimmt. Dann wurde der Pressrückstand in einer 0,5 molaren NaOH-Lösung suspendiert und über 1 Stunde gemischt. Die Suspension wurde erneut durch das Schwingsieb geleitet und der Filterrückstand mit einer Kammerfilterpresse getrocknet.

Ergebnisse:

Trotz eines signifikant größeren Quellvolumens das bei einem Aufschluss mit den Lösungen a) - c), g) und h), im Vergleich zu den Lösungen d) - f) vorlag (+160 bis + 260 Gew% vs. + 80 bis +160 Gew%) war die Zeitdauer, um dies zu erreichen, signifikant kürzer (8 bis 20 Minuten vs. 40 bis 300 Minuten). Im Siebrückstand (Siebmaß 100$\mu$m) nach Verteilung der Proben der Aufschlussgemische zum Zeitpunkt der maximalen Quellung in einem Verteilungsvolumen, die durch einen Aufschluss mit den Lösungen a) - c), g) und h) hergestellt worden waren, zeigten sich in der mikroskopischen Analyse keine Aggregate der soliden Feststoffe, die praktisch frei waren von anhaftenden organischen Resten. Im Gegensatz hierzu waren im Siebrückstand der Aufschlussgemische, die mit den Lösungen d) - f) hergestellt worden waren, zum ZP Q max. zahlreiche Aggregate/Konglomerate von soliden Feststoffen, die teilweise vollständig von einer organischen Masse eingeschlossen waren, vorhanden. Im Gegensatz zu den Siebrückständen der Proben, die mit den Lösungen a) - c), g) und h) erhalten worden waren, bei denen dekompaktierte großvolumige und expandierte cellulose-basierte Fasern vorlagen, waren solche nur vereinzelt und gering expandiert erkennbar. Auf dem Feinstfilter (Siebmaß 10$\mu$m) des Eluates der zuvor erfolgten Filtration waren praktisch keine partikulären Strukturen nach einem Aufschluss mit den Lösungen a) bis c), g) und h) zu erkennen, während es bei den Eluaten, die aus einem Aufschluss mit den Lösungen d) bis f) erhalten worden waren, zahlreiche Feststoffpartikel vorlagen, die teilweise für eine Verlegung der Filterfläche führten; diese Partikel waren überwiegend cellulose-basierte Fasern, die eine starke Belegung mit organischen Verbindungen aufwiesen. Das Trockengewicht der Siebrückstande nach Aufschluss und Verteilung der löslichen und gelösten Konstituenten war bei den Proben, die aus dem Aufschluss mit den Lösungen d - f) erhalten worden waren, signifikant größer, als bei denen, die durch einen Aufschluss mit den Lösungen a) - c), g) und h) erhalten wurden (+ 130 bis + 350 Gew%). Durch einen Aufschluss des Siebrückstands mit einer Lauge wurden bei dem Material, das nach einem Aufschluss mit den Lösungen a) bis c), g) und h) erhalten worden war, praktische keine Proteine mehr freigesetzt, während im Siebrückstand des Aufschlussgemisches nach Ansatz mit den Lösungen d) bis f) zwischen 8 und 22 Gew% an Proteinen herausgelöst wurden.

**Beispiel 7**

Untersuchung zu Anwendungen von lignin-basierten Pflanzenschalen zur Ölbindung

Die lignin-reichen Schalenfraktionen, die aus den Versuch 5 (Jatropha (JS), Raps (RS)) durch die Aufschlussverfahren 1) - 3) erhalten worden waren, sowie einer lignin-reichen Schalenfraktionen von Jatropha und Raps, bei denen ein Aufschluss mit NaOH (NO) erfolgt war, wurden luftgetrocknet und vereinzelt. Es wurde die mittlere Größenverteilung der Partikel sowie das Raumgewicht ermittelt. In ein Glasrohr mit einem Durchmesser von 10mm, das eine konische Spitze am Boden hatte, die durch ein offenporiges PP-Gewebe abgeschlossen war, wurde das getrocknete Schalenmaterial bis zu einer Höhe von 20cm eingefüllt. Es wurde das Gewicht der eingefüllten Schalenmasse bestimmt. Zum Vergleich wurden in gleicher Weise kommerzielle Öladsorptionsmittel (ÖAM1: Clean Sorb, BTW, Deutschland; ÖAM2: PEA SORB, Zorbit, Deutschland) in gleichartige Glasrohre gefüllt. Die gefüllten Glasrohre wurden senkrecht in einer Halterung montiert, wobei die Spitzen jeweils in ein Bad mit Sonnenblumenöl und in einem weiteren Versuch mit Ölsäure eingetaucht waren. Es wurde alle 5 Minuten die Höhe der Öllauffront, die durch eine Veränderung der Farbe, bzw. der Reflektion der Adsorptionsmittel deutlich erkennbar war, registriert. Die Versuche wurden nach 2 h beendet und die Öl-Steighöhe (Ö-StH 1) sowie die Differenzmenge des Ölbades zum Ausgangsvolumen (ads. Öl 1) bestimmt. Anschließend wurde der gesamte Füllinhalt der Steigrohre sorgfältig in ein Becherglas ausgeblasen und gewogen. Hiernach wurden jeweils 100ml Ethanol hinzugegeben. Die Suspensionen wurden unter Luftabschluss und Erwärmung auf 60°C mit einem Magnetrührer über 30 Minuten agitiert. Anschließend Ablassen der Flüssigphase mit einer Nutsche und 2-malige Spülung (Ethanol/$H_2O$) des Siebrückstandes der Schalen- bzw. Adsorptionsmittelmassen, die anschließend bei 60°C über 12 h getrocknet wurden. Dann wurde das Gewicht und die Konsistenz der getrockneten Massen bestimmt/ermittelt (Gew-Diff). Anschließend wurde der Versuch mit den erhaltenen getrockneten Massenfraktionen wiederholt und erneut die Ölsteighöhe (Ö-StH 2) und das Volumen des adsorbierten Öls (ads. Öl2) bestimmt.

Ergebnisse (numerische Ergebnisse in Tabelle 1) Die mit den erfindungsgemäßen Aufschlusslösungen gewonnenen und hergestellten lignin-basierte Pflanzenschalen, wiesen im Gegensatz zu lignin-basierten Schalenanteilen, die mit einer Alkalilauge gereinigt worden waren, eine sehr rasche und hohe Aufnahmeleistung für Öle auf, die auch besser war, als die von kommerziellen Öladsorbern. Dies betraf sowohl die Aufnahmeleistung gegen die Schwerkraft, als auch das adsorbierte Gesamtvolumen. Eine Reinigung von den adsorbierten Ölen durch ein Lösungsmittel war weitgehend vollständig möglich bei den lignin-basierten Pflanzenschalen, die mit den erfindungsgemäßen Aufschlusslösungen erhalten worden waren, während bei nicht erfindungsgemäß gewonnenen lignin-reichen Schalenanteilen sich das adsorbierte Öl nur unvollständig entfernen ließ. Auch bei den kommerziellen Produkten war die Extraktion eines adsorbierten Öls unvollständig. Bei einem erneuten Zyklus mit den zuvor gereinigten Adsorptionsmitteln waren bei den lignin-reichen Schalenanteilen, die mit den erfindungsgemäßen Aufschlusslösungen hergestellt worden waren, die Geschwindigkeit und die Menge der Ölaufnahme vergleichbar mit der des zuvor durch geführten Versuchs, während die Öladsorptionsleistung bei den übrigen gereinigten Präparaten deutlich hinter der des ersten Einsatzzyklusses blieb.

**Tabelle 1**

| | Ö-StH 1 (cm) | ads. Öl 1 (ml) | Gew-Diff. (g) | Ö-StH 2 (cm) | ads. Öl 2 (ml) |
|---|---|---|---|---|---|
| JS | 6,4 | 3,1 | 3,1 | 6,4 | 3,1 |
| RS | 5,8 | 2,9 | 2,8 | 5,7 | 2,8 |
| SS | 5,2 | 2,8 | 2,7 | 5,2 | 2,7 |
| AS | 5 | 2,6 | 2,6 | 5,2 | 2,6 |
| JS-NO | 2,3 | 1,1 | 0,5 | 0,8 | 0,4 |
| RS-NO | 1,2 | 0,9 | 0,4 | 0,5 | 0,2 |
| ÖAM1 | 3,2 | 1,9 | 1,1 | 2,2 | 0,8 |
| ÖAM2 | 3,6 | 2,2 | 1,6 | 2,6 | 1,2 |

(fortgesetzt)

| | Ö-StH 1 (cm) | ads. Öl 1 (ml) | Gew-Diff. (g) | Ö-StH 2 (cm) | ads. Öl 2 (ml) |
|---|---|---|---|---|---|
| | | | | | |
| Ö-StH1 = Öl-Steigrohrhöhe 1. Zyklus; ads. Öl1 = Menge adsorbiertes Öl 1. Zyklus; Gew.-Diff. = Differenzgewicht der Adsorptionsmittel vor/nach Lösungsmittel-Extraktion; Ö-StH2 = Öl-Steigrohrhöhe 2. Zyklus; ads. Öl2 = Menge adsorbiertes Öl 2. Zyklus; | | | | | |

**Beispiel 8**

Untersuchung zur Verwendung von lignin-reichen Pflanzenschalen zur Öl-Abscheidung aus ölhaltigen Aerosolen.

Lignin-reiche Pflanzenschalen von Jatropha (JKP) aus dem Beispiel 5, hergestellt mit den Ausschlusslösungen a) Arginin 0,2 molar (JKPa) und d) $NH_4$ 0,2 molar (JKPd), wurden zwischen 2 Siebplatten von 10 x 10cm mit einer Füllhöhe von 2cm verteilt und die Siebe in einem Rahmen arretiert. Der Siebrahmen wurde in einen Luftschacht seitlich dicht abschließend eingebracht. Eine Druckluftquelle sorgte für einen konstanten Luftfluss (70°C) durch den Filter mit einem Volumenstrom von $50m^3$ /h. In den Luftstrom wurde ein Ultraschallvernebler platziert, der eine Öl-Wasseremulsion mit einer konstanten Rate vaporisierte. Es wurde der Druck der sich unterhalb des Filters aufbaute mit einem Druckaufnehmer monitoriert. Oberhalb des Siebes erfolget der Luftauslass über einen Ölnebelabscheider (contec), der einen 99,5%igen Rückhalt von Öl aus einem Luftgemisch gewährleistet. Zum Vergleich wurden in weiteren Versuchen konventionelle Luftfilter (LF), Stahlgeflechtfilter (SGF), Aktivkohlefilter (AKF) und ein Membranfilter (MF) in dem Luftschacht montiert. Die Versuche wurden nach 30 Minuten beendet, dabei wurde ein Ölvolumen von 20ml vaporisiert. Im Anschluss wurde der Membranfilter entnommen und das Differenzgewicht zum Ausgangswert ermittelt. Die lignin-reichen Schalenanteile wurden aus dem Filtergehäuse entnommen und in einem Becherglas in Aceton suspendiert und gebundenes Öl extrahiert. Die separierten Aceton-Phasen wurden verdampft und der Rückstand gewogen. Die Ölabscheiderate wurde aus der Gewichtsdifferenz des Öladsorptionsflieses und dem vernebelten Öl berechnet.

Ergebnisse: Bei Verwendung eines Membran- und eines Aktivkohlefilters kam es zu einem Druckanstieg im zuführenden Luftschacht (max. Druckdifferenz 35 bzw. 52mbar) durch eine Luftstromwiderstandserhöhung. Bei Verwendung von JKPd) bestand zu Beginn ein höherer Druck, als bei Versuchen mit lignin-reichen Schalenanteilen, die mit den erfindungsgemäßen Aufschlusslösungen erhalten worden waren (JKPa). Bei diesem kam es im Verlauf des Versuches auch zu keiner Druckerhöhung im Zufuhrschacht, während sich der Druck bei Präparat JKPd) leicht erhöhte. Die Ölabscheidungsrate betrug bei den konventionellen Luftfiltern zwischen 48 und 62 Gew%. Nicht erfindungsgemäß hergestellte lignin- reichen Schalenanteile hatten eine Ölabscheiderate von 55Gew%, während die lignin-reichen Schalenanteile, die mit den erfindungsgemäßen Aufschlusslösungen hergestellten lignin-reichen Schalenanteile eine Ölabscheidungsrate von 98 Gew% aufwiesen. Aus dieser Fraktion konnten 18,4 g Öl durch Extraktion zurückgewonnen werden, während bei dem Präparat JKPd) nur 5,2 g zurückgewonnen werden konnten.

**Beispiel 9**

Untersuchung zum abrasiven Reinigungsverhalten lignin-basierter Schalen.

Die Schalenfraktion, die im Beispiel 5 aus eine Rapspresskuchenaufschluss mit den Aufschlusslösungen 1) und 2) gewonnen worden waren, wurde in einer weiteren Desintegrations-/Aufschlussstufe mit den folgenden Verfahren behandelt: 1. Arginin 0,3molar, 2) Arginin 0,3 molar + Harnstoff 10 Gew%, 3) Arginin 0,1 molar + $NaSO_3$ 1 Gew%, 4) NaOH 0,5 N, 5) Wasser. Die Verbindungen wurden in einem entionisierten Wasser vollständig gelöst. Je 10 g der Schalenfraktion wurden in 200ml der Lösungen suspendiert und für 20 Minuten gerührt. Hiernach wurden die Suspensionen in einem Autoklaven mit 120°C bei 2 bar über 11 Minuten behandelt. Hiernach ausgiebige Spülung mit Wasser über einem Sieb. Nach einer Pressung erfolgte eine Trocknung und Vereinzelung. Es wurden Proben zur Analyse entnommen. Suspendierung der Schalenfraktionen in einem nicht-ionischen Tensid. 2ml der Tensidlösung mit den Schalen wurde auf einem Hochglanz-Kunststoff, auf dem verschiedene inkrustierte Materialien, wie Eiweiß, Soßen oder Nudelteig vorlagen, gegeben. Ein Holzstempel mit einem Gewicht von 500g wurden 30-mal durch eine automatische Schubvorrichtung koaxial zur Oberfläche der Kunststofffolien über die Inkrustierungen bewegt. Anschließend Abspülen der Oberflächen. Nach Trocknung wurde der Restverschmutzungsgrad sowie das Vorliegen von Kratzern oder Furchen bewertet.

Ergebnisse: In der mikroskopischen Analyse zeigte sich, dass die mit den Verfahren 1. bis 3. hergestellten lignin-basierten Schalenanteile in vollständig vereinzelter Form vorlagen und deutlich kleinere Flächendimensionen aufwiesen, als dies bei lignin-basierten Schalenanteilen, die mit den Verfahren 4. und 5. erhalten wurden, der Fall war. Die Schalenanteile, die nach den Verfahren 1. bis 3. hergestellt worden waren, waren überwiegend abgerundet und hatten

glatte Außenkonturen. Bei den mit den Verfahren 4. und 5. erhaltenen Schalenfraktionen lagen überwiegend spitzwinklige und gezackte Außenkonturen vor.

Bei den Oberflächen, die mit lignin-reichen Schalenfraktionen, die mit den Verfahren 1. bis 3. hergestellt worden waren, behandelt wurden, war eine vollständige Abtragung der Oberflächenverunreinigungen erreicht worden, während bei den Schalenfraktionen, die nach den Verfahren 4. und 5. erhalten wurden, noch Anhaftungsreste vorlagen. Die Oberflächen, die mit den lignin-reichen Schalen, die nach den Verfahren 1. bis 3. hergestellt worden waren, waren ohne Kratzspuren. Oberflächen die mit Schalenfraktionen, die durch die Verfahren 4. und 5. erhältlich waren, behandelt wurden, wiesen mäßige bis deutliche Kratzspuren auf.

**Beispiel 10**

Untersuchungen zu Aufschlussverfahren zur Gewinnung von cellulose-basierten Fasern

Bei jeweils 1 kg von A) Raps-Presskuchen, B) Maisgries, C) ganzen Sojabohnen, D) Zuckerrübenschnitzeln nach Extraktion der Melasse, erfolgten die folgenden Versuchsdurchführungen: Wässriger Aufschluss, durch Einlegen der Materialien A) und B) in ein Bad der Aufschlussverbindungen bei einer Temperatur von a) 25°C und b) 60°C jeweils über 60 Minuten unter einer kontinuierlichen Rührmischung, c) ferner mittels einer thermischen Desintegration in einem Autoklaven bei 125°C der in die Aufschlusslösungen eingelegten Materialien C) und D) für jeweils 15 Minuten. Als Aufschlusslösungen wurden verwandt: 1. Wasser, 2. 0,1 N Natronlauge, 3. 30%ige Schwefelsäurelösung, 4.wässrige Lösung von Arginin 0,3molar, 5. wässrige Lösung von Lysin 0,3 und Glutamin 0,2molar, 6. 1,5Gew%ige Lösung von Natriumbisulfit, 7. 0,5 Gew%ige Lösung von Natriumhydrogencarbonat. Anschließend wurden die jeweils erhaltenen Gemische von freier Flüssigkeit durch eine Zentrifugation befreit, sodass sie als formfeste Massen vorlagen. Zur Separation von gelösten Bestandteilen wurden die Massen in jeweils 10 l Wasser gelöst und mit einem Rührwerk über 10 Minuten fein verteilt. Anschließend wurde eine Abtrennung der Wasserphase durch ein Vibrationssieb mit einem Siebmaß von 200μm vorgenommen. Von den erhaltenen Fraktionen wurden Proben zur Analyse entnommen. Die tropffreien Massen wurden gewogen und anschließend in einem Trockenschrank getrocknet. Aus der Gewichtsdifferenz zwischen der nassen und getrockneten Masse wurde das Wasserbindungsvermögen berechnet. Die Feuchtproben wurden mikroskopisch bezüglich der Struktur der Fasern sowie dem Grad einer Belegung/Verklumpung mit anderen organischen Bestandteilen analysiert. Das erhaltene Trockenmaterial wurde auf den Gehalt an löslichen Kohlenhydraten und Proteinen untersucht. Die Anzahl der Fasern (pcs) pro Gramm der Feuchtmasse, die maximale Raumausdehnung sowie das Aspektverhältnis wurden mit einem Faseranalysegerät (FiberLab FS300, Valmet) analysiert.

Ergebnisse:

Ein Aufschluss der Ausgangsmaterialien durch Wasser konnte nicht erreicht werden. Mit einer Lauge war ein teilweiser Aufschluss der Ausgangsmaterialien A) und B) bei Raumtemperatur möglich, aber nicht mit der Aufschlusslösung 3. Ein weitgehender Aufschluss konnte mit der Aufschlusslösung 2. bei erhöhter Temperatur (A)b) und B)b)) sowie thermischer Desintegration (C) und D)) erreicht werden. Ein Aufschluss mit einer Schwefelsäurelösung war unter den Versuchsbedingungen nicht möglich. Mit den Aufschlusslösungen 4 - 7 konnte unter allen Versuchsbedingungen ein vollständiger Aufschluss erreicht werden. Mikroskopisch zeigte sich bei den Verfahren, bei denen makroskopisch kein vollständiger Aufschluss erreicht worden war, das Vorliegen von soliden Partikeln und/oder Fasern, die teilweise eingeschlossen waren von anderen organischen Verbindungen oder Bestandteilen sowie das Vorliegen von Verbackungen mit anderen Fasern oder organischen Verbindungen. In der chemischen Analyse wurden bei einem makroskopisch unvollständigen Aufschluss lösliche Kohlenhydrate und Proteine im Siebrückstand nachgewiesen. In den Aufschlussversuchen, die mit den Aufschlusslösungen 4 - 7 erfolgt waren, kam es bei allen Versuchsdurchführungen zu einer makroskopisch vollständigen Separation von Bestandteilen, die nicht cellulose-basierten Fasern entsprachen (die Filtratlösungen passierten ferner ein Sieb mit dem Siebmaß von 20μm ohne eine Rückstandsbildung). Das Volumen der tropffreien Massen, die nach den Aufschlussverfahren mit den Aufschlusslösungen 4 - 7 erhalten wurden, war deutlich größer, als die Volumina der Aufschlussmassen nach Durchführung des Aufschlussverfahren mit Wasser oder einer Alkalilauge. Entsprechend war das Wasserbindevermögen erheblich geringer (80 - 190 Gew%) bei diesen Verfahren, als bei dekompaktierten cellulose-basierten Fasern, die mit den Aufschlusslösungen 4 bis 7 erhalten worden waren (680 - 850 Gew%). Korrespondierend zeigte sich in den chemischen Analysen, dass in der erhaltenen Massen cellulose-basierter Fasern nach Verwendung der Aufschlusslösungen 4 - 7 ein Restgehalt an löslichen Kohlenhydraten von < 1Gew% und an Proteinen von < 0,5 Gew% vorlag. In den anderen Aufschlussprodukten lagen die Gehalte an löslichen Kohlenhydraten und Proteinen zwischen 15 und 37Gew%. Die getrockneten Aggregate von Produkten mit einem Restgehalt von > 1 Gew% an löslichen Kohlenhydraten und Proteinen waren sehr hart und ließen sich nur unvollständig hydratisieren. Im Gegensatz hierzu waren die Aggregate, die nach Trocknung aus einem Aufschluss mit den Aufschlusslösungen 4 - 7 erhalten worden waren, innerhalb von 5 Minuten vollständig hydratisierbar. Es konnten durch Vermahlung Pulver erhalten

werden, die rasch in Wasser quollen und eine weiche Fasermasse bei einer erneuten Einengung ergaben. Die Analyse der Dimensionen und Anzahl der cellulose-basierten Fasern, die nach einem Aufschlussverfahren mit den Aufschlusslösungen 4 - 7 erfolgt waren, zeigte eine breite und gleichmäßige Verteilung in einem Bereich zwischen 20μm und 600μm bei einer Anzahl an Fasern von 550 bis 237pcs/g sowie ein Aspektverhältnis von 2,5:1 bis 22:1. Das Längengewicht lag zwischen 0,8 bis 2,5 mg/100m.

**Beispiel 11**

Untersuchung zur Herstellung von cellulose-basierten Fasern aus mechanischen Aufschlussverfahren

Für die Versuche wurde jeweils 1 kg der folgenden Ausgangsmaterialien verwendet: A) Sojaschrot, B) Haferflocken, C) Traubenkernmehl.

Es wurden die folgenden Verfahrensschritte durchgeführt:

V1) Vermahlung der Ausgangsprodukte auf ein mittleres Kornmaß von 100μm. Hiernach Windsichtung mit einem Feinstsichter (Netsch CFS 5);

V2) Vermahlung der Ausgangsprodukte auf ein mittleres Kornmaß von 100μm. Hiernach Aufgabe einer wässrigen Lösung, in der die folgenden Verbindungen in gelöster Form vorlagen: a) Arginin 0,2 molar, b) Histidin und Lysin jeweils 0,1 molar, c) Poly-Arginin 0,1 molar und Glutaminsäure 0,1 molar, d) $NH_4$ 0,2 molar, e) KOH, 0,2 molar, f) Harnstoff 0,3 molar, in einem Gewichtsverhältnis von 1:1, sodass das Ausgangsmaterial vollständig in der wässrigen Lösung für 4 Stunden einlag. Anschließend Spülung des gesamten Reaktionsgemisches mit Wasser in einem Volumenverhältnis von 1:10 unter Verwendung eines Stabmixers. Die Suspension wurde durch ein Sieb mit einem Siebmaß von 200μm geleitet. Der Siebrückstand wurde 2-mal mit dem gleichen Volumen einer Wasserphase gespült und der Siebrückstand anschließend auf einer porösen PP-Folie in einer Schichtdicke von 1 mm ausgerollt und getrocknet. Anschließend wurde eine Vermahlung der getrockneten Massen vorgenommen. V3) Die Ausgangsmaterialien werden in nicht weiter zerkleinerter Form in die folgenden wässrigen Lösungen gegeben: a) Arginin 0,3molar, b) Polylysin 0,2 molar, c) Polyglutamat 0,2 molar und Histidin 0,4 molar, d) Triethylamin 0,2 molar, e) NaOH, 0,2 molar, f) Natrium-Carbonat 0,3 Gew%. Das Zugabevolumen der wässrigen Lösungen wurde so gewählt, dass gerade eine vollständige Durchtränkung des Ausgangsmaterials erfolgt war. Die Ansätze wurden für 24 Stunden stehen gelassen. Anschließend Einrühren der Gemische in Wasser in einem Volumenverhältnis von 1:10 und Mischen mit einem Stabmixer. Hiernach Durchleiten der Suspension durch ein Sieb mit einem Siebmaß von 200μm. Der Siebrückstand wurde 2-mal mit dem gleichen Volumen einer Wasserphase gespült und der Siebrückstand anschließend auf einer porösen PP-Folie in einer Schichtdicke von 1 mm ausgerollt und getrocknet. Anschließend wurde eine Vermahlung der getrockneten Massen vorgenommen. Von den jeweils erhaltenen Trockenmassen wurden chemische Analysen auf den Gehalt an löslichen Kohlenhydraten und Proteinen (gemäß Beispiel 5) durchgeführt. Jeweils 50g der erhaltenen gepulverten Fasermassen wurden in 500ml Wasser bei einer Temperatur von 30° C unter kontinuierlichem Rühren über 1 Sunde gelöst. Hiervon wurden 100 ml in einen schmalbasigen Messzylinder gefüllt und die Sedimentationszeit bestimmt, in der es zu einem Absinken der sichtbaren Fasern unter die 50ml-Marke gekommen war.

Es wurden ferner Proben für eine Analyse der Faserdimensionen (Analytik gemäß Beispiel 6) entnommen. Die restliche Suspension wurde eingeengt, sodass eine Restfeuchtigkeit von 40 - 50Gew% erreicht wurde. Die erhaltenen pasten-artigen Massen wurden von 4 fachkundigen Prüfern verkostet. Dabei wurden folgende Eigenschaften beurteilt: Eigengeschmack, Körnigkeit, Mundgefühl, Schluckempfinden.

Ergebnisse: Die Faserfraktionen der Aufschlussuntersuchung V1 enthielten noch größere Mengen an löslichen Kohlenhydraten (24-36 Gew%) und Proteinen (18 - 29 Gew%). Die Fasermassen der Aufschlussuntersuchungen V2 und V3, die mit den Aufschlussverbindungen a) - c) hergestellt worden waren, wiesen Restgehalte an löslichen Kohlenhydraten und Proteinen von < 0,5 Gew% auf. Nach Verwendung der anderen Verbindungen (d) - f)) zum Aufschluss waren in den erhaltenen Fasermassen Gehalte an löslichen Kohlenhydraten von 12 - 22Gew% und von Proteinen von 14 - 25 Gew% enthalten. Die Faserfraktion, die aus der Aufschlussuntersuchung V1 erhalten worden war, lag kompaktiert vor und ließ sich nur teilweise in Wasser hydratisieren und es kam zu einem sehr raschen Sedimentieren nach Einfüllen in den Messzylinder. Die gepulverten Faserfraktionen, die aus den Aufschlussuntersuchungen V2 mit den Aufschlussverbindungen d)- f) hergestellt worden waren, wurden teilweise hydratisiert, während sich die gepulverten Fasern des Aufschlussversuchs V3, die mit den Aufschlussverbindungen d) - f) durchgeführt wurden, kaum hydratisierbar waren. Die ermittelte Sedimentationszeit betrug bei V2 15 - 25 Minute und bei V3 4 - 10 Minuten für Aufschlussprodukte, die mit diesen Aufschlussverbindungen erhalten wurden. Im Gegensatz hierzu wurde eine vollständige Hydratation des gepulverten Materials der Aufschlussversuche V2 und V3, die mit den Aufschlussverbindungen a) - c) durchgeführt worden waren, registriert. Die gelösten cellulose-basierten Fasern dieser Aufschlussfraktionen zeigten eine sehr geringe Sedimentationsgeschwindigkeit in einem Messzylinder, sodass eine Absenkung der gelösten cellulose-basierten Fasern unter die 50ml-Marke erst nach 12 bis 27 Stunden vorlag. Die Faserlängen betrugen im Mittel zwischen 150 und 300μm, die Faserbreite zwischen 11 und 19μm. Das Faserlängengewicht betrug zwischen 1,2 und 5,1 mg/100m. Die Verkostung des nassen Fasermaterials der Aufschlussuntersuchung V1) ergab, dass eine erhebliche Belastung an Geruchs- und Geschmacksstoffen, die denen der Ausgangsmaterialien entsprachen, bestand. Die Faserfraktion der Aufschlussuntersuchungen V2 und V3, die mit den Aufschlussverbindungen d)- f) durchgeführt worden waren, wiesen ebenfalls, allerdings in einer geringeren Intensität, Geruchs- und Geschmacksaromen des Ausgangsmaterials auf. Sie waren allerdings ungenießbar aufgrund eines intensiven Geruchs- oder Geschmacks der jeweils verwandten Aufschlussverbindung. Im Gegensatz hierzu lagen bei den Faserfraktionen der Aufschlussuntersuchungen V2 und V3, die mit den Aufschlussverbindungen a) - c) erhalten worden waren, keine Geruchs- oder Geschmackstoffe vor, sodass der Geruch und der Geschmack als neutral bewertet wurden. Ferner wiesen cellulose-basierte Fasern, die in den Versuchen V2 und V3 mit den Aufschlusslösungen a) - c) gewonnen worden waren, keine Körnigkeit, ein angenehmeres Mundgefühl sowie eine angenehme Schluckbarkeit auf.

**Beispiel 12**

Untersuchung zur Herstellung von cellulose-basierten Fasern aus organischen Ausgangsmaterialien.

Die Herstellbarkeit von cellulose-basierten Fasern, die einen Restgehalt an Proteinen und/oder Kohlenhydraten aufweisen, der < 1 Gew% beträgt und die keine Geruchs-, Geschmacks- oder Farbstoffe in ein wässriges Medium abgeben, wurde bei verschieden vorbehandelten Ausgangsmaterialien untersucht.

**Versuchsreihe I.** Eine organische Masse, in der cellulose-basierte Fasern angereichert vorlagen nach einer Extraktion von löslichen Proteinen, deren Ausgangsmaterial Soja-Kerne und ungeschälte Kidney-Bohnen waren, wurde verwandt. Zur Vorbereitung waren die Kerne, bzw. ungeschälten Bohnen mechanisch zerkleinert worden und über 4 bzw. 8 Stunden in einer Lösung von Poly-Arginin und Histidin, bzw. Lysin und Polyglutamat eingelegt gewesen. Die organische Masse, mit einem Feststoffanteil von 40 Gew% (TG), wurde in einem Volumenverhältnis von 1:10 bzw. 1:5 in Wasser suspendiert, sodann erfolgte eine Intensivmischung, gefolgt von einer Filtration mit einem Siebmaß von 100μm. Der Siebrückstand bestand überwiegend aus cellulose-basierten Fasern, allerdings waren größere Mengen an Schalenmaterialien sowie an komplexen organischen Feststoffen (Stärkekörner) hierin enthalten. Die Fasermassen wurden in Wasser in einem Volumenverhältnis von 1:10 gelöst und mit einer Pumpe durch einen Hydrozyklon (Akavortex, AKW, Deutschland) befördert. Der Oberlauf wurde aufgefangen und filtriert (Siebmaß 50μm) mittels eines Bogensiebs. Der Siebrückstand wurde analysiert.

**Versuchsreihe II.** Thermisch desintegriertes Pflanzenmaterial, bei dem cellulose-basierte Fasern noch zu großen Aggregaten zusammengeschlossen waren, wurde für das Aufschlussverfahren verwendet. Hierbei waren die Ausgangsmaterialien Quitten, Karotten sowie Sellerie, die eine thermische Behandlung in einem Wasserbad mit Temperaturen zwischen 90° und 98°C über 1 bis 3 Stunden unterzogen und mit einem Stabmixer zu einer homogenen Masse zerkleinert worden waren. In der Analyse bestanden Aggregate von > 2.000μm in einem Anteil von > 15 Gew%. Ferner lagen ein art-typischer Geruch und Geschmack vor. Die Massen wurden mittels einer Kammerfilterpresse bis auf eine Restfeuchte von 50 - 80 Gew% entwässert. Die erhaltenen Massen wurden in einem Gewichtsverhältnis von 1:5 in einer wässrigen Lösung enthaltend a) Arginin 0,3 molar, b), Poly-Lysin, Harnstoff 10%), c) Arginin 0,1 molar + $NaSO_3$ 10% suspendiert und die Suspension in einem Autoklaven über 8 und 16 Minuten bei einer Temperatur von 120°C behandelt. Das Aufschlussergebnis wurde filtriert und 2-mal erschöpfend mit Wasser gespült. Vom finalen Siebrückstand wurden Proben zur Analyse entnommen.

**Versuchsreihe III.** Mechanisch desintegriertes Pflanzenmaterial mit einem hohen Anteil an Farbstoffen wurde aufgeschlossen. Hierzu wurde ein Pürre von Roten Beeten, die Faserfraktion eines Aufschlusses von Sonnenblumenkern-Presskuchen mit einer Argininlösung sowie die Faserfraktion eines wässrigen Aufschlusses eines Maisgrieses verwandt. Die Ausgangsmassen wurden zunächst entwässert auf eine Restfeuchte von 40 bis 70%. Anschließend Suspendierung der Massen in wässrigen Lösungen enthaltend a) Poly-Arginin, Harnstoff 5%; b) Lysin 0,3 molar, SDS 2%, Histidin 0,3 molar; c) Arginin 0,1 molar, DMSO 2%, in einem Gewichtsverhältnis von 1:5 bis 1:10 mit einem Stabmixer. Die Suspensionen wurden in einer Versuchsreihe (T60) über 24 Stunden bei 60°C gerührt und in einer anderen Versuchsreihe (T120) über 8 Minuten bei 120°C in einem Autoklaven behandelt. Die erhaltenen Suspensionen wurden filtriert und 2-mal ergiebig mit Wasser gespült. Vom finalen Siebrückstand wurden Proben zur Analyse entnommen.

Die durchgeführte Analytik umfasste die Analyse der Größenverteilung der cellulose-basierten Fasern, des Gehalts an Proteinen und löslichen Kohlenhydraten (gemäß Beispiel 7), Untersuchungen zur Herauslösbarkeit von Farbstoffen (Prüfung durch Einlage der Prüffraktion in Wasser und wässrige Tensidlösungen über 48 Stunden mit anschließender Filtration und spektroskopischen Analyse des Filtrats) sowie eine sensorische Beurteilung durch 4 Sachverständige gemäß der Kriterien von Bsp.3. Ergebnisse:

Versuchsreihe I: Die mittels einer Wirbelströmungstechnik separierbaren dekompaktierten cellulose-basierten Fasern waren praktisch ohne sicht- oder messbare Reste von Schalenmaterialien oder Aggregaten von anderen Bestandteilen des Ausgangsmaterials, wie z.B. von Stärkekomplexen. Ferner konnte eine Selektion von großvolumigen Fasern erreicht werden, die ein engeres Durchmesserspektrum bei einer Faserlänge, die zu 98% < 1.000μm war, aufwiesen und das geringer bzw. enger war als das welches im Ausgangmaterial vorlag.

Versuchsreihe II: Die Faseranalyse zeigte, dass es durch die Behandlung zu einer Zerkleinerung von Komplexen aus cellulose-basierten Fasern und einer Dekompaktierung gekommen war, die ein deutlich nach links verschobenes Durchmesserspektrum aufwiesen, Partikel mit einem Durchmesser von > 2.000μm lagen nicht oder in einem Anteil von <0,1% vor.

Versuchsreihe III: Aus den erhaltenen Massen dekompaktierter cellulose-basierter Fasern sowohl der Versuchsreihe T60 als auch T120 ließen sich keine Farbstoffe durch wässrigen Lösungen mehr herauslösen.

Die in den Versuchsreihen I. bis III. erhaltenen dekompaktierten cellulose-basierten Fasern hatten einen Gehalt an Proteinen und/oder löslichen Kohlenhydraten von < 0,1 Gew%.

Bei allen erhaltenen cellulose-basierten Fasermassen wurde bei der sensorischen Prüfung eine Geruchs- und Geschmacksneutralität festgestellt. Ferner wurde für alle erhaltenen Präparate gefunden, dass diese sehr weich bei einem Kauvorgang sind, ein angenehmes Mundgefühl vermitteln und dass es beim Schlucken der Präparate zu keine Missempfindungen kommt.

**Beispiel 13**

Untersuchung zur industriellen Herstellung von Backwaren aus/mit cellulose-basierten Fasern.

Es erfolgte die großtechnische Herstellung der folgenden Zubereitungen: A) Chips, B) Biskuit und C) Lebkuchen. Herstellung der Rohmassen:

A) 100 kg dekompaktierte cellulose-basierte Fasern aus Soja-Schrot (Herstellung gemäß Beispiel 11 (mit einer Arginin-Lösung)) mit einem Feuchtegehalt von 70 Gew% werden mit 3 kg einer Würzmischung mit einer automatischen Knet-/Rührmaschine über 2 Stunden zu einem homogenen Teig gemischt. Die Teigmasse wird mittels einer Schneckenpumpe in eine Befüllungsvorrichtung gepumpt, mit der ein definiertes Volumen der Masse in die Formen einer Vorrichtung gegeben wird. Nach Befüllung wird die Form durch ein Gegenstück dampfdurchlässig verschlossen, sodass die Teigmassen zu einer 3 mm dünnen Scheiben (Durchmesser 5 cm) in der hierdurch allseits umschlossenen Form umgeformt werden. Anschließend Erhitzen der gesamten Formplatte auf 140 °C für 5 Minuten. Die bei der Öffnung der Formen herausfallenden Chips, werden mit einem Band in einen Ofen befördert, in dem eine Erhitzung auf 180°C für 2 Minuten erfolgt. Die ausgekühlten Chips werden sodann in einer wasserfreien Stickstoffatmosphäre luft- und dampfdicht verpackt. Es werden 31 kg Chips erhalten. Eine visuelle, taktile und sensorische Prüfung erfolgt nach einer Lagerdauer von 2, 6 und 12 Monaten. Das Aussehen blieb unverändert, ebenso wie das Bruchverhalten und die Oberflächenbeschaffenheit. Die Konsistenz wurde bei der Verkostung zu allen Zeitpunkten als cross bewertet und ein angenehmes Mundgefühl angegeben. Es kam im zeitlichen Verlauf der Lagerung zu keiner Veränderung der geschmacklichen Eigenschaften.

B) 50kg dekompaktierte cellulose-basierte Maisfasern (Herstellung gemäß Beispiel 11 V2 b)) mit einer Restfeuchte von < 20Gew% werden unter eine Schaummasse, die aus 40kg Eiklar und 10kg Eigelb sowie 35kg Puderzucker und Aromen, die miteinander aufgeschlagen worden waren, zusammen mit 200g Natriumhydrogencarbonat untergehoben. Der fließfähige Teig wurde in Backformen mit einem Durchmesser von 30 cm, 2 cm hoch gefüllt und bei 180°C über 20 Minuten gebacken. Nach Auskühlung wurden die Biskuit-Böden herausgelöst und in einer Stickstoffatmosphäre luft- und dampfdicht verpackt. Eine visuelle, taktile und sensorische Prüfung erfolgt nach einer Lagerdauer von 2, 6 und 12 Monaten. Das Aussehen blieb unverändert, ebenso wie die Eindrückbeständigkeit und die Oberflächenbeschaffenheit. Die Konsistenz wurde bei der Verkostung zu allen Zeitpunkten als leicht cross bewertet und das Mundgefühl als weich und abgerundet angegeben. Es kam im Verlauf der Lagerung zu keiner Veränderung der geschmacklichen Eigenschaften.

C) 50 kg dekompaktierte cellulose-basierte Fasern von Kidney-Bohnen (hergestellt gemäß Beispiel 12 V1) mit einer Restfeuchte von < 25 Gew% wurden mit 50 kg geriebenen Mandeln, 10 kg gehacktem Zitronat und Orangeat sowie 500g Natriumbikarbonat und einer Würzmischung gemischt. Das Gemisch wurde unter 60kg einer Masse, die aus Eiern und Puderzucker hergestellt worden war, geknetet. Der Teig wurde nach einer Ruhezeit von 2 Stunden portioniert und auf Backblechen flächig auf eine Höhe von 1cm ausgerollt und bei 180°C über 20 Minuten gebacken. Nach Auskühlung wurde das Backgut in Stücke zerteilt und luft- und dampfdicht verpackt. Eine visuelle, taktile und sensorische Prüfung erfolgt nach einer Lagerdauer von 2, 6 und 12 Monaten. Das Aussehen blieb unverändert, ebenso wie die Druckstabilität und die Oberflächenbeschaffenheit. Die Konsistenz wurde bei der Verkostung zu allen

Zeitpunkten als zart-cross bewertet und ein volles Mundgefühl angegeben. Es kam im Verlauf der Lagerung zu keiner Veränderung des Aussehens, der Druckstabilität oder der geschmacklichen Eigenschaften.

**Beispiel 14**

50kg Soja-Extraktionsschrot wurden in einem Rührwerk mit 70l einer 0,1 molaren Argininlösung mittels einer Sprühvorrichtung getränkt und nach Durchtränkung für 1 Stunde ruhen lassen. Anschließend wurden 70l Wasser zugemischt und anschließend die Masse mittels einer Filterpresse auf einen Restfeuchtegehalt von 60 Gew% entwässert. Der Filterrückstand wurde in 70l einer 0,5 Gew%igen Natriumsulfit-Lösung suspendiert und das Gemisch in einem Autoklaven für 10 Minuten auf einer Temperatur von 128° bei einem Druck von 1,2 bar gehalten. Anschließend Entwässern des Gemisches mittels einer Siebpresse. Der Siebrückstand wurde in 200l einer Prozesswasserphase eingeleitet und mittels eines Schermischers (Silverson L5M-A mit einem feinen Dispergierwerkzeug/ 10.000rpm) für 10 Minuten dispergiert. Anschließend zentrifugale Siebfiltration der Suspension. Der Siebrückstand wird als geruch- und geschmacklose cremige Masse gewonnen und mit einer Nanoemulsionslösung funktionalisiert und anschließend auf einem Bandtrockner bis zur Trockne getrocknet. Die getrockneten cellulose-basierten Fasern, die als dünne Plättchen vorlagen, ließen sich in Wasser innerhalb von 3 Minuten vollständig hydratisieren und waren sensorisch weich und cremig. Die von allen Schritten vereinigten Filtratphasen wurden mit einer 20Gew%igen Zitronensäurelösung versetzt, die unter geringer Agitation verteilt wurde. Nach 6 Stunden wurde die Sedimentphase über einen Bodenablauf des Behältnisses abgelassen und auf einen Bandfilter mit einem Siebmaß von 80μm geleitet und die Aggregatmasse hierauf unter kontinuierlichem Bandvorschub entwässert. Es wurde eine cremige Proteinmasse erhalten, die sich vollständig in Wasser lösen ließ und die entstandene Lösung vollständig ein 10μm Sieb ohne Rückstand passierte. Die Proteinmasse war geruchs- und geschmacklos.

## Patentansprüche

**1.** Verfahren zur Desintegration und Aufschluss von pflanzlichem Ausgangsmaterial mit den Verfahrensschritten

a) Bereitstellung eines pflanzlichen Ausgangsmaterials,
b) Versetzen des Ausgangsmaterials mit einer wässrigen Desintegrationslösung umfassend eine wässrige Lösung mit einem pH im Bereich von 6,5 bis 13 und belassen in der Desintegrationslösung bis zum Erreichen einer Desintegration,
c) Verteilung der Konstituenten des desintegrierten Ausgangsmaterials in einem Verteilungsvolumen, unter Erhalt von soliden Konstituenten und gelösten Konstituenten des pflanzlichen Ausgangsmaterials,
d) Separation solider Konstituenten von gelösten Konstituenten des pflanzlichen Ausgangsmaterials,
e) Gewinnung der separierten Konstituenten des pflanzlichen Ausgangsmaterials als Wertstofffraktionen durch,
e1) Fraktionierung von cellulose-basierten Fasern von lignin-reichen Schalen der soliden Konstituenten des pflanzlichen Ausgangsmaterials mittels eines Wirbelstromverfahrens und Erhalt gereinigter Fraktionen cellulose-basierter Fasern sowie lignin-reicher Schalen,
e2) Aggregation/Komplexierung gelöster Proteine der gelösten Konstituenten des pflanzlichen Ausgangsmaterials durch Komplexierungsmittel und Separation der sedimentierten aggregierten/komplexierten kondensierten Proteine, unter Erhalt einer aggregierten/komplexierten Proteinmasse.

**2.** Verfahren gemäß Anspruch 1, bei dem der Verfahrensschritt b) zusammen mit einer thermischen und/oder mechanischen Desintegration erfolgt oder eine thermische und/oder mechanische Desintegration in einem Verfahrensschritt b1) im Anschluss an den Verfahrensschritt b) erfolgt.

**3.** Verfahren gemäß Anspruch 1 oder 2, bei dem die Desintegrationslösung eine oder mehrere Aminosäure(n), Peptid(e), Sulfite vorzugsweise Natriumsulfit oder Natrium-Bisulfit, Harnstoff und/oder Carbonate vorzugsweise Natriumcarbonat oder Natriumhydrogencarbonat enthält.

**4.** Verfahren gemäß einem der Ansprüche 1 bis 3, bei dem eine Dekompatierung von cellulose-basierten Fasern und/oder lignin-reichen Schalen hergestellt wird.

**5.** Verfahren gemäß einem der Ansprüche 1 bis 4, bei dem durch Einlegen des pflanzlichen Ausgangsmaterials in eine Lösung, in der lösliche Verbindungen zur Desintegration gelöst vorliegen bei einer Temperatur von < 75°C eine produktschonende Desintegration/Perforation oder Ablösung von Hüllmaterial pflanzlicher Samen, Körner oder Kerne erfolgt und/ oder zur Separation von pflanzlichem Hüllmaterial unter Beibehaltung der strukturellen Integrität

der abgetrennten Hüllmaterialien und/oder der Konstituenten des/der pflanzlicher Samen, Körner oder Kerne.

6. Verfahren gemäß einem der Ansprüche 1 bis 5 zur Herstellung von Faserprodukten, aus pflanzlichen Hüllmaterialien und/oder zur Herstellung einer pflanzlichen Hüllmaterialpräparation.

7. Verfahren gemäß einem der Ansprüche 1 bis 6, bei dem neben einer Desintegration und/oder Separation und/oder Auflösung von pflanzlichen Hüllmaterialien eine Abtrennung eines Keimlings/einer Sprosse erfolgt.

8. Verfahren gemäß einem der Ansprüche 1 bis 7, bei dem es zur Verlangsamung/Unterbindung einer Reifung pflanzlicher Samen und/oder Körner kommt.

9. Verfahren gemäß einem der Ansprüche 1 bis 8, wobei es sich bei dem pflanzlichen Aufgangsmaterial um Hüllmaterial pflanzlicher Samen, Körner oder Kerne handelt.

10. Verfahren gemäß einem der Ansprüche 1 bis 9, zur Gewinnung von lignin-basierten Schalenanteilen und cellulose-basierten Fasern und/oder zur Gewinnung eines proteinhaltigen Sediments, bestehend aus aggregierten/komplexierten und kondensierten Proteinen.

11. Lignin-reiche Schalenteile und/oder cellulose-basierte Fasern, mit einer Öl-und/oder Fettbindungskapazität von > 200 Gew%, erhältlich nach einem Verfahren gemäß einem der Ansprüche 1 - 10.

## Claims

1. Method for the disintegration and unlocking of plant starting material with the process steps

   a) providing a plant-based starting material,
   b) adding a disintegration solution comprising an aqueous solution with a pH in the range of 6.5 to 13 to the starting material and leaving it in the disintegration solution until disintegration,
   c) dispensing of the constituents of the disintegrated starting material in a dispensing volume to obtain solid constituents and dissolved constituents of the plant-based starting material,
   d) separation of solid constituents from dissolved constituents of the plant-based starting material,
   e) obtaining the separated constituents of the plant-based starting material as materials for further utilization by,
   e1) fractionating of cellulose-based fibers from lignin-rich shells of the solid constituents of the plant-based starting material by means of an cyclone separation technique to obtain purified fractions of cellulose-based fibers and lignin-rich shells,
   e2) aggregation / complexation of dissolved proteins of the dissolved constituents of the plant starting material by complexing agents and separation of the sedimented aggregated / complexed condensed proteins to obtain an aggregated / complexed protein mass.

2. The method according to claim 1, wherein the process step b) takes place together with a thermal and / or mechanical disintegration or a thermal and / or mechanical disintegration in a process step b1) takes place after the process step b).

3. The method according to claim 1 or 2, wherein the disintegration solution contains amino acids and / or peptides, sulfites, preferably sodium sulfite or sodium bisulfite, urea, and/or carbonates, preferably sodium carbonate or sodium hydrogen carbonate.

4. The method according to any one of claims 1 to 3, wherein a decompaction of cellulose-based fibers and / or lignin-rich shells is prepared.

5. The method according to any one of claims 1 to 4, in which the plant-based starting material is placed in a solution in which soluble compounds are present in a dissolved state for disintegration at a temperature of < 75°C, resulting in a gentle product-sparing disintegration / perforation or detachment of cladding material of plant seeds, grains or kernels, and/or for separating plant-based casing material while maintaining the structural integrity of the separated casing materials and / or the constituents of the seed(s), grains or kernels.

6. The method according to any one of claims 1 to 5 for producing of fiber products, from plant-based-cladding materials.

7. The method according to any one of claims 1 to 6, wherein in addition to a disintegration and / or separation and / or dissolution of plant cladding materials, a separation of a seedling / sprout takes place.

8. The method according to any one of claims 1 to 7, wherein it comes to slowing down / inhibiting of a ripening of plant-based seeds and / or grains.

9. The method according to any one of claims 1 to 8, wherein the plant-based starting material is cladding material of plant seeds, grains or kernels.

10. The method according to any one of claims 1 to 9, for the recovery of lignin-based cladding fractions and cellulose-based fibers and/or for obtaining a protein-containing sediment consisting of aggregated / complexed and condensed proteins.

11. Lignin-rich cladding fractions and / or cellulose-based fibers, having an oil- and / or fat-binding capacity of > 200% by weight, obtainable by a process according to any one of claims 1-10.

**Revendications**

1. Méthode de désintégration et de libération de matières de départ végétales comprenant les étapes suivantes :

   a) obtention d'une matière de départ végétale ;
   b) ajout d'une solution de désintégration composée d'une solution aqueuse dont le pH est compris entre 6,5 et 13 à la matière de départ et conservation de celle-ci dans la solution jusqu'à désintégration ;
   c) répartition des composants de la matière de départ désintégrée dans un volume de répartition afin d'obtenir des composants solides et des composants dissous de la matière de départ végétale ;
   d) séparation des composants solides des composants dissous de la matière de départ végétale ;
   e) récupération des composants séparés de la matière de départ végétale sous forme de matériaux destinés à une utilisation ultérieure par
   e1) fractionnement de fibres cellulosiques d'enveloppes riches en lignine des composants solides de la matière de départ végétale au moyen d'une technique de séparation par cyclone afin d'obtenir des fractions purifiées de fibres cellulosiques et d'enveloppes riches en lignine ;
   e2) agrégation/complexation des protéines dissoutes des composants dissous de la matière de départ végétale au moyen d'agents de complexation et de séparation des protéines agrégées sédimentées/condensées complexées, de façon à obtenir une masse de protéines agrégées/complexées.

2. La méthode conforme à la revendication 1, où une désintégration thermique et/ou mécanique est effectuée au cours de l'étape b) ou une désintégration thermique et/ou mécanique est effectuée après l'étape b) dans une nouvelle étape b1).

3. La méthode conforme à la revendication 1 ou 2, où la solution de désintégration contient des acides aminés et/ou des peptides, des sulfites, de préférence du sulfite de sodium ou du bisulfite de sodium, de l'urée et/ou des carbonates, de préférence du carbonate de sodium ou de l'hydrogénocarbonate de sodium.

4. La méthode conforme à l'une des revendications 1 à 3, où un décompactage de fibres cellulosiques et/ou d'enveloppes riches en lignine est préparé.

5. La méthode conforme à l'une des revendications 1 à 4, où la matière de départ végétale est placée dans une solution dans laquelle des composés solubles sont présents à l'état dissous, afin d'obtenir une désintégration à une température inférieure à 75 °C, entraînant une désintégration/perforation ou un détachement doux de l'enveloppe protectrice des graines, grains ou noyaux sans altération du produit et/ou une séparation de la gaine externe végétale tout en conservant l'intégrité structurelle des gaines externes séparées et/ou des composants de la ou des graines, des grains ou des noyaux.

6. La méthode conforme à l'une des revendications 1 à 5 utilisée pour la production de produits fibreux à partir d'enveloppes protectrices végétales.

7. La méthode conforme à l'une des revendications 1 à 6, où, en plus d'une désintégration et/ou séparation et/ou

dissolution d'enveloppes protectrices végétales, une séparation de semis/pousses est effectuée.

**8.** La méthode conforme à l'une des revendications 1 à 7, où le but est de ralentir/inhiber la maturation des graines et/ou grains végétaux.

**9.** La méthode conforme à l'une des revendications 1 à 8, où la matière de départ végétale est une enveloppe protectrice de graines, de grains ou de noyaux végétaux.

**10.** La méthode conforme à l'une des revendications 1 à 9 utilisée pour la récupération de fractions d'enveloppes protectrices riches en lignine et de fibres cellulosiques et/ou pour l'obtention d'un sédiment protéique constitué de protéines agrégées/condensées et complexées.

**11.** Fractions d'enveloppes protectrices riches en lignine et/ou fibres cellulosiques, ayant une capacité de liaison aux corps gras supérieure à 200 % en poids, pouvant être obtenues par un procédé conforme à l'une des revendications 1 à 10.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 02067698 A2
- US 4919952 A
- WO 2006111604 A1